(19) Europäisches Patentamt / European Patent Office / Office européen des brevets

(11) **EP 3 539 997 B1**

(12) **EUROPÄISCHE PATENTSCHRIFT**

(45) Veröffentlichungstag und Bekanntmachung des Hinweises auf die Patenterteilung:
**08.12.2021   Patentblatt 2021/49**

(21) Anmeldenummer: **19161803.2**

(22) Anmeldetag: **11.03.2019**

(51) Int Cl.:
*C08G 18/69* (2006.01)        *C08G 18/75* (2006.01)
*C08G 18/12* (2006.01)        *C08G 18/22* (2006.01)
*C08G 18/32* (2006.01)        *C09J 175/14* (2006.01)

(54) **THERMISCH VULKANISIERBARES, WÄHREND DER AUFHEIZ- UND HÄRTUNGSPHASE SCHERFESTES KLEBEBAND**

THERMALLY VULCANIZABLE ADHESIVE TAPE WHICH IS SHEAR-RESISTANT DURING THE HEATING AND CURING PHASES

BANDE ADHÉSIF VULCANISABLE THERMIQUEMENT, RÉSISTANTE AU CISAILLEMENT PENDANT LA PHASE DE CHAUFFAGE ET DE DURCISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2018   DE 102018203894**

(43) Veröffentlichungstag der Anmeldung:
**18.09.2019   Patentblatt 2019/38**

(73) Patentinhaber: **tesa SE**
**22848 Norderstedt (DE)**

(72) Erfinder:
• **Schümann, Uwe**
  **25421 Pinneberg (DE)**
• **Dietze, Sebastian**
  **22529 Hamburg (DE)**
• **Böhm, Christine**
  **45768 Marl (DE)**
• **Papenbroock, Marten**
  **22417 Hamburg (DE)**

(74) Vertreter: **tesa SE**
**Hugo-Kirchberg-Straße 1**
**22848 Norderstedt (DE)**

(56) Entgegenhaltungen:
EP-A1- 0 009 613     EP-A2- 1 279 687
DE-A1- 1 645 358     US-A1- 2018 208 814

**EP 3 539 997 B1**

## Beschreibung

Die vorliegende Erfindung betrifft einen chemisch vorvernetzten, thermisch vulkanisierbaren Haftklebstoff, ein Verfahren zu dessen Herstellung, ein Klebeband enthaltend diesen Haftklebstoff sowie ein Verfahren zur Herstellung des Klebebandes. Die Erfindung kann als Klebeband oder Dichtungsband oder als Teil eines Klebe- oder Dichtungsbandes in Lackierprozessen, in denen Prozesstemperaturen zwischen 130 °C und 230 °C zur Verfügung stehen, verwendet werden. In diesem Temperaturbereich springt die Vulkanisation an und der Haftlebstoff härtet aus. Während der Aufheizphase bleibt der Haftklebstoff haftklebrig, verflüssigt sich nicht und erweicht nur geringfügig. Somit ist er in dieser Phase, in der die Vulkanisation noch nicht angesprungen ist und die Härtung noch nicht eingesetzt hat, zumindest unter geringer bis mittlerer Last scherfest, kann Kräfte übertragen und damit eine Halteleistung vollbringen. Eine Vorfixierung der zu verklebenden Bauteile kann somit in vielen Fällen entfallen.

Thermisch vulkanisierbare Haftklebebänder sind bekannt. Die EP 877 069 A beschreibt eine haftklebrige Folie auf Basis eines thermisch vulkanisierbaren, polyveresterten Kautschuks. Nachteilig daran ist ein bestimmter Aspekt des Herstellprozesses: Die Polyveresterungsreaktion wird mit flüssigen Ausgangsstoffen gestartet. Das Polymer wird erst während der Beschichtung durch allmähliches Voranschreiten einer Vernetzungsreaktion gebildet. Der Nachteil besteht darin, dass die Beschichtungsgeschwindigkeit limitiert ist, denn im noch flüssigen oder pastösen Zustand kann die auf einen Trennliner oder auf ein Trägermaterial beschichtete Reaktionsmischung nicht oder zumindest nicht mit konstanter Schichtdicke aufgewickelt werden. Mit konstanter Schichtdicke können nur feste Polymerfilme aufgewickelt werden. Der Reaktionsfortschritt bis zur Verfestigung der Reaktionsmischung muss also abgewartet werden, bevor das Reaktionsprodukt aufgewickelt werden kann. Entsprechend langsam muss die Beschichtungsgeschwindigkeit eingestellt werden.

Zudem haben polyveresterte Kautschuke den potentiellen Nachteil einer leichten hydrolytischen Spaltbarkeit.

Der in der DE 38 30 895 A beschriebene Kautschuk aus mindestens zwei Ausgangspolymeren, die über Estergruppen chemisch miteinander verknüpft sind und von denen zumindest eines olefinisch ungesättigt ist, hat als mögliches Basiselastomer eines thermisch vulkanisierbaren Haftklebebandes prinzipiell ähnliche Nachteile. Das Gleiche gilt für die in der EP 0 356 715 A beschriebene flüssige oder streichfähige, vulanisierbare Kautschukmischung auf Basis polyveresterter Polymere, von denen zumindest eines olefinisch ungesättigt ist.

In der JP 59230076 A wird ein Polybutadien-Polyurethan-Haftklebstoff beschrieben. Ein Polybutadien-Polyol mit einer Funktionalität von 2,2 bis 2,4 wird darin mit einem Polyisocyanat in einem NCO/OH-Verhältnis von 0,2 bis 0,65 umgesetzt, um ein Polyol mit einer Molmasse von 5000 bis 30000 und einer Funktionalität von 2,0 bis 2,4 zu bilden. Dieses wird anschließend mit einem Polyisocyanat im NCO/OH-Verhältnis von 0,6 bis 1,0 gemischt und so zum gewünschten Produkt umgesetzt. Ein Hinweis auf eine mögliche Verwendung als Basispolymer für einen thermisch vulkanisierbaren Haftklebstoff, der lösemittelfrei in einem Compoundier- und Beschichtungsprozess hergestellt werden soll, fehlt. Dieser Haftklebstoff hätte im Hinblick auf eine solche Verwendung den Nachteil, entweder von vornherein vernetzt und somit füreinen Beschichtungsprozess ungeeignet zu sein oderfürden Fall, dass innerhalb der in der Schrift angegebenen Grenzen in einem sehr niedrigen NCO/OH-Verhältnis gearbeitet wird und somit keine Vernetzung eintritt, bei Raumtemperatur flüssig und somit ebenfalls als Basiselastomer für einen Beschichtungsprozess ungeeignet zu sein.

In der US 3743617 A werden Polyurethan-Haftklebstoffe auf Basis des Reaktionsproduktes von Isocyanat-reaktive Gruppen tragenden Dien-Polymeren mit Isocyanat-Komponenten in Gegenwart von Tackifier-Harzen offenbart. Nachteilig ist hier die zwingend notwendige Anwesenheit von Tackifier-Harzen, die sich störend auf die Haftungseigenschaften eines daraus hergestellten Klebebandes nach der Vulkanisation auswirken könnten. Zudem schweigt die Schrift im Hinblick auf die Frage, ob und wie auf dieser Basis ein haftklebriges Elastomer mit einem geeignetem Schmelz- beziehungsweise Erweichungsbereich für die Verwendung in einem lösemittelfreien Compoundier- und Beschichtungsprozess hergestellt werden kann.

In der US 3515773 A wird zur Herstellung von Haftklebstoffen die Umsetzung von hydroxylierten Polybutadienen mit aromatischen Isocyanaten beziehungsweise mit Vorprodukten auf Basis von aromatischen Isocyanaten vorgeschlagen und gleichzeitig herausgestellt, dass Tackiness ohne die Verwendung von Tackifier-Harzen und Weichmachern erzielt werden kann. Nachteilig ist die Verwendung von aromatischen Isocyanaten aufgrund der möglichen besonderen Gesundheitsgefahren, die von dieser Substanzklasse ausgehen. Auch diese Schrift schweigt im Hinblick auf die Frage, ob und wie auf dieser Basis ein haftklebriges Elastomer mit einem geeignetem Schmelz- beziehungsweise Erweichungsbereich für die Verwendung in einem lösemittelfreien Compoundier- und Beschichtungsprozess hergestellt werden kann. Ein Hinweis auf eine mögliche Verwendung als Basispolymer für einen thermisch vulkanisierbaren Haftklebstoff fehlt ebenfalls.

In der WO 1998030648 A werden thermoplastische Polyurethan-Haftklebstoffe auf Basis von hydrierten Polydien-Diolen und -monoolen beschrieben. Diese haben im Hinblick auf das Ziel, ein haftklebriges, schmelzbares Basiselastomer für ein thermisch vulkanisierbares Klebeband zu finden, den Nachteil, thermisch nicht vulkanisierbar zu sein.

In der EP 2119735 Awird ein Hotmelt-Verfahren zur Herstellung eines chemisch vernetzten Polyurethafilms durch den Start der Umsetzung eines hydroxyl-funktionalisierten Polyurethan-Hotmelt-Prepolymers mit einem Polyisocyanat in einem kontinuierlich arbeitenden Mischaggregat und die anschließende Beschichtung der aus dem Mischaggregat austretenden, reagierenden Schmelze beschrieben. In der EP 2325220 A1 (tesa) wird ein Haftklebstoff auf Basis von Polyurethan offenbart, der das chemische Umsetzngsprodukt eines hydroxyl-funktionalisierten Polyurethan-Hotnelt-Prepolymers mit einem Diisocyanat/ Polyisocyanat-Gemisch umfasst. Beide Schriften beschränken sich in den Beispielen auf Polyether-Polyol basierte Polyurethane. Hinweise auf mögliche Eignungen für thermisch vulkanisierbare Haftklbstoffe fehlen.

Die DE 16 45 358 A1 beschreibt ein Verfahren zur Herstellung eines festen Urethan-Elastomers, bei dem man die Reste eines Polyhydroxy-Zwischenpolymerisats mit den Resten eines Polyisocyanats durch Urethanketten verbindet, wobei das Zwischenpolymerisat durchschnittlich mindestens 2,1 vorherrschend primäre, endständige allylische Hydroxylgruppen pro Molekül besitzt und ein Additionspolymerisat ist, das 0 bis 75 Gew.-% der Reste eines α-olefinischen Monomeren mit 2 bis 12 Kohlenstoffatomen und etwa 25 bis 100 % der Reste eines 1,3-Dienkohlenwasserstoffes mit 4 bis etwa 12 Kohlenstoffatomen enthält und bei 30 °C eine Viskosität von 5 bis 20.000 poises und ein durchschnittliches Molekulargewicht von etwa 400 bis 25.000 besitzt.

EP 0 009 613 A1 hat ein Verfahren zur Herstellung von vulkanisierten, Urethangruppen aufweisenden Elastomeren durch Gießen zum Gegenstand, das dadurch gekennzeichnet ist, dass man

1. flüssige, funktionelle Gruppen aufweisende Dien-Polymerisate mit
2. mindestens zwei Hydroxylgruppen aufweisenden Verbindungen vom Molekulargewicht 400 bis 10.000,
3. Polyisocyanaten,
4. mindestens zwei aktive Wasserstoffatome aufweisenden Vernetzern vom Molekulargewicht 32 bis 400,
5. den für die Vulkanisation üblichen Vulkanisations- und Vernetzungsmitteln, sowie gegebenenfalls
6. verstärkenden Füllstoffen

vermischt, das Gemisch in eine Form gießt, dort reagieren lässt und das Formteil anschließend bei Temperaturen über 120 °C vulkanisiert.

Aufgabe der Erfindung ist es, einen Haftklebstoff, der thermisch innerhalb eines Temperaturbereiches von 130 °C bis 230 °C vulkanisierbar und während der Aufheizphase zumindest unter geringer bis mittlerer Last scherfest ist, sowie ein Klebeband mit einem solchen Haftklebstoff bereitzustellen. Der thermisch vulkanisierbare Haftklebstoff beziehungsweise das diesen Haftklebstoff enthaltende Klebeband sollen somit während der Aufheizphase, in der die Vulkanisation noch nicht angesprungen ist und in der bei bekannten heißhärtbaren Klebstoffen üblicherweise eine Verflüssigung oder zumindest eine starke Erweichung einsetzt, eine Halteleistung vollbringen können, so dass eine Vorfixierung der zu verklebenden Bauteile entfallen kann. Bei der Anwendung in einer Klebefuge sollte sich der Haftklebstoff — insbesondere in Klebebandform — während der thermischen Vulkanisation, also starker Erwärmung, nicht derart stark verflüssigen, dass er aus der Klebefuge wesentlich austritt, etwa herausläuft oder ausgequetscht wird.

Gelöst wird diese Aufgabe durch einen chemisch vorvernetzten, thermisch vulkanisierbaren Haftklebstoff, insbesondere ein einen chemisch vorvernetzten, thermisch vulkanisierbaren Haftklebstoff enthaltendes Klebeband, wobei der Haftklebstoff zumindest ein chemisch vorvernetztes, haftklebriges Polybutadien-Polyurethan sowie gemahlenen Schwefel umfasst und das chemisch vorvernetzte, haftklebrige Polybutadien-Polyurethan das chemische Umsetzungsprodukt aus zumindest folgenden Ausgangsstoffen ist oder umfasst:

a) zumindest ein schmelzbares, haftklebriges, hydroxyl-funktionalisiertes Polybutadien-Polyurethan-Prepolymer und
b) zumindest ein aliphatisches oder alicyclisches Polyisocyanat mit einer Isocyanat-Funktionalität von drei oder größer drei.

Die Erfindung bietet den Vorteil, dass an einem ersten Ort ein unvernetztes Polybutadien-Polyurethan — im Rahmen dieser Schrift auch als Polybutadien-Polyurethan-Prepolymer bezeichnet — hergestellt werden kann.

Unabhängig vom Produktionsort des Prepolymers kann dieses an einem zweiten Ort aufgeschmolzen und mit Stoffen und/oder Additiven und insbesondere dem Schwefel abgemischt werden.

Unabhängig vom zweiten Ort kann dieses mit Schwefel versetzte Prepolymer an einem dritten Ort mit Di- und/oder Polyisocyanaten versetzt, zur Schicht oder anderweitig ausgeformt und vorvernetzt werden, so dass das vorvernetzte Produkt — insbesondere in Schicht eines Klebefilms — resultiert.

Dieses vorvernetzte Produkt kann dann zum Applikationsort verbracht, appliziert und thermisch ausgehärtet werden.

Somit können die eizelnen Produktionsorte völlig unabhängig voneinander gewählt werden. Selbstverständllich können einzelne oder alle der vorgenannten Orte auch identisch gewählt werden, etwa beispeilsweise der zweite und der dritte Ort.

Aufgrund der Vorvernetzung ist der erfindungsgemäße thermisch vulkaniserbare Haftklebstoff zudem auch bei erhöhten Temperaturen soweit formstabil, dass er bei der thermischen Vulkanisation nicht aus der Klebefuge herausläuft oder herausquetscht.

Die vorliegende Erfindung betrifft insbesondere einen bereits vor der thermischen Vulkanisation chemisch vorvernetzten, thermisch vulkanisierbaren Haftklebstoff, der vor der chemischen Vorvernetzung in einem Temperaturbereich zwischen ungefähr 40 °C und 100 °C zunächst als Schmelze in einem Compoundier- und Extrusionsprozess verarbeitet werden kann und thermisch in einem Temperaturbereich zwischen 130 °C und 230 °C vulkanisierbar und somit zu hoher Festigkeit aushärtbar ist. Beispielsweise sind im Zugscherversuch nach DIN EN 1465 Zugscherfestigkeiten bis mindestens 30 N/mm$^2$ erzielbar. Die Zugscherfestigkeit kann dabei über den Anteil an Schwefel im Verhältnis zum Polybutadien-Polyurethan gesteuert werden. Die mit der thermischen Vulkanisation erzielte Aushärtung beinhaltet eine zweite chemische Vernetzung zusätzlich zu der bereits vor der thermischen Vulkanisation vorhandenen chemischen Vorvernetzung. Die vor der thermischen Vulkanisation vorhandene chemische Vorvernetzung (erste chemische Vernetzung) wird durch chemische Umsetzung eines schmelzbaren, haftklebrigen, hydroxyl-funktionalisierten Polybutadien-Polyurethan-Prepolymers mit einem optionalen aliphatischen oder alicyclischen Diisocyanat und einem erfindungsgemäßen aliphatischen oder alicyclischen Polyisocyanat mit einer Isocyanat-Funktionalität von drei oder größer drei erzielt (diese chemische Umsetzung wird im Rahmen dieser Schriuft als "Vorvernetzungsreaktion" bezeichnet).

Polybutadien-Polyurethane sind die Umsetzungsprodukte von Polybutadien-Polyolen und/oder deren Derivaten, gegebenenfalls in Gegenwart weiterer Polyole und/oder deren Derivaten, mit Diisocyanaten und/oder Polyisocyanaten mit einer Isocyanat-Funktionalität von drei oder größer drei.

Erfindungsgemäß werden in dieser Schrift unter Polybutadien-Polyurethanen nur die Umsetzungsprodukte von Polybutadien-Polyolen und/oder deren Derivaten, optional in Gegenwart weiterer Polyole und/oder deren Derivaten, mit aliphatischen und/oder alicyclischen Polyisocyanaten verstanden.

Die weiteren Polyole bzw. deren Derivate können insbesondere bevorzugt monomere und/oder oligomere Verbindungen mit einer Hydroxyl-Funktionalität von zwei und einer Molmasse von kleiner oder gleich 300 g/mol sein. Solche Diole werden im Rahmen dieser Schrift auch als "Kettenverlängerer" bezeichnet.

Als Polyole werden im Rahmen dieser Schrift mehrwertige Alkohole mit zwei, drei oder mehr als drei Hydroxygruppen bezeichnet. Als Polyisocyanate werden entsprechende Isocyanate mit einer Isocyanat-Funktionalität von zwei oder höher bezeichnet.

Als höherwertige Polyole werden im Rahmen dieser Schrift Polyole mit einer Hydroxyl-Funktionalität von mehr als zwei bezeichnet, als höherwertige Polyisocyanate entsprechend Isocyanate mit einer Isocyanat-Funktionalität von mehr als zwei bezeichnet

Unter Polybutadien-Polyurethan-Prepolymeren im Sinne der vorliegenden Schrift werden die nicht vernetzten, schmelzbaren Umsetzungsprodukte verstanden. Die Prepolymere werden erhalten, indem die Mengenverhältnisse der Reaktionspartner derart gewählt sind, dass Hydroxylgruppen im Überschuss gegenüber den Isocyanatgruppen vorliegen. Die resultierenden Makromoleküle weisen demgemäß bevorzugt im Schnitt immer zumindest zwei Hydroxylfunktionalitäten auf.

Mit chemischer Vorvernetzung im Sinne der vorliegenden Schrift ist die chemische Vernetzung von Polymeren mittels di- oder mehrfachfunktioneller Vernetzersubstanzen zur Erhöhung der Kohäsion durch Kettenverlängerungsreaktion und zwischenmolekulare Verbrückung von Makromolekülen des Polymers - beziehungsweise Prepolymers - durch chemische Verknüpfung mittels der Vernetzermoleküle gemeint. Chemisch vorvernetze Produkte sind haftklebrig, aber nicht mehr schmelzbar jeweils im Sinne der Definitionen gemäß dieser Schrift, und sind scherfest. Sie weisen vorteilhaft im statischen Schertest bei einer Scherbelastung von 500 g und einer Verklebungsfläche von 13 x 20 mm$^2$ auf Stahl Haltezeiten von größer 10.000, bevorzugt größer 20.000 Minuten auf.

Mit thermischer Vulkanisation ist in dieser Schrift ausschließlich die Schwefelvulkanisation gemeint, also die durch Temperaturerhöhung aktivierte und vollzogene Vernetzung ungesättigter Verbindungen mittels Schwefel.

Als "schmelzbar" im Sinne dieser Schrift gelten solche Substanzen oder Produkte, die mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10,0 rad/s gemessene komplexe Viskosität von mindestens 1.000 Pas, vorzugsweise mindestens 2.000 Pas, idealerweise mindestens 3.000 Pas aufweisen. Bei Temperaturen im Bereich zwischen 40 °C und 100 °C und einer Oszillationsfrequenz von 10,0 rad/s verringert sich die komplexe Viskosität bis auf weniger als 500 Pas, vorzugsweise bis auf weniger als 200 Pas, idealerweise bis auf weniger als 100 Pas. Die Oszillationsfrequenz entspricht der Winkelfrequenz.

Die komplexe Viskosität $\eta^*$ ist folgendermaßen definiert: $\eta^* = G^* / \omega$
($G^*$ = komplexer Schubmodul, $\omega$ = Winkelfrequenz).

Die weiteren Definitionen lauten:

$$G^* = \sqrt{(G')^2 + (G'')^2}$$

(G" = Viskositätsmodul (Verlustmodul), G' = Elastizitätsmodul (Speichermodul)).

$G'' = \tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

$G' = \tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).

$$\omega = 2\pi \cdot f \quad (f = \text{Frequenz}).$$

Haftklebrigkeit ist die Eigenschaft eines Stoffes, bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in Form einer planparallelen Schicht in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: $G' = (\tau/\gamma) * \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G'' = (\tau/\gamma) * \sin(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von $10^0$ bis $10^1$ rad/sec, G' zumindest zum Teil im Bereich von $10^3$ bis $10^7$ Pa liegt und wenn G" ebenfalls zumindest zum Teil in diesem Bereich liegt. Zum Teil heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb dieses Fensters liegt.

Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), Seiten 153 bis 203" beschrieben.

Polybutadien-Polyurethan-Prepolymer

Das erfindungsgemäße, chemisch vorvernetzte Produkt beruht auf einem zunächst unvernetzten Polybutadien-Polyurethan-Prepolymer. Dieses ist haftklebrig, schmelzbar und hydroxylfunktionalisiert. Das Polybutadien-Polyurethan-Prepolymer ist das Umsetzungsprodukt von einem oder mehreren Polybutadien-Polyolen - also einem oder mehreren Polybutadien-Diolen und/oder einem oder mehreren höherwertigen Polybutadien-Polyolen und/oder einem oder mehreren Derivaten von Polybutadien-Diolen und/oder höherwertigen Polybutadien-Polyolen - und optional einem oder mehreren anderen Polyolen und/oder deren Derivaten, insbesondere Kettenverlängerern, mit einem oder mehreren aliphatischen und/oder alicyclischen Polyisocyanaten - also solchen Isocyanaten mit einer Isocyanat-Funktionalistät von zwei und/oder solchen Isocyanaten mit einer Isocyanat-Funktionalität von drei oder größer drei -.

In einer vorteilhaften Ausführungsform ist das schmelzbare, haftklebrige, hydroxyl-funktionalisierte Polybutadien-Polyurethan-Prepolymer das chemische Umsetzungsprodukt zumindest eines Polybutadien-Diols oder Polybutadien-Diol-Derivates, zumindest eines Kettenverlängerers mit einer Hydroxyl-Funktionalität von zwei und einer Molmasse von kleiner oder gleich 300 g/mol und optional zumindest eines Polybutadien-Polyols oder Polybutadien-Polyol-Derivates mit einer zahlengemittelten, mittleren Hydroxyl-Funktionalität zwischen größer 2,0 und kleiner oder gleich 3,0 mit zumindest einem aliphatischen oder alicyclischen Diisocyanat und/oder zumindest einem aliphatischen oder alicyclischen Polyisocyanat mit einer Isocyanat-Funktionalität von drei oder größer drei. Insbesondere werden die Reaktionspartner und deren Mengenverhältnisse so gewählt, dass das schmelzbare, haftklebrige, hydroxyl-funktionalisierte Polybutadien-Polyurethan-Prepolymer bei Raumtemperatur genügend fest und formstabil ist, dass es bei Raumtemperatur auf einem Trennliner oder auf einem Trägermaterial auch dann zu einer Rolle aufgewickelt werden kann, ohne dass es an der Seite herausfließt beziehungsweise durch den Wickeldruck herausgequetscht wird, wenn die chemische Vorvernetzungreaktion noch nicht weit genug vorangeschritten oder abgeschlossen ist.

Handelsübliche Diole oder höherwertige Polyole sind üblicherweise Gemische aus Polyolen mit unterschiedlichen Funktionalitäten. Von dem Begriff "Polybutadien-Diol" werden in dieser Schrift deshalb auch alle hydroxyl-funktionalisierten - insbesondere kommerziell erhältlichen - Gemische aus Polybutadien-Polyolen umfasst, deren zahlengemittelte, mittlere Hydroxyl-Funktionalität zwei oder etwas weniger als zwei, mindestens aber 1,5, vorzugsweise mindestens 1,8 beträgt. Keinesfalls ist die zahlengemittelte, mittlere Hydroxyl-Funktionalität eines Polybutadien-Diols größer als zwei. Entsprechendes gilt für die Polybutadien-Diol-Derivate.

Unter der zahlengemittelten, mittleren Hydroxyl-Funktionalität wird die mittlere Zahl der Hydroxylgruppen pro Molekül eines Polyols verstanden. Sie wird in dieser Schrift auf das zahlengemittelte, mittlere Molekulargewicht des jeweiligen Polyols bezogen und nach der folgenden Formel berechnet:

$$f= M_n[g/mol] \times OHZ\ [mmol\ OH/kg]/10^6$$

f ist die zahlengemittelte, mittlere Hydroxyl-Funktionalität. $M_n$ ist das zahlengemittelte mittlere Molekulargewicht des jeweiligen Polyols in der Einheit [g/mol] und OHZ ist die Hydroxylzahl des Polyols in der Einheit [mmol OH / kg].

Die Hydroxylzahl ist ein Maß für den Gehalt an Hydroxylgruppen in einem Polyol.

Die Bestimmung der Hydroxylzahl erfolgt dabei nach DIN 53240. Nach dieser Methode wird die Hydroxylzahl (OHZ) in der Einheit [mg KOH/g] angegeben. Sie entspricht der Menge KOH in [mg], welche der bei der Acetylierung von 1 g Polyol gebundenen Menge Essigsäure gleichwertig ist. Zum Zwecke der Vereinfachung der Rezepturberechnungen wird die Hydroxylzahl in dieser Schrift in die Einheit [mmol OH/kg] umgerechnet.

Dies erfolgt nach folgender Formel:

$$OHZ\ [mmol\ OH/kg] = OHZ[mg\ KOH/g]\ x1000/56{,}1.$$

56, 1 ist dabei die Molmasse von KOH.

Die Hydroxylgruppen der Polybutadien-Diole und -Polyole können primär oder sekundär an die Polybutadien-Kette gebunden sein. Die Butadien-Einheiten der Polybutadien-Kette können in einer 1,4- cis oder trans-Form oder in einer 1,2-Form mit Vinyl-Gruppen in der Seitenkette oder in einer gemischten Weise miteinander verknüpft sein. Polybutadien-Diole werden durch anionische Polymerisation hergestellt während Polybutadien-Polyole mit einer zahlengemittelten, mittleren Funktionalität zwischen größer 2,0 und kleiner oder gleich 3,0 durch radikalische Polymerisation hergestellt werden. Polybutadien-Diole sind unter dem Handelsnamen Krasol ® kommerziell verfügbar, Polybutadien-Polyole mit einer zahlengemittelten, mittleren Funktionalität zwischen größer 2,0 und kleiner oder gleich 3,0 unter dem Handelsnamen Poly bd ®, beide Sorten von der Firma Cray Valley.

Unter - hydroxyl-funktionalisierten - Polybutadien-Derivaten sind von Polybutadien- Polyolen abgeleitete Stoffe zu verstehen, die mehrere, jeweils eine Kohlenstoff/ Kohlenstoff-Doppelbindung enthaltende C4-Einheiten besitzen und außer den Hydroxylgruppen noch entweder zusätzliche funktionelle Gruppen wie beispielsweise Epoxidgruppen oder zusätzliche Seitenketten wie beispielsweise Vinyl-Gruppen oder andere zusätzliche Strukturelemente tragen.

Kettenverlängerer im Sinne dieser Schrift sind alle Hydroxylgruppen tragenden Verbindungen mit einer Hydroxyl-Funktionalität von zwei und einer Molmasse von kleiner oder gleich 300 g/mol. Sie tragen keine weiteren isocyanat-reaktiven Gruppen. Es sind somit Diole mit einer Molmasse von kleiner oder gleich 300 g/mol. Bekanntlich sind viele Kettenverlängerer, die zur Herstellung von Polyurethanen auf Basis von Polyester- oder Polyether-Polyolen Verwendung finden, nicht mit Polybutadien-Polyolen verträglich. Es kommt zu Entmischungen. Erfindungsgemäß bevorzugt sind die mit Polybutadien-Polyolen verträglichen Kettenverlängerer. Dies sind beispielsweise N,N-Diisopropanolanilin (CAS-Nr. 003077-13-2), 2,2,4-Trimethyl-1,3-pentandiol (CAS-Nr. 144-19-4 ) und 2-Butyl-2-Ethyl-1,3-propandiol (CAS-Nr. 115-84-4). Besonders bevorzugt ist 2-Ethyl-1,3-hexandiol (CAS-Nr. 94-96-2). Die Erkenntnisse über die mit Polybutadien- Polyolen verträglichen Kettenverlängerer gehören zum Stand der Technik. Sie sind beispielsweise publiziert in Herbert Chao, Nan Tian, Cray Valley, USA, LLC, Exton, PA, PCI, April 2010.

Zur Erzielung einer hohen Haftklebrigkeit (eines hohen Tacks) unter gleichzeitiger Vermeidung einer zu großen Weichheit des schmelzbaren, haftklebrigen, hydroxyl-funktionalisierten Polybutadien-Polyurethan-Prepolymers, die zu einer verminderten Scherfestigkeit führen würde, ist es vorteilhaft, wenn der anzahlmäßige Anteil der zur Bildung des schmelzbaren, haftklebrigen, hydroxyl-funktionalisierten Polybutadien-Polyurethan-Prepolymers eingebrachten Hydroxylgruppen, die von dem zumindest einen Kettenverlängerer stammen, zwischen größer oder gleich 20,0 % und kleiner oder gleich 80,0 %, bevorzugt zwischen größer oder gleich 30,0 % und kleiner oder gleich 70,0 % beträgt. Der anzahlmäßige Anteil entspricht stets dem Stoffmengenanteil.

Zur Erzielung einer hohen Haftklebrigkeit (eines hohen Tacks) ist es vorteilhaft, Polybutadien-Polyole - nämlich Polyole mit einer zahlengemittelten, mittleren Funktionalität zwischen größer 2,0 und kleiner oder gleich 3,0 und/oder Polybutadien-Diole mit einer zahlengemittelten, mittleren Funktionalität zwischen größer 1,5, bevorzugt 1,8 oder größer, und kleiner oder gleich 2,0 - mit einer zahlengemittelten mittleren Molmasse zwischen größer 1000 g/mol und kleiner 5000 g/mol, bevorzugt zwischen größer oder gleich 2000 g/mol und kleiner oder gleich 3000 g/mol zu verwenden.

Die Polybutadien-Polyole mit einer zahlengemittelten, mittleren Funktionalität zwischen größer 2,0 und kleiner oder gleich 3,0 können optional zur Herstellung des schmelzbaren, haftklebrigen, hydroxyl-funktionalisierten Polybutadien-Polyurethan-Prepolymers mitverwendet werden, um Verzweigungsstellen in dieses Prepolymer einzubauen. Ein gewisser Verzweigungsgrad hätte den Vorteil eines höheren Vorvernetzungsgrades nach der chemischen Umsetzung mit dem aliphatischen oder alicyclischen Diisocyanat und/ oder bevorzugt dem aliphatischen oder alicyclischen Polyisocyanat mit einer Isocyanat-Funktionalität von drei oder größer drei und somit einer höheren Scherfestigkeit des erfindungsgemäßen, chemisch vorvernetzten, thermisch vulkanisierbaren Haftklebstoffs.

Bei Mitverwendung der optionalen Polybutadien-Polyole mit einer zahlengemittelten, mittleren Funktionalität zwischen größer 2,0 und kleiner oder gleich 3,0 zur Herstellung des schmelzbaren, haftklebrigen, hydroxyl-funktionalisierten Polybutadien-Polyurethan-Prepolymers muss darauf geachtet werden, dass keine Gelierung eintritt, dass also der Verzweigungsgrad im Verhältnis zur Länge der erzeugten Prepolymerketten nicht so hoch ist, dass es bereits zu einer Vernetzung während der Prepolymer-Herstellung kommt. Der Grad der Verzweigung wird so eingestellt, dass die Schmelzbarkeit des haftklebrigen, hydroxyl-funktionalisierten Polybutadien-Polyurethan-Prepolymers gewährleistet ist, dass sich also keine vernetzten Strukturen ausbilden. Um vernetzte Strukturen auszuschließen, darf der sogenannte Gelpunkt nicht überschritten werden. Der theoretische Gelpunkt lässt sich mit der Gelpunktsgleichung von P.J.Flory berechnen. Eine aus der Flory-Gleichung abgeleitete Formel zur Abschätzung des Gelierungs- NCO/OH-Verhältnisses in Polyurethan-Bildungsreaktionen aus Diolen und Triolen mit Diisocyanaten im Unterschuss, lautet:

$$\left[\frac{NCO}{OH}\right]_{Gelierung} = \cfrac{1}{1 + \cfrac{1}{\cfrac{(Diol\text{-}OH)}{(Triol\text{-}OH)} + 1}}$$

Mit Diol-OH ist in dieser Formel die Gesamtanzahl der an der Polyurethan-Bildungsreaktion beteiligten Hydroxylgruppen gemeint, die von Polyolen herrühren, deren Hydroxyl-Funktionalität kleiner oder gleich zwei ist. Darin eingeschlossen sind auch die Kettenverlängerer. Mit Triol-OH ist die Gesamtanzahl der an der Polyurethan-Bildungsreaktion beteiligten Hydroxylgruppen gemeint, die an Polyole gebunden sind, deren Funktionalität größer zwei und kleiner oder gleich drei ist.

Wird das Gelierungs-NCO/OH-Verhältnis erreicht oder überschritten, muss mit der Ausbildung vernetzter Strukturen, also mit dem Einsetzen einer Gelierung, gerechnet werden. Die Formel liefert nur einen ungefähren, aber für die Praxis in der Regel ausreichenden Anhaltspunkt, ab welchem NCO/OH-Verhältnis die tatsächliche Gelierung eintritt.

Bei Mitverwendung der optionalen aliphatischen oder alicyclischen Polyisocyanate mit einer Isocyanat-Funktionalität von drei oder größer drei zur Herstellung des schmelzbaren, haftklebrigen, hydroxyl-funktionalisierten Polybutadien-Polyurethan-Prepolymers gelten sinngemäß analoge Überlegungen, um Gelierungen zu vermeiden. Aus diesem Grunde sollte es außerdem vermieden werden, sowohl Polybutadien-Polyole mit einer zahlengemittelten, mittleren Funktionalität zwischen größer 2,0 und kleiner oder gleich 3,0 als auch gleichzeitig aliphatische oder alicyclische Polyisocyanate mit einer Isocyanat-Funktionalität von drei oder größer drei zur Herstellung des schmelzbaren, haftklebrigen, hydroxyl-funktionalisierten Polybutadien-Polyurethan-Prepolymers zu verwenden.

Der anzahlmäßige Anteil der zur Bildung des schmelzbaren, haftklebrigen, hydroxyl-funktionalisierten Polybutadien-Polyurethan-Prepolymers eingebrachten Hydroxylgruppen, die von dem optionalen mindestens einen Polybutadien-Polyol mit einer zahlengemittelten, mittleren Funktionalität zwischen größer 2,0 und kleiner oder gleich 3,0 stammen, beträgt vorteilhafterweise maximal 50,0 %, bevorzugt zwischen größer oder gleich 10,0 % und kleiner oder gleich 40,0 %, besonders bevorzugt zwischen größer oder gleich 15,0 % und kleiner oder gleich 30,0 %. Höhere Anteile erfordern ein unvorteilhaft geringes NCO/OH-Verhältnis, das eine unvorteilhaft niedrige Erweichungstemperatur des schmelzbaren, haftklebrigen, hydroxyl-funktionalisierten Polybutadien-Polyurethan-Prepolymers zur Folge hätte.

Das schmelzbare, haftklebrige, hydroxyl-funktionalisierte Polybutadien-Polyurethan-Prepolymer wird durch Umsetzung der genannten Polyole (Diole und/oder höherwertige Polole) mit zumindest einem aliphatischen oder alicyclischen Diisocyanat und/oder optional zumindest einem aliphatischen oder alicyclischen Polyisocyanat mit einer Isocyanat-Funktionalität von drei oder größer drei erhalten.

Unter aliphatischen oder alicyclischen Diisocyanaten werden in dieser Schrift alle organischen Polyisocyanate mit einer Isocyanat-Funktionalität von zwei verstanden, in denen die Isocyanat-Gruppen nicht direkt an ein nach der Hückel-Regel aromatisches Ringsystem gebunden sind. Beispiele für aliphatische oder alicyclische Diisocyanate sind

Butan-1,4-diisocyanat, Tetramethoxybutan-1,4-diisocyanat, Hexan-1,6-diisocyanat (Hexamethylendiisocyanat, HDI), Ethylendiisocyanat, 2,2,4-Trimethyl-hexamethylendiisocyanat, Ethylethylendiisocyanat, Dicyclohexylmethan-4,4'-diisocyanat (H12MDI), 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, m-Tetramethyl-xylen-diisocyanat (TMXDI) sowie chlorierte, bromierte, schwefel- oder phosphorhaltige aliphatische oder alicyclische Diisocyanate. Besonders bevorzugt sind Isophorondiisocyanat (CAS-Nr. 4098-71-9) und Dicyclohexylmethan-4,4'-diisocyanat (CAS-Nr. 5124-30-1).

Aliphatische oder alicyclischen Polyisocyanaten mit einer Isocyanat-Funktionalität von drei oder größer drei sind beispielsweise trimerisierte oder höher oligomerisierte aliphatische oder alicyclische Diisocyanate, wie die trimeren, pentameren oder höher oligomerisierten HDI-Isocyanurate, die zum Beispiel in den Handelsprodukten Desmodur N3300 ® oder Desmodur N3600 ® enthalten sind, weiterhin HDI-Biurete, die zu Beispiel im Desmodur N100 ® oder Desmodur N 3200 ® enthalten sind, das Gemisch aus einem HDI-Iminooxadiazindion und einem HDI-Isocyanurat im Desmodur XP 2410 ® oder das IPDI-Isocyanurat, das im Desmodur Z 4470 ® enthalten ist, jeweils von der Firma Bayer sowie Derivate der aufgeführten Polyisocyanate mit einer Isocyanat-Funktionalität von drei oder größer drei oder Gemische davon.

Besonders geeignet sind auch Gemische von Diisocyanaten und (höherwertigen) Polyisocyanaten, zum Beispiel dimere HDI-Uretdion - oder Allophonatgruppen enthaltende Gemische mit Anteilen an höher funktionellen Polyisocyanaten, wie zum Beispiel im Desmodur N3400 ® enthalten.

Das alicyclischen Polyisocyanat mit einer Isocyanat-Funktionalität von drei oder größer drei ist bevorzugt eine trimerisierte oder höher oligomerisierte Form des Hexamethylendiisocyanats und/ oder des Isophorondiisocyanats.

Das Verhältnis der Gesamtanzahl der Isocyanat-Gruppen zur Gesamtanzahl der Hydroxylgruppen der an der chemischen Umsetzung zum schmelzbaren, haftklebrigen, hydroxyl-funktionalisierten Polybutadien-Polyurethan-Prepolymer beteiligten Stoffe ist stets kleiner 1,0 und ist in einer vorteilhaften Ausführungsform größer oder gleich 0,3, bevorzugt größer oder gleich 0,4, besonders bevorzugt größer oder gleich 0,5, ganz besonders bevorzugt größer oder gleich 0,6. Die bevorzugten Verhältnisse sind vorteilhaft im Hinblick auf die Erzielung einer bei Raumtemperatur festen Konsistenz bei gleichzeitiger hoher Haftklebrigkeit oder mit anderen Worten im Hinblick auf die Bereitstellung viskoelastischer, hydroxyl-funktionalisierter Hotmelt-Polyurethan-Prepolymere mit hohem Tack.

Bevorzugt umfasst das schmelzbare, haftklebrige, hydroxyl-funktionalisierte Polybutadien-Polyurethan-Prepolymer das chemische Umsetzungsprodukt aus ausschließlich einem oder mehreren Polybutadien-Diolen, optional einem oder mehreren Polybutadien-Polyolen mit einer zahlengemittelten, mittleren Funktionalität zwischen größer 2,0 und kleiner oder gleich 3,0 und einem oder mehreren Kettenverlängerern mit einer Hydroxyl-Funktionalität von zwei und einer Molmasse von kleiner oder gleich 300 g/mol mit einem oder mehreren aliphatischen oder alicyclischen Diisocyanaten und/ oder optional einem oder mehreren aliphatischen oder alicyclischen Polyisocyanaten mit einer Isocyanat-Funktionalität von drei oder größer drei. An der chemischen Umsetzung zum schmelzbaren, haftklebrigen, hydroxyl-funktionalisierten Polybutadien-Polyurethan-Prepolymer sind also bevorzugt keine zusätzlichen, anderen Polyole oder Isocyanate beteiligt, insbesondere keine Polyether-Polyole, keine Polyester-Polyole und keine aromatischen Diisocyanate. Es wird angenommen, dass sich bei Verwendung des schmelzbaren, haftklebrigen, hydroxyl-funktionalisierten Polybutadien-Polyurethan-Prepolymers als Basiselastomer zur Herstellung eines chemisch vorvernetzten, thermisch vulkanisierbaren Haftklebstoffs Polyether- und Polyester-Polyole unvorteilhaft auf die Haftungseigenschaften nach der Vulkanisationsreaktion auswirken, insbesondere auf die Haftungseigenschaften auf geölten Blechen. Weiterhin wird angenommen, dass sich aromatische Diisocyanate unvorteilhaft auf die Haftklebrigkeit (den Tack) auswirken.

Zur Beschleunigung der Reaktion erfolgt die chemische Umsetzung zum schmelzbaren, haftklebrigen, hydroxyl-funktionalisierten Polybutadien-Polyurethan-Prepolymer bevorzugt unter Zusatz eines Katalysators. Es können ein oder mehrere dem Fachmann bekannte Katalysatoren wie zum Beispiel tertiäre Amine, bismut- oder zinnorganische Verbindungen eingesetzt werden, um nur einige zu nennen. Sehr vorteilhaft können Bismut und Kohlenstoff enthaltende Katalysatoren eingesetzt werden, bevorzugt ein Bismutcarboxylat oder ein Bismutcarboxylat-Derivat. Besonders vorteilhaft ist Bismuttrisneodecanoat (CAS-Nr. 34364-26-6).

Die Konzentration der Katalysatoren wird auf die gewünschte Reaktionsgeschwindigkeit abgestimmt und liegt typischerweise zwischen 0,01 Gew.% und 0,5 Gew.% des herzustellenden schmelzbaren, haftklebrigen, hydroxyl-funktionalisierten Polybutadien-Polyurethan-Prepolymers.

Das schmelzbare, haftklebrige, hydroxyl-funktionalisierte Polybutadien-Polyurethan-Prepolymer wird bevorzugt ohne die Verwendung von Lösemitteln hergestellt. Die Einbeziehung von Lösemitteln in den Herstellprozess ist zwar technisch leicht möglich, bringt aber normalerweise keine Vorteile.

Das schmelzbare, haftklebrige, hydroxyl-funktionalisierte Polybutadien-Polyurethan-Prepolymer wird vorteilhaft batchweise, also diskontinuierlich, zum Beispiel in einem beheizbaren Mischkessel, Kneter, Planetenmischer oder Dissolver hergestellt. Um Blasenfreiheit zu erreichen, erfolgt das Mischen in der Endphase des Prozesses, wenn die chemische Umsetzung weitgehend abgeschlossen ist, bevorzugt unter vermindertem Druck.

Abmischung mit Isocyanaten, Schwefel und weiteren Komponenten

Zur Vorvernetzung werden dem Prepolymer ein oder mehrere aliphatische und/oder alicyclische Polyisocyanate (ggf. difunktionell, erfindungsgemäß zumindest ein höherwertig funktionelles) beigemischt. Dies geschieht üblicherweise in das aufgeschmolzene Prepolymer. Mit der Zugabe der Polyisocyanate setzt die Reaktion mit den Hydroxylgruppen des Prepolymers, also die Vorvernetzungsreaktion, ein.

Dem Prepolymer werden insbesondere vor der Vorvernetzung, also vor der Zugabe der Polyisocyanate, die weiteren Bestandteile des späteren Haftklebstoffs zugesetzt, wie insbesondere der zur Vulkanisation eingesetzte Schwefel, optional vorhandene Vulkanisationsbeschleuniger und optional vorhandene weitere Stoffe/Additive. Besonders vorteilhaft werden auch diese weiteren Stoffe/Additive in die Schmelze des Prepolymers eingemischt werden.

Alternativ können solche weiteren Rezeptierungsbestandteile - wie zum Beispiel Schwefel, Füllstoffe, Mikrokugeln, Harze, insbesondere klebrig machende Kohlenwasserstoffharze, Weichmacher, Alterungsschutzmittel (Antioxidantien), Lichtschutzmittel, UV-Absorber, rheologische Additive sowie sonstige Hilfs- und Zusatzstoffe - gleichzeitig mit den Polyisocyanaten und/oder während der kontinuierlichen Durchmischung des haftklebrigen, hydroxyl-funktionalisierten Polybutadien-Polyurethan-Prepolymers mit den Polyisocyanaten zugesetzt werden.

Die Zugabe der Polyisocyanate kann kontinuierlich oder batchweise geschehen. Auch kann die Umsetzung des schmelzbaren, haftklebrigen, hydroxyl-funktionalisierten Polybutadien-Polyurethan-Prepolymers mit den Polyisocyanaten sowohl kontinuierlich als auch batchweise erfolgen. Ebenso kann die Zudosierung des Schwefels und der optionalen Vulkanisationsbeschleuniger, Füllstoffe sowie der weiteren Stoffe sowohl kontinuierlich als auch batchweise erfolgen.

Der Begriff kontinuierlich bezieht sich auf die Verfahrensführung und bedeutet, dass während des Mischens die zu mischenden Stoffe ständig und insbesondere mit gleichmäßiger Geschwindigkeit dem Mischaggregat zugeführt, in dieses also eingebracht werden und die Mischung, in der - sofern auch die Isocyanate bereits zugegeben sind - die allmähliche chemische Umsetzung zum chemisch vorvernetzten, haftklebrigen Polybutadien-Polyurethan durch das Mischen gestartet wird und dann voranschreitet, ständig und insbesondere mit gleichmäßiger Geschwindigkeit das Mischaggregat an anderer Stelle verlässt. Im Mischaggregat findet somit während des Mischens ein ständiger, insbesondere gleichmäßiger Fließvorgang und/oder Transportvorgang statt. Die Verweilzeit der Stoffe im Mischaggregat vom Einbringen bis zum Verlassen als chemisch reagierendes Gemisch (insbesondere also die Reaktionszeit des schmelzbaren, haftklebrigen, hydroxyl-funktionalisierten Polybutadien-Polyurethan-Prepolymers mit dem optionalen aliphatischen oder alicyclischen Diisocyanat und dem erfindungsgemäßen aliphatischen oder alicyclischen Polyisocyanat mit einer Isocyanat-Funktionalität von drei oder größer drei vor der Ausformung) übersteigt bevorzugt nicht 10 Minuten und beträgt sehr bevorzugt 2 Sekunden bis 5 Minuten.

Eine kontinuierliche Verfahrensführung bietet sich insbesondere dann an, wenn die Umsetzung zwischen dem schmelzbaren, haftklebrigen, hydroxyl-funktionalisierten Polybutadien-Polyurethan-Prepolymer und den Polyisocyanaten in der Schmelze (insbesondere also lösungsmittelfrei) gestartet wird.

Ein schmelzbares, haftklebriges, hydroxyl-funktionalisiertes Polybutadien-Polyurethan-Prepolymer wird in Ergänzung der bereits gegebenen Definition in dieser Schrift als geschmolzen betrachtet, wenn die Viskosität durch Temperaturerhöhung des schmelzbaren, haftklebrigen, hydroxyl-funktionalisierten Polybutadien-Polyurethan-Prepolymers so weit herabgesetzt ist, dass es in bekannten Mischaggregaten mit den Polyisocyanaten homogen gemischt werden kann. Die Temperaturerhöhung des schmelzbaren, haftklebrigen, hydroxyl-funktionalisierten Polybutadien-Polyurethan-Prepolymers kann dabei durch Beheizung von außen erfolgen oder durch Scherung erzeugt werden. Bekannte Mischaggregate sind beispielsweise Kneter, Innenmischer, Extruder, Planetwalzenextruder, Ringextruder, Planetenmischer, Butterfly-Mischer oder Dissolver.

Das kontinuierliche Mischen des geschmolzenen, haftklebrigen, hydroxyl-funktionalisierten Polybutadien-Polyurethan-Prepolymers mit den Polyisocyanaten sowie dem Schwefel und den optionalen Vulkanisationsbeschleunigern, Füllstoffen sowie den weiteren Stoffen erfolgt bevorzugt lösemittelfrei in einem kontinuierlich arbeitenden Mischaggregat, vorzugsweise in einem Extruder, insbesondere einem Doppelschnecken-, Planetwalzen- oder Ringextruder, oder in einer beheizbaren Zweikomponenten-Misch- und Dosieranlage. Kaskadenschaltungen aus kontinuierlich oder auch diskontinuierlich arbeitenden Mischaggregaten sind ebenfalls geeignet. Das Mischaggregat ist vorzugsweise so konzipiert, dass bei einer kurzen Verweilzeit im Mischaggregat eine gute Durchmischung gewährleistet ist. Die Zugabe des geschmolzenen, haftklebrigen, hydroxyl-funktionalisierten Polybutadien-Polyurethan-Prepolymers und der Polyisocyanate können in einem Extruder an gleicher Stelle oder auch an unterschiedlichen Stellen erfolgen, vorzugsweise in druckfreien Zonen. Günstig ist, wenn die Polyisocyanate fein verteilt dem haftklebrigen, hydroxyl-funktionalisierten Polybutadien-Polyurethan-Prepolymer zugesetzt werden, beispielsweise als Aerosol oder in feinen Tröpfchen.

Schwefel und weitere Stoffe und/oder Additive

Wie bereits erwähnt kann die Zudosierung des Schwefels und der optionalen Vulkanisationsbeschleuniger, Füllstoffe sowie der weiteren Zusatzsstoffe und Additive sowohl kontinuierlich als auch batchweise erfolgen.

Das kontinuierliche Mischen des geschmolzenen, haftklebrigen, hydroxyl-funktionalisierten Polybutadien-Polyurethan-Prepolymers mit dem Schwefel und den optionalen Vulkanisationsbeschleunigern, Füllstoffen sowie den weiteren Stoffen erfolgt auch dann bevorzugt lösemittelfrei in einem kontinuierlich arbeitenden Mischaggregat, vorzugsweise in einem Extruder, insbesondere einem Doppelschnecken-, Planetwalzen- oder Ringextruder, oder in einer beheizbaren Zweikomponenten-Misch- und Dosieranlage, wenn diese Stoffe/Additive vor den Isocyanaten zugemischt werden. Kaskadenschaltungen aus kontinuierlich oder auch diskontinuierlich arbeitenden Mischaggregaten sind ebenfalls geeignet. Das Mischaggregat ist vorzugsweise so konzipiert, dass bei einer kurzen Verweilzeit im Mischaggregat eine gute Durchmischung gewährleistet ist.

Zur späteren Vulkanisation wird gemahlener Schwefel eingesetzt. Gemahlener Schwefel ist löslicher oder unlöslicher gemahlener Elementarschwefel. Der Reinheitsgrad sollte mindestens 95% betragen, besser mindestens 99%. Der Schwefel sollte so fein gemahlen sein, dass der Siebrückstand bei einer Maschenweite von $100\,\mu$m höchstens 2% beträgt. Gröbere Sorten funktionieren im Prinzip zwar auch, jedoch kann es dazu führen, dass der Klebstoff dann eine optisch deutlich wahrnehmbare Rauigkeit besitzt und und die erzielbaren Klebfestigkeiten etwas geringer sind.

Optional umfasst der Haftklebstoff einen oder mehrere Vulkanisationsbeschleuniger, einen oder mehrere Füllstoffe, ein oder mehrere Epoxidharze, ein oder mehrere Klebrigmacherharze, Bitumen, einen oder mehrere Weichmacher, ein oder mehrere Öle, einen oder mehrere Alterungsschutzmittel einen oder mehrere weitere Hilfs- und Zusatzstoffe oder beliebige Kombinationen der vorgenannten Stoffe/Additive, die jeweils insbesondere dem geschmolzenen Prepolymer zugemischt werden.

Von den optionalen Substanzklassen der Vulkanisationsbeschleuniger, Füllstoffe, Epoxidharze, Klebrigmacherharze, Bitumen, Weichmacher, Öle, Alterungsschutzmittel sowie der weiteren Hilfs- und Zusatzstoffe kann jeweils nur eine oder jede beliebige Kombinaiton mehrerer Substanzklassen enthalten sein. Ebenso kann innerhalb einer Substanzklasse jeweils eine Substanz oder eine beliebige Anzahl verschiedener Substanzen enthalten sein.

Zur Aktivierung der Schwefelvulkanisation können Vulkanisationsbeschleuniger und Vulkanisationshilfs- und zusatzstoffe zugesetzt werden. Diese Stoffe bewirken eine Herabsetzung der Aktivierungstemperatur und / oder eine beschleunigte Aushärtung und Vernetzung. Unter Vulkanisationsbeschleunigern, die in dem erfindungsgemäßen Klebstoff optional enthalten sein können, werden in dieser Schrift alle Stoffe verstanden, die die Vulkanisation bekanntermaßen beschleunigen. Diese können auch gleichzeitig Schwefelspender sein. In den Erfindungsgedanken werden auch solche bekannten Schwefelspender einbezogen, die in der Fachliteratur nicht ausdrücklich gleichzeitig auch als Beschleuniger klassifiziert werden.

Die wichtigsten Vulanisationsbeschleuniger lassen sich in folgende bekannte Substanzklassen einordnen: Mercapto-Beschleuniger, Sulfenamid-Beschleuniger, Sulfenimid-Beschleuniger, Thiuram-Beschleuniger, Dithiocarbamat-Beschleuniger, Dithiocarbamyl-sulfenamid-Beschleuniger, Xanthogenat-Beschleuniger, Guanidin-Beschleuniger, Amin-Beschleuniger, Thioharnstoff-Beschleuniger, Dithiophosphat-Beschleuniger und SchwefelSpender. Beispiele für Mercapto-Beschleuniger sind 2-Mercaptobenzothiazol (MBT), Zink-2-mercaptobenzothiazol (ZMBT) und Dibenzothiazyldisulfid (MBTS). Typische Sulfenamid-Beschleuniger sind N-Cyclohexyl-2-benzothiazolsulfenamid (CBS), N-tert-Butyl-2-benzothiazolsulfenamid (TBBS), N-Oxydiethylen-2-benzothiazolsulfenamid (MBS) und N,N'-Di-cyclohexyl-2-benzothiazolsulfenamid (DCBS). Ein Beispiel für einen Sulfenimid-Beschleuniger ist N-tert-Butyl-2-benzothiazolsulfenimid. Beispiele für Thiuram-Beschleuniger sind Tetramethylthiurammonosulfid (TMTM), Tetramethylthiuramdisulfid (TMTD), Tetraethylthiuramdisulfid (TETD), Tetrabenzylthiuramdisulfid (TBzTD), Tetraisopropylthiuramdisulfid (TiPTD), Dimethyldiphenylthiuramdisulfid (MPTD) und Dipentamethylenthiuramtetrasulfid (TPTT). Zink-dimethyldithiocarbamat (ZDMC), Zink-diethyldithiocarbamat (ZDEC), Zinkdibutyldithiocarbamat (ZDBC), Zink-pentamethylendithiocarbamat (Z5MC), Zink-ethylphenyldithiocarbamat (ZEPC), Zink-dibenzyldithiocarbamat (ZBEC), Zink-diisopropyldithiocarbamat (ZDIPC), Piperidin-pentamethylendithiocarbamat (PPC), Tellur-dimethyldithiocarbamat (TDMC), Tellur-diethyldithiocarbamat (ZDEC), Blei-dimethyldithiocarbamat (PbDMC), Kupferdimethyldithiocarbamat (CuDMC), Kupfer-dibutyldithiocarbamat (CuDBC), Wismuthdimethyldithiocarbamat (BiDMC) und Natrium-dimethyldithiocarbamat (NaDMC) stellen eine Auswahl an bekannten Dithiocarbamat-Beschleunigern dar. Typische Dithiocarbamylsulfen-amid-Beschleuniger sind N-Oxydiethylendithiocarbamyl-N'-oxydiethylensulfenamid (OTOS) und N-Oxydiethylendithiocarbamyl-N'-tert-butylsulfenamid (OTTBS). Bekannte Beispiele für Xanthogenat-Beschleuniger sind Zink-isopropylxanthogenat (ZIX), Zink-butylxanthogenat (ZBX), Natrium-isopropylxanthogenat (NaIX) und Polyxanthogenat. Typische Guanidin-Beschleuniger sind Diphenylguanidin (DPG), Di-o-tolylguanidin (DOTG) und o-Tolylbiguanid (OTBG). Amin-Beschleuniger sind zum Beispiel Butyraldehydanilin (BAA), Tricrotonylidentetramin (TCT), Hexamethylentetramin (HEXA), Polyethylenpolyamine (PEP) sowie Cyclohexylethylamin (CEA). N,N'-Ethylenthioharnstoff (ETU), N,N'-Dibutylthioharnstoff (DBTU), N,N'-Diethylthioharnstoff (DETU) und N,N'-Diphenylthioharnstoff (DPTU) sind Beispiele für Thioharnstoff-Beschleuniger. Bekannte Dithiophosphat-Beschleuniger sind Zinkdibutyldithiophosphat (ZBPD), Zink-diisooctyldithiophosphat (ZOPD), Dodecylammoniumdiisooctyldithiophosphat (AOPD) und Kupfer-diisopropyldithiophosphat (CuPPD). Als Schwefelspender seien 2-Morpholinodithiobenzothiazol (MBSS), N,N'-Dithiodimorpholin (DTDM) und Caprolactamdisulfid (CLD) genannt.

Generell gehört das Wissen über Vulkanisationsbeschleuniger zum Stand der Technik und ist beispielsweise in "Werner Hoffmann, Heinz Gupta, Handbuch der Kautschuk-Technologie (2001)" dargestellt.

Bevorzugte Substanzklassen sind Mercapto-Beschleuniger, Thiuram-Beschleuniger und Dithiocarbamat-Beschleuniger. Mercapto-Beschleuniger werden als "all-purpose"-Beschleuniger angesehen, die im Temperaturbereich von 160 °C bis 180 °C für eine zügige Vulkanisation sorgen und keinen negativen Einfluss auf die Stabilität des noch nicht vulkanisierten Klebstoffes haben. Die Thiuram-Beschleuniger und Dithiocarbamat-Beschleuniger werden einzeln oder in Kombination, oder auch in Kombination mit den Mercapto-Beschleunigern, als "Ultrabeschleuniger" angesehen, die bereits bei Temperaturen ab 130 °C für eine schnelle Vulkanisation sorgen und dennoch eine ausreichende Stabilität während der Herstellung des Klebstoffes, selbst bei Compoundierungstemperaturen bis ca. 90 °C, und während der späteren Lagerung bei Temperaturen zwischen Raumtempratur und 30 °C gewährleisten. Ein bevorzugter "all-purpose"-Vulkanisationsbeschleuniger ist MBTS. Bevorzugte "Ultrabeschleuniger" sind TBzTD und ZBEC. Neben technisch-funktionalen Gesichtspunkten spielt bei der Auswahl auch der Sicherheitsaspekt im Hinblick auf die mögliche Freisetzung gefährlicher, carcinoger Spaltprodukte, insbesondere carcinogener N-Nirosamine, eine Rolle. Diesbezüglich gelten MBTS, TBzTD und ZBEC als unkritisch.

Bevorzugte Konzentrationen der Vulkanisationsbeschleuniger in dem chemisch vorvernetzten, thermisch vulkanisierbaren Haftklebstoff betragen zusammen zwischen mindestens 0,1 Gewichtsprozent und maximal 15,0 Gewichtsprozent, bevorzugt zwischen mindestens 0,5 und maximal 12,5 Gewichtsprozent, besonders bevorzugt zwischen mindestens 1,0 und maximal 10,0 Gewichtsprozent.

Um die Vulkanisation weiter zu beschleunigen, können bei Bedarf auch noch Vulkanisationshilfs- und zusatzstoffe wie zum Beispiel Metalloxide, insbesondere Zinkoxid, Fettsäuren, wie zum Beispiel Stearinsäure oder deren Salze zugegeben werden. Im Hinblick auf die Stabilität des noch nicht vulkanisierten, chemisch vorvernetzten Haftklebstoffes und im Hinblick auf die Haftungseigenschaften nach der Vulkanisation, insbesondere auf geölten Blechen, erwies sich die Verwendung von Vulkanisationshilfs- und zusatzstoffen eher kritisch, so dass bevorzugte Ausführungsformen frei von diesen Stoffen sind.

Als Füllstoffe, die optional ebenfalls enthalten sein können, können sowohl verstärkende, wie zum Beispiel Ruß, als auch nicht verstärkende, wie zum Beispiel Carbonate, insbesondere Kreide oder Sulfate wie zum Bespiel Bariumsulfat, eingesetzt werden. Weitere Beispiele für in Frage kommende Füllstoffe sind Silikate, wie etwa Talkum, Kaolin, calciniertes oder teilcalciniertes Kaolin, Wollastonite oder Glimmer, Hydroxide oder Oxide, wie etwa Quarzmehl, Aluminiumhydroxid, Zinkoxid oder Calciumoxid. Auch Mikrokugeln kommen als Füllstoffe in Frage. Mikrokugeln können Mikrovollglaskugeln, Mikrohohlglaskugeln und/oder Mikrokunststoffkugeln aller Art sein. Die Mikrokunststoffkugeln können vorexpandiert sein oder unexpandiert vorliegen. Die Partikelgröße im expandierten Zuustand liegt meist im Bereich zwischen 20 und 150 $\mu$m. Auch Mischungen der genannten Stoffe können eingesetzt werden. Insbesondere haben sich Mischungen aus Calciumoxid und Kreide, Talkum und/ oder Kaolin als besonders vorteilhaft im Hinblick auf das Erzielen hoher Klebfestigkeiten und der Minimierung einer gelegentlichen Bläschenbildung während der thermischen Vulkanisation erwiesen.

Vorteilhafte Gewichtsanteile von gemahlenem Calciumoxid an dem chemisch vorvernetzten, thermisch vulkanisierbaren Haftklebstoff betragen zwischen 5,0 und 30,0 Gewichtsprozent, bevorzugt zwischen 10,0 und 20,0 Gewichtsprozent. Vorteilhafte Gewichtsanteile von gemahlener Kreide, gemahlenem Talkum und/ oder gemahlenem Kaolin an dem chemisch vorvernetzten, thermisch vulkanisierbaren Haftklebstoff betragen zusammen zwischen 10,0 und 50,0 Gewichtsprozent, bevorzugt zwischen 20,0 und 40,0 Gewichtsprozent.

Optional kann der Haftklebstoff Epoxidharze enthalten. Unter einem Epoxidharz werden dabei Kunstharze verstanden, die Epoxidgruppen tragen. Vorteilhaft sind Bisphenol-basierte Epoxidharze, insbesondere Bisphenol A-basierte, aber auch Bisphenol F-basierte. Besonders vorteilhaft ist ein bei Raumtemperatur flüssiges Epoxidharz, insbesondere das Reaktionsprodukt aus Bisphenol-A und Epichlorhydrin mit einem zahlengemittelten, mittleren Molekulargewicht von kleiner oder gleich 700 g/mol (CAS-Nr. 25068-38-6), aber auch entsprechende feste Reaktionsprodukte mit höheren zahlengemittelten, mittleren Molekulargewichten sind optionale Epoxidharze. Andere vorteilhafte Epoxidharze sind Epoxyphenol-Novolak-Harze, Epoxy-dicyclopentadienphenol-Novolak-Harze, Epoxykresol-Novolak-Harze, Glycidylamin-basierte Epoxidharze, insbesondere Triglycidylether von para-Aminophenol, Triglycidylether von meta-Aminophenol, Tetraglycidylether von Methylendianilin, Hydroxylphenyl-basierte Epoxidharze sowie aliphatische Epoxidharze, insbesondere cycloaliphatische. Zu nennen ist hier insbesondere 3,4-Epoxycyclohexylmethyl-3',4'-epoxycyclohexancarboxylat (CAS-Nr. 2386-87-0).

Eine vorteilhafte Konzentration des Epoxidharzes in dem chemisch vorvernetzten, thermisch vulkanisierbaren Haftklebstoff liegt zwischen einschließlich 1,0 Gewichtsprozent und einschließlich 20,0 Gewichtsprozent. Besonders vorteilhaft ist eine Konzentration zwischen einschließlich 5,0 Gewichtsprozent und einschließlich 15,0 Gewichtsprozent. Der Zusatz von Epoxidharzen hat sich insbesondere im Hinblick auf die Haftungseigenschaften des chemisch vorvernetzten, thermisch vulkanisierbaren Haftklebstoff auf Metalloberflächen nach der thermischen Vulkanisationsreaktion als vorteilhaft herausgestellt. Weiterhin wird die Viskosität des Compounds während der Herstellung des Klebstoffes vorteilhaft herabgesetzt, so dass bei niedrigeren Prozesstemperaturen gearbeitet werden kann.

Auch das Epoxidharz kann grundsätzlich dem geschmolzenen Prepolymer beigemischt werden. Vorteilhafterweise erfolgt aber bereits die chemische Umsetzung zum schmelzbaren, haftklebrigen, hydroxyl-funktionalisierten Polybutadien-Polyurethan-Prepolymer in Gegenwart des optionalen mindestens einen Epoxidharzes. Der Vorteil dieses Verfahrens besteht darin, dass das mindestens eine Epoxidharz energiesparend bei Raumtemperatur eingearbeitet werden kann. Würde dagegen das Polybutadien-Polyurethan erst hergestellt und anschließend das mindestens eine Epoxidharz zugegeben werden, müsste das Polybutadien-Polyurethan-Prepolymer zunächst so hoch erhitzt werden, bis es als Schmelze vorliegt. Dies hätte den Nachteil, dass ein höherer Energieeintrag notwendig wäre. Ein weiterer Vorteil ist, dass die Erweichungs- beziehungsweise Schmelztemperatur des Gemisches aus Prepolymer und Epoxidharz deutlich niedriger als die Erweichungs- beziehungsweise Schmelztemperatur des reinen Prepolymers ist, wobei der Hotmeltcharakter dennoch erhalten bleibt. Eine spätere Compoundierung mit Schwefel und weiteren Stoffen, wie zum Beispiel Vulkanisationsbeschleunigern kann somit energiesparend und schonend bei niedrigeren Temperaturen erfolgen als ohne das bereits während der Polybutadien-Polyurethan-Prepolymer- Herstellung eingearbeitete Epoxidharz. Auf diese Weise ist auch eine Compoundierung mit sogenannten Ultrabeschleunigern, die mitunter bereits bei ungefähr 120 °C innerhalb von wenigen Minuten die Vulkanisation anspringen lassen, möglich, ohne dass es zu unerwünschten Aushärtungen oder Vergelungen während des Compoundierprozesses kommt. Erfolgt die spätere Compoundierung des Polybutadien-Polyurethans mit Schwefel, Vulkanisationsbeschleunigern und Vulkanisationshilfs- und zusatzstoffen in einem kontinuierlich arbeitendem Mischaggregat, insbesondere einem Compoundierextruder, ist ein weiterer Vorteil dadurch gegeben, dass keine der in der Regel begrenzt verfügbaren Dosierstellen am Compoundierextruder durch das mindestens eine Epoxidharz blockiert wäre.

Die Tatsache, dass es technisch möglich ist, die isocyanat-basierte chemische Umsetzung zum schmelzbaren, haftklebrigen, hydroxyl-funktionalisierten Polybutadien-Polyurethan-Prepolymer in Gegenwart eines oder mehrerer Epoxidharze erfolgen zu lassen, ist für den Fachmann überraschend, denn Isocyanate sind in der Fachliteratur als reaktiv gegenüber Epoxiden beschrieben, so beispielsweise in Ullmann's Encyclopedia of Industrial Chemistry, 6th Edition, Vol. 12, Seite 271 (Tabelle) und in Encyclopedia of Polymer Science and Engineering, Vol. 6, S. 345.

Überraschend wurde zudem gefunden, dass Mischungen aus Epoxidharz und dem haftklebrigen, hydroxyl-funktionalisierten Polybutadien-Polyurethan-Prepolymer zur Phasenseparierung neigen, wenn das mindestens eine Epoxidharz erst nach der Herstellung des haftklebrigen, hydroxyl-funktionalisierten Polybutadien-Polyurethan-Prepolymers zugemischt wird. Erfolgt dagegen die chemische Umsetzung zum haftklebrigen, hydroxyl-funktionalisierten Polybutadien-Polyurethan-Prepolymer in Gegenwart des Epoxidharzes/ der Epoxidharze, werden zwar in der Regel je nach Mischungsverhältnis trübe, aber nicht separierende Mischungen erhalten, die den Vorteil haben, homogen zu vulkanisieren (auszuhärten), wodurch eine höhere Festigkeit und eine verbesserte Haftung erzielt werden können als bei Verwendung einer inhomogenen Mischung aus haftklebrigem, hydroxylfunktionalisiertem Polybutadien-Polyurethan-Prepolymer und Epoxidharz. In analoger Weise können auch andere Stoffe, wie zum Beispiel Weichmacher, Öle, Klebrigmacherharze, Bitumen oder auch Füllstoffe oder rheologische Additive bereits vor oder während der chemischen Umsetzung zum schmelzbaren, haftklebrigen, hydroxyl-funktionalisierten Polybutadien-Polyurethan-Prepolymer zugegeben werden.

Optional kann der chemisch vorvernetzte, thermisch vulkanisierbare Haftklebstoff auch Klebrigmacherharze enthalten. Unter der Bezeichnung "Klebrigmacherharz", englisch "Tackifier Resins", versteht der Fachmann einen Stoff auf Harzbasis, der die Klebrigkeit erhöht. Klebrigmacherharze lassen sich einteilen in Naturharze und synthetische Harze.

Typische Naturharze sind auf Kolophonium basierende Harze und ihre Derivate. Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Typische synthetische Harze sind Polyterpenharze, wobei die Rohstoffe hier allerdings natürlichen Quellen entstammen, Kohlenwasserstoffharze und Terpenphenolharze. Es handelt sich sich dabei um Polymere mit niedrigem Molekulargewicht. Das gewichtsgemittelte, mittlere Molekulargewicht beträgt in der Regel kleiner 25.000 g/mol.

Polyterpenharze basieren auf $\alpha$-Pinen und/oder ß-Pinen und/oder $\delta$-Limonen. Diese können hydriert, nicht hydriert oder teilhydriert sein.

Rohstoffe für die meisten Kohlenwasserstoffharze sind Nebenprodukte, die bei der Crackung von Naphtha oder Gasöl anfallen. Kohlenwasserstoffharze können danach klassifiziert werden, ob sie auf in erster Linie aromatischen, aliphatischen oder Dien-Monomeren basieren. Aromatische werden oft als C-9-Harze, aliphatische als C-5-Harze und Dien-Harze als $(C-5)_2$-Harze bezeichnet. Gemischte aromatisch-aliphatische Kohlenwasserstoffharze ((C-5/C-9)-Harze) sind ebenfalls vom Erfindungsgedanken eingeschlossen. Auch Kohlenwasserstoffharze können hydriert, nicht hydriert oder teilhydriert sein.

Vom Erfindungsgedanken eingeschlossen sind weiterhin Monomerharze vom Typ Styrol / $\alpha$-Methylstyrol (CAS-Nr.: 9011-11-4). Terpenphenolharze sind nach DIN 16916-1 1981-06 und ISO/TR 8244:1988 Harze, die durch Säure-katalysierte Addition von Phenolen an Terpene oder Kolophonium hergestellt werden.

Erfindungsgemäß bevorzugte Klebrigmacherharze sind Polyterpenharze auf Basis von $\alpha$-Pinen und/oder ß-Pinen und/oder $\delta$-Limonen. Ganz besonders bevorzugt sind ß-Pinen-Harze (CAS-Nr.: 25719-60-2), beispielsweise das Harz Dercolyte S-115 von der Firma DRT.

Vorteilhafte Konzentrationen der Klebrigmacherharze in dem chemisch vorvernetzten, thermisch vulkanisierbaren Haftklebstoff liegen zwischen einschließlich 1,0 Gewichtsprozent und einschließlich 30,0 Gewichtsprozent. Besonders vorteilhaft sind Konzentrationen zwischen einschließlich 5,0 Gewichtsprozent und einschließlich 20,0 Gewichtsprozent. Der Zusatz von Klebrigmacherharzen hat sich insbesondere im Hinblick auf die Haftungseigenschaften des chemisch vorvernetzten, thermisch vulkanisierbaren Haftklebstoff auf geölten Blechen vor der thermischen Vulkanisationsreaktion als vorteilhaft herausgestellt. Die Klebkraft des noch nicht vulkanisierten Haftklebstoffes auf geölten Blechen kann so signifikant erhöht werden.

Optional kann der chemisch vorvernetzte, thermisch vulkanisierbare Haftklebstoff weiterhin Bitumen enthalten. Bitumen ist ein dunkelfarbiges, halbfestes bis springhartes, hochmolekulares Kohlenwasserstoffgemisch, das bei der Destillation geeigneten Erdöls als Rückstand anfällt und noch chemisch gebundenen Schwefel, Sauerstoff, Stickstoff und einige Spuren von Metallen enthält. Physikalisch gesehen gehört Bitumen zu den thermoplastischen Stoffen, das heißt seine Eigenschaften sind temperaturabhängig. Bei Abkühlung wird es spröde, bei Erwärmung durchläuft es stufenlos alle Zustände von fest über zähflüssig bis dünnflüssig. Man unterscheidet unter anderem folgende Bitumenarten und abgeleitete Produkte: Straßenbaubitumen, insbesondere Weichbitumen, modifiziertes Bitumen, insbesondere polymermodifiziertes Bitumen, Industrie-Bitumen, insbesondere Oxidationsbitumen beziehungsweise Hartbitumen, Flux-Bitumen und Bitumenemulsion.

Erfindungsgemäß bevorzugt ist Straßenbaubitumen. Besonders bevorzugt ist die Sorte 50/70, wobei die Zahlen die minimale und maximale Penetration bei 25 °C in der Einheit mm/10 nach DIN EN 1426 angeben. Vorteilhafte Bitumen-Konzentrationen in dem chemisch vorvernetzten, thermisch vulkanisierbaren Haftklebstoff liegen zwischen einschließlich 1,0 Gewichtsprozent und einschließlich 30,0 Gewichtsprozent. Besonders vorteilhaft sind Konzentrationen zwischen einschließlich 5,0 Gewichtsprozent und einschließlich 20,0 Gewichtsprozent. Durch den Zusatz von Bitumen kann die Ölaufnahme verbessert werden, wenn auf geölten Blechen geklebt wird.

Optional kann der chemisch vorvernetzte, thermisch vulkanisierbare Haftklebstoff außerdem Weichmacher enthalten. Weichmacher sind flüssige oder feste, indifferente organische Substanzen mit geringem Dampfdruck, überwiegend solche esterartiger Natur, welche ohne chemische Reaktion, vorzugsweise durch ihr Löse- und Quellvermögen, unter Umständen aber auch ohne ein solches, mit hochpolymeren Stoffen in physikalische Wechselwirkung treten und ein homogenes System mit diesen bilden können. Die Kurzbezeichnungen von Weichmachern sind in der DIN EN ISO 1043-3: 2000-01 geregelt. Die wichtigsten Weichmacher lassen sich in größere Gruppen einteilen, die im Folgenden aufgeführt sind, wobei in Klammern die Kurzzeichen nach DIN EN ISO 1043-3: 2000-01 stehen.

Phthalsäureester, auch kurz Phthalate genannt, umfassen unter anderem Dioctylphthalat (DOP; Di(2-ethylhexyl)phthalat), Diisononylphthalat (DINP), Diisodecylphthalat (DIDP) Phthalsäureester mit überwiegend linearen $C_6$- bis $C_{11}$-Alkoholen, Dibutylphthalat (DBP), Diisobutylphthalat (DIBP), Dicyclohexylphthalat (DCHP), Dimethylphthalat (DMP) und Diethylphthalat (DEP) sowie Mischester aus Benzyl(butyl)- (BBP), Butyl(octyl)-, Butyl(decyl)- und Dipentylphthalat, Bis(2-methoxyethyl)phthalat und Dicaprylphthalat (DCP).

Ein Beispiel für Trimellit(h)säureester mit (überwiegend) linearen $C_6$- bis $C_{11}$-Alkoholen ist Tris(2-ethylhexyl)trimellitat (TOTM).

Acyclische aliphatische Dicarbonsäureester sind zum Beispiel Ester der Adipinsäure wie Bis(2-ethylhexyl)adipat (Dioctyladipat, DOA), Bis(8-methylnonyl)adipat (Diisodecyladipat, DIDA), Dibutyldecandioat (Dibutylsebacat, DBS), Bis(2-ethylhexyl)decandioat (Dioctylsebacat, DOS; Ein Beispiel für einen cyclischen aliphatischen Dicarbonsäureester ist 1,2-Cyclohexandicarbonsäurediisononylester (DINCH).

Beispiele für Polymerweichmacher sind Polyester aus Adipin-, Decandi-, Nonandi- und Phthalsäure mit Diolen wie Butan-1,3-diol, Propan-1,2-diol, Butan-1,4-diol, Hexan-1,6-diol und anderen ($M_r$ ca. 1800—13000 g/mol).

Phosphorsäureester, kurz Phosphate genannt, sind eine weitere Gruppe. Beispielhaft zu nennen wären hier Trikresylphosphat (TCF), Triphenylphosphat (TPP), Diphenylkresylphosphat (DPCF), (2-Ethylhexyl)diphenylphosphat (Diphenyloctylphosphat, DPOF) , Tris(2ethylhexyl)phosphat (TOF) und Tris(2-butoxyethyl)phosphat.

Butyloleat oder Butylstearat sind Beispiele für Fettsäureester, die eine weitere Gruppe darstellen. Weitere Beispiele für diese Gruppe sind Methyl- und Butylester der acetylierten Ricinolfettsäure und Fettsäureglycolester sowie Triethylenglycol-bis(2-ethylbutyrat).

Citronensäureester sind Beispiele für die Gruppe der Hydroxycarbonsäureester. Weitere Beispiele sind Weinsäureester und Milchsäureester.

Eine weitere Gruppe von Weichmachern sind Epoxyweichmacher, zum Beispiel epoxidierte Fettsäure-Derivate, insbesondere Triacylglycerole und Monoester. Auch einige der zuvor genannten Epoxidharze lassen sich in die Gruppe der Weichmacher einordnen. Weiterhin zu nennen wären noch Polyamidweichmache, zum Beispiel Benzolsulfonamide oder Methylbenzolsulfonamide. Eine weitere Gruppe von Weichmachern sind Alkylsulfonsäureester des Phenols (ASE). Auch Mineralöle sind im Sinne dieser Schrift als Weichmacher zu betrachten. Bevorzugt sind naphthenische Mineralöle. Auch das bereits separat aufgeführte Bitumen ließe sich in die Rubrik der Weichmacher einordnen.

In einer optionalen Ausführungsform enthält der chemisch vorvernetzte, thermisch vulkanisierbare Haftklebstoff weitere Hilfs- und Zusatzstoffe wie zum Beispiel rheologische Additive, Alterungsschutzmittel (Antioxidantien), Lichtschutzmittel oder UV-Absorber. Beispiele für rheologische Additive sind pyrogene, hydrophobierte oder nicht hydrophobierte Kieselsäuren, Schichtsilikate (Bentonite), hochmolekulare Polyamidpulver oder Rizinusölderivat-Pulver. Die genannten rheologischen Additive können auch in die Rubrik der Füllstoffe eingeordnet werden. Zu den geeigneten Antioxidantien zählen zum Beispiel sterisch gehinderte Phenole, insbesondere Pentaerythritol tetrakis(3-(3,5-di-tert-butyl-4-hydroxyphenyl)propionate) (CAS-Nummer: 6683-19-8), Hydrochinon-Derivate, Amine, organische Schwefelverbindungen oder organische Phosphorverbindungen.

Als Lichtschutzmittel finden zum Beispiel die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verbindungen Verwendung.

Vorvernetzung

Das schmelzbare, haftklebrige, hydroxyl-funktionalisierte Polybutadien-Polyurethan-Prepolymerwird erfindungsgemäß chemisch vorvernetzt. Die chemische Vorvernetzung (erste chemische Vernetzung) erfolgt bevorzugt durch chemische Umsetzung des schmelzbaren, haftklebrigen, hydroxyl-funktionalisierten Polybutadien-Polyurethan-Prepolymers mit einem oder mehreren aliphatischen oder alicyclischen Polyisocyanaten Unter aliphatischen oder alicyclischen Polyisocyanaten werden hier die gleichen Di- und höherwertigen Isocyanate verstanden, wie sie bereits im Zusammenhang mit der Beschreibung der Herstellung des schmelzbaren, haftklebrigen, hydroxyl-funktionalisierte Polybutadien-Polyurethan-Prepolymers erläutert wurden.

Erfindungsgemäß werden zur Vorvernetzung aliphatische und/oder alicyclische Polyisocyanate mit einer Isocyanat-Funktionalität von drei oder größer drei eingesetzt, insbesondere überwiegend oder ausschließlich eingesetzt..

Das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen liegt vorteilfaft zwischen größer oder gleich 0,5 und kleiner oder gleich 1,3, bevorzugt zwischen größer oder gleich 0,6 und kleiner oder gleich 1,2, besonders bevorzugt zwischen größer oder gleich 0,7 und kleiner oder gleich 1,1, ganz besonders bevorzugt zwischen größer oder gleich 0,8 und kleiner oder gleich 1,0. Die Gesamtzahl der in die Herstellung des chemisch vorvernetzten, thermisch vulkanisierbaren Haftklebstoffes eingebrachten jeweiligen funktionellen Gruppen bezieht sich auf die Summe der zur Herstellung des Prepolymers und zu dessen Vorvernetzung eingebrachten jeweiligen funktionellen Gruppen.

Wie bereits erwähnt kann die Umsetzung des schmelzbaren, haftklebrigen, hydroxyl-funktionalisierten Polybutadien-Polyurethan-Prepolymers mit dem optionalen aliphatischen oder alicyclischen Diisocyanat und dem erfindungsgemäßen aliphatischen oder alicyclischen Polyisocyanat mit einer Isocyanat-Funktionalität von drei oder größer drei sowohl kontinuierlich als auch batchweise erfolgen. Die Zudosierung des Schwefels und der optionalen Vulkanisationsbeschleuniger, Füllstoffe sowie der weiteren Stoffe kann vorab, zeitgleich mit den Isocyanaten oder nach Zugabe der Isocyanate in das Reaktionssystem erfolgen.

Bei der kontinuierlichen Verfahrensführung - wie oben definiert - bei der Zumischung der Polyisocyanate wird die allmähliche chemische Umsetzung zum chemisch vorvernetzten, haftklebrigen Polybutadien-Polyurethan durch das Mischen gestartet und schreitet dann voran Wie erwähnt erfolgt das kontinuierliche Mischen des geschmolzenen, haftklebrigen, hydroxyl-funktionalisierten Polybutadien-Polyurethan-Prepolymers mit den Polyisocyanaten - sowie gegebenenfalls zeitgleich dem Schwefel und den optionalen Vulkanisationsbeschleunigern, Füllstoffen sowie den weiteren Stoffen - bevorzugt lösemittelfrei in einem kontinuierlich arbeitenden Mischaggregat, vorzugsweise in einem Extruder, insbesondere einem Doppelschnecken-, Planetwalzen- oder Ringextruder, oder in einer beheizbaren Zweikomponenten-Misch- und Dosieranlage. Kaskadenschaltungen aus kontinuierlich oder auch diskontinuierlich arbeitenden Mischaggregaten sind ebenfalls geeignet. Das Mischaggregat ist vorzugsweise so konzipiert, dass bei einer kurzen Verweilzeit im Mischaggregat eine gute Durchmischung gewährleistet ist. Die Zugabe des geschmolzenen, haftklebrigen, hydroxyl-funktionalisierten Polybutadien-Polyurethan-Prepolymers und der Polyisocyanate können in einem Extruder an gleicher Stelle oder auch an unterschiedlichen Stellen erfolgen, vorzugsweise in druckfreien Zonen. Günstig ist, wenn die Polyisocyanate fein verteilt dem haftklebrigen, hydroxyl-funktionalisierten Polybutadien-Polyurethan-Prepolymer zugesetzt werden, beispielsweise als Aerosol oder in feinen Tröpfchen.

Das haftklebrige, hydroxyl-funktionalisierte Polybutadien-Polyurethan-Prepolymer kann auch in einer Zweikomponenten-Misch- und Dosieranlage beheizt und im geschmolzenen Zustand als Komponente A temperiert gefördert werden, während die Polyisocyanate als Komponente B gefördert werden. Die kontinuierliche Durchmischung erfolgt dann in einem dynamischen Mischkopf oder bevorzugt in einem Statik-Mischrohr oder einer Kombination aus dynamischem und statischem Mischverfahren.

Wie bereits angeführt, können optional während der kontinuierlichen Durchmischung des haftklebrigen, hydroxyl-funktionalisierten Polybutadien-Polyurethan-Prepolymers in der Schmelze mit den Polyisocyanaten weitere Rezepturierungsbestandteile wie zum Beispiel Schwefel, Füllstoffe, Mikrokugeln, Harze, insbesondere klebrig machende Kohlenwasserstoffharze, Weichmacher, Alterungsschutzmittel (Antioxidantien), Lichtschutzmittel, UV-Absorber, rheologische Additive sowie sonstige Hilfs- und Zusatzstoffe zugemischt werden.

Während und nach der kontinuierlichen Durchmischung des haftklebrigen, hydroxyl-funktionalisierten Polybutadien-Polyurethan-Prepolymers in der Schmelze mit den Polyisocyanaten schreitet die chemische Umsetzung zum chemisch vorvernetzten, haftklebrigen Polybutadien-Polyurethan kontinuierlich voran. Die Reaktionsgeschwindigkeit ist unkatalysiert oder bei maßvoller Katalyse mit einem geeigneten Katalysator ausreichend langsam, so dass eine thermoplastische Verarbeitung noch eine Zeit lang möglich ist. Während dieser Zeit, die im Regelfall im Minutenbereich liegt, kann das kontinuierliche Ausformen der warmen oder heißen, chemisch reagierenden Mischung zu einem Film erfolgen. Nach dem Ausformen lässt man den Film auf Raumtemperatur abkühlen, wodurch er sich sofort, unabhängig vom Fortschritt der chemischen Reaktion verfestigt. Die Reaktion zum chemisch vorvernetzten, haftklebrigen Polybutadien-Polyurethan schreitet auch bei Raumtemperatur bis zum Erreichen der Vollständigkeit weiter voran. Die chemische Reaktion zum chemisch vorvernetzten, haftklebrigen Polybutadien-Polyurethan ist bei Raumtemperatur im Regelfall nach ein bis zwei Wochen vollständig abgeschlossen. Nach vollständiger Umsetzung ist das entstandene chemisch vorvernetzte, haftklebrige Polybutadien-Polyurethan im Regelfall chemisch so vernetzt, dass es nicht mehr schmelzbar ist.

Das kontinuierliche Ausformen der warmen oder heißen, chemisch reagierenden Mischung erfolgt bevorzugt mittels eines Walzenauftrags oder einer Extrusionsdüse, kann aber auch mit anderen Auftragsverfahren, wie zum Beispiel einem Kommarakel erfolgen. Der ausgeformte Film wird kontinuierlich auf ein zulaufendes, bahnförmiges Trägermaterial aufgetragen und anschließend aufgewickelt. Das zulaufende, bahnförmige Trägermaterial kann zum Beispiel eine antiadhäsiv ausgerüstete Folie oder ein antiadhäsiv ausgerüstetes Papier sein. Es kann sich aber auch um ein mit einem Haftklebstoff oder einer Funktionsschicht vorbeschichtetes Material oder um einen Träger oder um beliebige Kombinationen der genannten bahnförmigen Materialien handeln.

Der Fachmann muss damit rechnen, dass nach Zudosierung des aliphatischen oder alicyclischen Polyisocyanats mit einer Isocyanat-Funktionalität von drei oder größer drei zu dem schmelzbaren, haftklebrigen, hydroxyl-funktionalisierten Polybutadien-Polyurethan-Prepolymer in der Schmelze, also bei Temperaturen oberhalb Raumtemperatur, sofortige Gelierung einsetzt, sich also sofort vernetzte Strukturen ausbilden, die eine weitere Durchmischung und anschließende Beschichtung und Ausformung zum Film unmöglich machen. Dies gilt erst recht, wenn das Prepolymer bereits Verzweigungen enthält. Dann muss der Fachmann auch nach Zudosierung des optionalen aliphatischen oder alicyclischen Diisocyanats zu diesem Prepolymer damit rechnen. Dass dies nicht eintritt, war für den Fachmann nicht vorhersehbar.

Da durch den Hotmelt-Charakter des schmelzbaren, haftklebrigen, hydroxyl-funktionalisierten Polybutadien-Polyurethan-Prepolymers die Aufwickelfähigkeit des Films nicht an das Voranschreiten einer chemischen Reaktion oder die Abdampfgeschwindigkeit eines Lösungsmittels gekoppelt ist, sondern nur an die Schnelligkeit der Abkühlung des Films gebunden ist, können sehr hohe Beschichtungsgeschwindigkeiten erzielt werden, was einen wirtschaftlichen Vorteil darstellt. Es entfallen außerdem die Kosten für die Beheizung einer Wärmekanalstrecke sowie die Kosten für eine Lösemittelverbrennung oder eine Lösemittelrückgewinnung. Da das schmelzbare, haftklebrige, hydroxyl-funktionalisierte Polybutadien-Polyurethan-Prepolymer lösemittelfrei hergestellt werden kann, entstehen auch keine Kosten für eine Lösemittelverbrennung oder -rückgewinnung.

Durch die Möglichkeit der Lösemittelfreiheit können im Prinzip beliebig dicke Polymerfilme hergestellt werden, ohne dass es zur Blasen- oder Schaumbildung durch abdampfendes Lösungsmittel kommt.

Mit dem erfindungsgemäßen Verfahren können insbesondere sehr homogene (homogen vorvernetzte) dicke Schichten und homogen vorvernetzte dreidimensionale Formkörper hergestellt werden. Es lassen sich hervorragend homogene Schichtdicken von über 100 $\mu$m, auch über 1000 $\mu$m darstellen.

Das vorstehend dargestellte Verfahren eignet sich insbesondere zur Herstellung viskoelastischer, chemisch vorvernetzter, thermisch vulkanisierbarer Klebebänder (Einschichtaufbauten oder auch Mehrschichtaufbauten, etwa mit zwei oder drei Schichten) mit Schichtdicken zwischen 100 $\mu$m und 10000 $\mu$m, bevorzugt zwischen 200 $\mu$m und 5000 $\mu$m, mehr bevorzugt zwischen 300 $\mu$m und 2500 $\mu$m.

Da das kontinuierliche Zumischen der die chemische Vorvernetzung herbeiführenden Polyisocyanate zum schmelzbaren, haftklebrigen, hydroxyl-funktionalisierten Polybutadien-Polyurethan-Prepolymer erst kurz vor dem Ausformen der Mischung zum Film erfolgt, ist keine Blockierung reaktiver Gruppen und somit kein Einsatz von Blockierungsmitteln notwendig. Somit werden auch zu keinem Zeitpunkt im Film verbleibende und eventuell in der späteren Anwendung störende Blockierungsmittel freigesetzt.

Das schmelzbare, haftklebrige, hydroxyl-funktionalisierte Polybutadien-Polyurethan-Prepolymer kann auch in einem Lösungsmittel oder einem Lösungsmittelgemisch hergestellt oder gelagert werden. Ebenso kann es in einem Lösungsmittel oder Lösungsmittelgemisch mit den Polyisocyanaten umgesetzt werden und aus der Lösung heraus während des Beginns der Umsetzungsphase zwischen dem Prepolymer und den Polyisocyanaten beschichtet werden. Geeignete Lösungsmittel sind beispielsweise Methylethylketon, Aceton, Essigsäurebutylester, Dekalin oder Tetrahydrofuran. Überraschend wurde gefunden, dass die Topfzeit der reaktiven Mischung in geeigneten Lösungsmitteln, insbesondere in Aceton, unkatalysiert oder bei maßvoller Katalyse mindestens mehrere Stunden, meist sogar mehrere Tage beträgt. Somit bietet sich für die Umsetzung eines schmelzbaren, haftklebrigen, hydroxyl-funktionalisierten Polybutadien-Polyurethan-Prepolymern mit Polyisocyanaten in einem Lösungsmittel ein batchweises Herstellungsverfahren an.

Da die Vorvernetzung nicht von außen durch Strahlung wie zum Beispiel UV- oder ESH-Strahlung initiiert wird, wird ein Polymeraufbau mit durchgehend homogenen Eigenschaften auch dann erreicht, wenn der hergestellte Film sehr dick ist oder wenn der Film größere Mengen an Füllstoffen enthält. Füllstoffe sind in größeren Mengen von zum Beispiel 50 % und mehr einarbeitbar.

Dadurch, dass das schmelzbare, haftklebrige, hydroxyl-funktionalisierte Polybutadien-Polyurethan-Prepolymer in aller Regel eine verglichen mit vielen anderen thermoplastisch verarbeitbaren (Pre)polymeren geringe gewichtsgemittelte mittlere Molmasse hat, ist es bei vergleichsweise niedrigen Temperaturen schmelzbar und thermoplastisch verarbeitbar. Die Temperaturen können überraschenderweise so niedrig gehalten werden, dass ein Anspringen der Schwefelvulkanisation oder anderer die Lagerstabilität herabsetzender Prozesse während der Herstellung des chemisch vorvernetzten, thermisch vulkanisierbaren Haftklebstoffs oder des diesen Haftklebstoff enthaltenden Klebebandes nicht eintritt. Die Temperatur des Compounds bestehend aus dem chemisch reagierenden Gemisch aus dem schmelzbaren, haftklebrigen, hydroxyl-funktionalisierten Polybutadien-Polyurethan-Prepolymer, dem optionalen aliphatischen oder alicyclischen Diisocyanat und dem erfindungsgemäßen aliphatischen oder alicyclischen Polyisocyanat mit einer Isocyanat-Funktionalität von drei oder größer drei, dem gemahlenen Schwefel und den optionalen weiteren Stoffen überschreitet während der Herstellung nicht 100 °C, bevorzugt nicht 90 °C, besonders bevorzugt liegt sie stets unter 80 °C.

Während und nach dem Ausformen der Schmelze zu einem Film kommt es in aller Regel nicht zu klebtechnisch relevanten Unterschieden des Films in Längs- und Querrichtung.

Klebeband

Hierin offenbart wird weiterhin ein haftklebriger, chemisch vorvernetzter, thermisch vulkanisierbarer Formkörper, bevorzugt eine haftklebrige, chemisch vorvernetzte, thermisch vulkanisierbare Schicht, umfassend zumindest ein chemisch vorvernetztes, haftklebriges Polybutadien-Polyurethan und gemahlenen Schwefel, wie es in zumindest einem der Ansprüche, insbesondere in Anspruch 1, und/oder wie es vorstehend in dieser Schrift beschrieben wird. Ein derartiger Formkörper kann durch Ausformung des sich mit den Polyisocyanaten umsetzenden schmelzbaren, haftklebrigen, hydroxyl-funktionalisierten Polybutadien-Polyurethan-Prepolymers während der Umsetzungsphase erhalten werden. Ebenfalls offenbart wird ein Klebeband, umfassend zumindest eine chemisch vorvernetzte, thermisch vulkanisierbaren Haftklebstoffschicht, enthaltend zumindest einen chemisch vorvernetzten, thermisch vulkanisierbaren Haftklebstoff wie er in zumindest einem der Ansprüche, insbesondere in Anspruch 1, und/oder wie er vorstehend in dieser Schrift beschrieben wird.

Die vorliegende Offenbarung betrifft somit auch ein Klebeband, das auf einer Seite oder auf beiden Seiten zumindest teilweise mit dem erfindungsgemäßen Haftklebstoff beschichtet ist. Dabei kann es sich bei dem Klebeband auch um ein Transferklebeband handeln. Ein Klebeband ermöglicht eine besonders einfache und präzise Verklebung und ist daher besonders geeignet.

Der allgemeine Ausdruck "Klebeband" umfasst ein Trägermaterial, welches ein- oder beidseitig jeweils zumindest teilweise mit einem (Haft)klebstoff versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer zu klebenden Anordnung), andere Formkörper, Mehrschichtanordnungen und dergleichen. Dabei sind für verschiedene Anwendungen unterschiedlichste Träger wie zum Beispiel Folien, Gewebe, Vliese und Papiere mit den Klebstoffen kombinierbar. Des Weiteren umfasst der Ausdruck "Klebeband" auch so genannte "Transferklebebänder", das heißt ein Klebeband ohne Träger. Bei einem Transferklebeband ist der Klebstoff vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, der Klebstoff appliziert und dann der zweite Liner entfernt. Der Klebstoff kann so direkt zur Verbindung zweier Oberflächen verwendet werden.

Es sind aber auch Klebebänder möglich, bei denen nicht mit zwei Linern sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Für bestimmte Anwendungen kann es gewünscht sein, dass eine Seite oder beide Seiten des Klebebandes nicht vollständig mit Klebstoff versehen ist bzw. sind, sondern teilweise klebstofffreie Bereiche vorgesehen sind, um z.B. Aussparungen in den zu beklebenden Oberflächen zu berücksichtigen.

Als Trägermaterial eines Klebebandes werden vorliegend bevorzugt Polymerfolien, Folienverbunde oder mit organischen und/oder anorganischen Schichten versehene Folien oder Folienverbunde eingesetzt, wobei Folien, insbesondere dimensionsstabile Kunststoff- oder Metallfolien, bevorzugt werden. Derartige Folien/Folienverbunde können aus allen gängigen zur Folienherstellung verwendeten Kunststoffen bestehen, beispielhaft aber nicht einschränkend erwähnt seien:

Polyethylen, Polypropylen - insbesondere das durch mono- oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Polyesterfolien weisen den Vorteil auf, dass sie für Temperaturstabilität sorgen und eine erhöhte mechanische Stabilität einbringen. Ganz besonders bevorzugt besteht daher eine Trägerschicht in einem erfindungsgemäßen Liner aus einer Polyesterfolie, beispielsweise aus biaxial verstrecktem Polyethylenterephthalat.

Bei doppelseitig (selbst)klebenden Klebebändern können als obere und untere Schicht erfindungsgemäße Klebstoffe gleicher oder verschiedener Art und/oder gleicher oder verschiedener Schichtdicke zur Anwendung kommen. Der Träger kann dabei auf einer oder beiden Seiten dem Stand der Technik entsprechend vorbehandelt sein, so dass beispielsweise eine Verbesserung der Klebstoffverankerung erzielt wird. Die Haftklebstoffschichten können optional mit Trennpapieren oder Trennfolien eingedeckt werden. Alternativ kann auch nur eine Klebstoffschicht mit einem doppelseitig trennenden Liner eingedeckt sein.

In einer Variante ist in dem doppelseitig (selbst)klebenden Klebeband ein erfindungsgemäßer Haftklebstoff vorgesehen sowie ein beliebiger weiterer, zum Beispiel ein solcher, der besonders gut auf einem Abdecksubstrat haftet oder eine besonders gute Repositionierbarkeit zeigt.

Die Dicke der erfindungsgemäßen Haftklebstoffschicht, die entweder als Transferklebeband oder auf einem flächigen Gebilde beschichtet vorliegt, beträgt bevorzugt zwischen 10 μm und 5000 μm, weiter bevorzugt zwischen 100 μm und 4000 μm und besonders bevorzugt zwischen etwa 200 μm und 3000 μm.

Für doppelseitige Klebebänder gilt für die Klebstoffe ebenfalls, dass die Dicke der einzelnen Haftklebstoff-schicht(en) bevorzugt 10 μm und 5000 μm, weiter bevorzugt zwischen 100 μm und 4000 μm und besonders bevorzugt zwischen etwa 200 μm und 3000 μm liegt.

Klebebänder, die ein- oder beidseitig mit Klebstoffen beschichtet sind, werden am Ende des Herstellungsprozesses zumeist zu einer Rolle in Form einer archimedischen Spirale oder kreuzgespult aufgewickelt. Um bei doppelseitig klebenden Klebebändern zu verhindern, dass die Klebstoffe miteinander in Kontakt kommen, oder um bei einseitig klebenden Klebebändern eine Verklebung der Klebstoffe auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebstoffen (Transferklebeband) und Klebebandabschnitten (zum Beispiel Etiketten) eingesetzt.

Der chemisch vorvernetzte, thermisch vulkanisierbare Haftklebstoff der vorliegenden Erfindung wird bevorzugt als Schicht zur Herstellung eines thermisch vulkanisierbaren, haftklebrigen Klebebandes oder Dichtungsbandes, sowie daraus hergestellter Formkörper oder Stanzlinge verwendet, wobei das thermisch vulkanisierbare, haftklebrige Klebeband oder Dichtungsband zusätzliche hafklebrige und/ oder nicht haftklebrige Schichten, Trägerfolien oder -filme, haftvermittelnde Schichten, Release-Schichten oder sonstige Funktionsschichten sowie auch mehrere thermisch vulkanisierbare oder auf andere Art härt- oder vernetzbare Klebebandschichten enthalten kann und mit einem Trennliner ausgerüstet sein kann, der ein- oder beidseitig silikonisiert sein kann.

Verwendung

Der erfindungsgemäße, chemisch vorvernetzte, thermisch vulkanisierbare Haftklebstoff sowie diesen Haftklebstoff enthaltende, thermisch vulkanisierbare Klebebänder zeigen eine hervorragende Kombination von Produkteigenschaften, die auch für den Fachmann derartig nicht vorherzusehen war.

Bei der bestimmungsgemäßen Verwendung kann zwischen drei Phasen differenziert werden, der Phase vor der thermischen Vulkanisation, der Phase während der thermischen Vulkanisation und der Phase nach der thermischen Vulkanisation. Überraschend gelang es, viele der für die jeweiligen Phasen gewünschten, sich teilweise widersprechenden Produkteigenschaften in einem Produkt zu vereinen und gleichzeitig auch noch Spielraum für variable Gestaltungsmöglichkeiten am erfindungsgemäßen Haftklebstoff zu lassen.

Vor der thermischen Vulkanisation ist der erfindungsgemäße, chemisch vorvernetzte, thermisch vulkanisierbare Haftklebstoff bevorzugt stark haftklebrig und hat gleichzeitig eine hohe Scherfestigkeit. In Klebkraft-Messungen werden auf Stahl typische Schälwerte größer 3,0, bevorzugt zwischen 6,0 und 11,0 N/cm erzielt. Im statischen Schertest liegen die typischen Haltezeiten bei einer Scherbelastung von 500 g und einer Verklebungsfläche von 13 x 20 mm$^2$ auf Stahl bei größer 10.000, bevorzugt größer 20.000 Minuten.

Während der thermischen Vulkanisation erweist sich der erfindungsgemäße, chemisch vorvernetzte, thermisch vulkanisierbare Haftklebstoff als sehr scherfest. Im statischen Schertest während des Aufheizens auf 200 °C und im weiteren Verlauf bis zum Abschluss der Vulkanisation (Aushärtung) wird bei Verklebung von Stahl bei einer Verkle-bungsfläche von 13x25 mm$^2$ und einer Scherlast von 200 g typischerweise ein Abrutschen von lediglich 1-3 mm beobachtet. Bei geringeren Scherlasten ist die Abrutschstrecke typischerweise 0 mm.

Nach der thermischen Vulkanisation ist der erfindungsgemäße, chemisch vorvernetzte, thermisch vulkanisierbare Haftklebstoff ausgehärtet. Die erzielbaren Klebfestigkeiten sind dabei innerhalb einer weiten Spanne anforderungsgerecht einstellbar. Sie decken beispielsweise im Zugscherversuch den Bereich von größer 0 bis mindestens 30 N/mm$^2$ ab.

Die Klebfestigkeit wird dabei in erster Linie über den Anteil an Schwefel im Verhältnis zum Polybutadien-Polyurethan gesteuert. Weitere Steuerungsmöglichkeiten ergeben sich aus den optionalen Formulierungsmöglichkeiten.

Der erfindungsgemäße Haftklebstoff ist gezielt so einstellbar, dass er im Temperaturbereich zwischen 130 °C und 230 °C innerhalb kurzer Zeit aushärtet. Kurze Zeit heißt insbesondere bis zu 30 Minuten, bevorzugt zwischen ungefähr 5 und 30 Minuten, je nachdem ob ein Beschleunigersystem verwendet und welches Beschleunigersystem verwendet wird. Er ist dabei so einstellbar, dass während der Aushärtung eine so gute Haftung zum Substrat, auf dem der Klebstoff appliziert wurde, aufgebaut wird, dass es nach Vollendung der thermischen Vulkanisation zum Kohäsionsbruch innerhalb der Klebstoffschicht kommt, wenn zum Beispiel in einem Zugscherversuch in Anlehnung an DIN EN 1465 oder in einem Schälversuch versucht wird, die Klebstoffschicht vom Substrat zu entfernen.

Die Substrate, auf denen der Klebstoff bzw. das Klebeband appliziert wird, können typischerweise Stahlbleche sein, wie sie in Pulverlackierprozessen oder in Lackierprozessen in der Automobilindustrie verwendet werden. Diese können verzinkt oder nicht verzinkt sein. Auch andere Metallsorten, wie zum Beispiel Aluminium, kommen in Frage, insbesondere auch in unterschiedlichen Kombinationen. Es können aber auch lackierte oder vorbeschichtete Bleche, beispielsweise kataphoretisch tauchlackierte Bleche (KTL-Bleche) sein, wie sie in den Lackierstraßen der Automobilindustrie vorliegen. Geölte Bleche, wie sie im Automobilrohbau verwendet werden, kommen prinzipiell ebenfalls in Frage, jedoch müssen dann Abstriche hinsichtlich der Scherfestigkeit während der thermischen Vulkanisation in Kauf genommen werden, abhängig vom Grad der Beölung.

Dadurch, dass der erfindungsgemäße Haftklebstoff nach der thermischen Vulkanisation auf den typischen Substraten des Automobilrohbaus und der Lackierstraße gut haftet, und dadurch, dass die Klebfestigkeiten in einer weiten Spanne anforderungsgerecht eingestellt werden können, kann der erfindungsgemäße Haftklebstoff bzw. das erfindungsgemäße Klebeband sowohl zum Kleben als auch zum Abdichten verwendet werden, zum Beispiel zur Bördelfalzklebung, zur Bördelfalzabdichtung, zur Nahtabdichtung, zur Unterfütterungsklebung, zum Lochverschluss und vieles mehr.

Mit dem erfindungsgemäßen Haftklebstoff, insbesondere in Klebebandform bzw. als Teil eines Klebebandes, ist es hervorragend gelungen, die Aufgabe der Erfindung zu lösen. So wird ein thermisch innerhalb eines Temperaturbereiches von 130 °C bis 230 °C vulkanisierbarer und während der Aufheizphase zumindest unter geringer bis mittlerer Last scherfester Haftklebestoff angeboten, sowie ein Klebeband mit einem solchen Haftklebstoff bereitgestellt. Der thermisch vulkanisierbare Haftklebstoff beziehungsweise das diesen Haftklebstoff enthaltende Klebeband vollbringt während der Aufheizphase, in der die Vulkanisation noch nicht angesprungen ist und in der bei bekannten heißhärtbaren Klebstoffen üblicherweise eine Verflüssigung oder zumindest eine starke Erweichung einsetzt, eine gute Halteleistung, so dass eine Vorfixierung der zu verklebenden Bauteile entfallen kann. Bei der Anwendung in einer Klebefuge verflüssigt sich der Haftklebstoff - insbesondere in Klebebandform - während der thermischen Vulkanisation, also starker Erwärmung, nicht. Dementsprechend tritt er aus der Klebefuge nicht wesentlich aus.

Der thermisch vulkanisierbare Haftklebstoff beziehungsweise das entsprechende Klebeband können sehr vorteilhaft in Pulverlackierprozessen, zum Beispiel zur Verklebung unterschiedlicher Metalle, verwendet werden, sowie überall dort, wo hohe Einbrenntemperaturen zur Verfügung stehen. Dies ist insbesondere in den Lackierstraßen in der Automobilindustrie der Fall. Der thermisch vulkanisierbare Haftklebstoff beziehungsweise das entsprechende Klebeband können dort sowohl im Rohbau auf geölten Blechen als auch auf KTL-beschichteten oder anderweitig lackierten Blechen zum Kleben und/ oder Dichten verwendet werden, zum Beispiel zur Bördelfalzklebung, zur Bördelfalzabdichtung, zur Nahtabdichtung, zur Unterfütterungsklebung, zum Lochverschluss und vieles mehr. Die mit dem thermisch vulkanisierbaren Haftklebstoff beziehungsweise mit dem entsprechenden Klebeband erzielbaren Klebfestigkeiten sind innerhalb weiter Grenzen beliebig und anforderungsgerecht einstellbar. Die erzielbaren Zugscherfestigkeiten umfassen den Bereich zwischen größer 0 bis mindestens 30,0 N/mm$^2$. Der thermisch vulkanisierbare Haftklebstoff beziehungsweise das entsprechende Klebeband können innerhalb eines Temperaturbereichs von 40 °C bis 100 °C in einem Compoundier- und Extrusionsprozess hergestellt werden. Das Basiselastomer des thermisch vulkanisierbaren Haftklebstoffes liegt innerhalb dieses Temperaturbereichs als Schmelze vor. Während der Verarbeitung als Schmelze oder während der nachfolgenden Lagerung bei Temperaturen bis 40 °C kommt es nicht zum Anspringen der Vulkanisationsreaktion. Im Temperaturbereich von Raumtemperatur (20 °C - 25 °C, idealerweise 23 °C) bis 30 °C ist das Basiselastomer des thermisch vulkanisierbaren Haftklebstoffes genügend fest beziehungsweise hochviskos, so dass es als auf einen Trennliner oder als auf ein Trägermaterial beschichteter Film zu einer Rolle aufgewickelt werden kann, ohne dass es an der Seite herausfließt beziehungsweise durch den Wickeldruck herausgequetscht wird.

Besondere Ausführungen der Erfindung

Nachfolgend sollen zusammenfassend einige besonders vorteilhafte Ausführungsformen der Erfindung sowie besonders vorteilhafte erfindungsgemäße Verfahrensvarianten zusammengefasst werden, ohne sich hierdurch im Erfindungsgedanken beschränken zu wollen. Die jeweils genanten Ausführungs- und Verfahrensvarianten können zudem mit den weiteren Merkmalen der Erfindung, wie sie in dieser Schrift beschrieben sind, kombiniert werden.

Ausführungsform 1 betrifft einen thermisch vulkanisierbaren Haftklebstoff, umfassend ein chemisch vorvernetztes, haftklebriges Polybutadien-Polyurethan und gemahlenen Schwefel, wobei weiterhin das chemisch vorvernetzte, haftklebrige Polybutadien-Polyurethan das chemische Umsetzungsprodukt aus zumindest folgenden Ausgangsstoffen ist oder umfasst:

a) zumindest ein schmelzbares, haftklebriges, hydroxyl-funktionalisiertes Polybutadien-Polyurethan-Prepolymer und

b) zumindest ein aliphatisches oder alicyclisches Polyisocyanat mit einer Isocyanat-Funktionalität von drei oder größer drei.

Ausführungsform 2 betrifft einen thermisch vulkaniserbaren Haftklebbstoff mit den Merkmalen gemäß Ausführungsform 1, wobei weiterhin das Polybutadien-Polyurethan-Prepolymer das Umsetzungsprodukt eines oder mehrerer Polybutadien-Polyole und/oder deren Derivate mit einem oder mehreren aliphatischen und/oder alicyclischen Polyisocyanaten ist.

Ausführungsform 3 betrifft einen thermisch vulkanisierbaren Haftklebstoff mit den Merkmalen gemäß Ausführungsform 1 und/oder mit den Merkmalen gemäß Ausführungsform 2, wobei weiterhin das schmelzbare, haftklebrige, hydroxyl-funktionalisierte Polybutadien-Polyurethan-Prepolymer das chemische Umsetzungsprodukt zumindest eines Polybutadien-Diols mit einer zahlengemittelten, mittleren Hydroxyl-Funktionalität im Bereich von 1,5 bis 2, bevorzugt 1,8 bis 2, und/oder dessen Derivat, zumindest eines Kettenverlängerers mit einer Hydroxyl-Funktionalität von zwei und einer Molmasse von kleiner oder gleich 300 g/mol und optional zumindest eines Polybutadien-Polyols mit einer zahlengemittelten, mittleren Hydroxyl-Funktionalität zwischen größer 2,0 und kleiner oder gleich 3,0 mit zumindest einem aliphatischen oder alicyclischen Diisocyanat und/oder zumindest einem aliphatischen oder alicyclischen Polyisocyanat mit einer Isocyanat-Funktionalität von drei oder größer drei umfasst.

Ausführungsform 4 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3, wobei weiterhin der anzahlmäßige Anteil der zur Bildung des schmelzbaren, haftklebrigen, hydroxyl-funktionalisierten Polybutadien-Polyurethan-Prepolymers eingebrachten Hydroxylgruppen, die von dem zumindest einen Kettenverlängerer stammen, zwischen größer oder gleich 20,0 % und kleiner oder gleich 80,0 %, bevorzugt zwischen größer oder gleich 30,0 % und kleiner oder gleich 70,0 % liegt.

Ausführungsform 5 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4, wobei der anzahlmäßige Anteil der zur Bildung des schmelzbaren, haftklebrigen, hydroxyl-funktionalisierten Polybutadien-Polyurethan-Prepolymers eingebrachten Hydroxylgruppen, die von dem optionalen, zumindest einen Polybutadien-Polyol mit einer zahlengemittelten, mittleren Funktionalität zwischen größer 2,0 und kleiner oder gleich 3,0 stammen, zwischen größer oder gleich 0,0 % und kleiner oder gleich 50%, bevorzugt zwischen größer oder gleich 10,0 % und kleiner oder gleich 40%, besonders bevorzugt zwischen größer oder gleich 15,0 % und kleiner oder gleich 30% beträgt.

Ausführungsform 6 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5, wobei weiterhin das aliphatische oder alicyclische Diisocyanat zur Herstellung des Polybutadien-Polyurethan-Prepolymers Isophorondiisocyanat und/oder Dicyclohexylmethan-4,4'-diisocyanat ist oder umfasst.

Ausführungsform 7 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6, wobei weiterhin das aliphatische oder alicyclische Polyisocyanat zur Herstellung des Polybutadien-Polyurethan-Prepolymers eine trimerisierte oder höher oligomerisierte Form des Hexamethylendiisocyanats und/ oder des Isophorondiisocyanats ist oder umfasst.

Ausführungsform 8 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7, wobei weiterhin das Verhältnis der Gesamtanzahl der in die Herstellung des Polybutadien-Polyurethan-Prepolymers sowie in dessen Umsetzung, also der Vorvernetzungsreaktion, eingebrachten Isocyanatgruppen zur Gesamtanzahl der eingebrachten Hydroxylgruppen zwischen größer oder gleich 0,5 und kleiner oder gleich 1,3, bevorzugt zwischen größer oder gleich 0,6 und kleiner oder gleich 1,2, besonders bevorzugt zwischen größer oder gleich 0,7 und kleiner oder gleich 1,1, ganz besonders bevorzugt zwischen größer oder gleich 0,8 und kleiner oder gleich 1,0 liegt.

Ausführungsform 9 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8, wobei weiterhin das optionale aliphatische oder alicyclische Diisocyanat zur Umsetzung mit dem schmelzbaren, haftklebrigen, hydroxyl-funktionalisierten Polybutadien-Polyurethan-Prepolymer Isophorondiisocyanat und/oder Dicyclohexylmethan-4,4'-diisocyanat ist oder umfasst.

Ausführungsform 10 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9, wobei weiterhin das aliphatische oder alicyclische Polyisocyanat zur Umsetzung mit dem schmelzbaren, haftklebrigen, hydroxyl-funktionalisierten Polybutadien-Polyurethan-Prepolymer eine trimerisierte oder höher oligomerisierte Form des Hexamethylendiisocyanats und/ oder des Isophorondiisocyanats ist oder umfasst.

Ausführungsform 11 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10, wobei der thermisch vulkanisierbare Haftklebstoff weiterhin eine oder mehrere Substanzen umfasst, die ausgewählt sind aus der Liste bestehend aus Vulkanisationsbeschleunigern, Füllstoffen, Epoxidharzen, Klebrigmacherharzen, Bitumen, Weichmachern, Ölen.

Ausführungsform 12 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11, wobei der thermisch vulkanisierbare Haftklebstoff weiterhin Alterungsschutzmittel und/oder weitere Hilfs- und Zusatzstoffe umfasst.

Ausführungsform 13 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11 und/oder mit den Merkmalen gemäß Ausführungsform 12, wobei der thermisch vulkanisierbare Haftklebstoff zumindest einen Füllstoff umfasst, nämlich gemahlenes Calciumoxid, wobei dessen Gewichtsanteil an dem thermisch vulkanisierbaren Haftklebstoff zwischen 5,0 und 30,0 Gew.-%, bevorzugt zwischen 10,0 und 20,0 Gew.-% beträgt.

Ausführungsform 14 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11 und/oder mit den Merkmalen gemäß Ausführungsform 12 und/oder mit den Merkmalen gemäß Ausführungsform 13, wobei der thermisch vulkanisierbare Haftklebstoff zumindest einen Füllstoff umfasst, nämlich gemahlenen Kreide und/oder gemahlenes Talkum und/oder gemahlenes Kaolin, wobei der Gewichtsanteil dieser Füllstoffe an dem thermisch vulkanisierbaren Haftklebstoff zusammen zwischen 10,0 und 50,0 Gew.-%, bevorzugt zwischen 20,0 und 40,0 Gew.-% beträgt.

Ausführungsform 15 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11 und/oder mit den Merkmalen gemäß Ausführungsform 12 und/oder mit den Merkmalen gemäß Ausführungsform 13 und/oder mit den Merkmalen gemäß Ausführungsform 14, wobei der thermisch vulkanisierbare Haftklebstoff zumindest ein Epoxidharz umfasst, nämlich das Reaktionsprodukt aus Bisphenol-A und Epichlorhydrin, bevorzugt das Reaktionsprodukt aus Bisphenol-A und Epichlorhydrin mit einem zahlengemittelten mittleren Molekulargewicht von kleiner oder gleich 700 g/mol (CAS-Nr. 25068-38-6).

Ausführungsform 16 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11 und/oder mit den Merkmalen gemäß Ausführungsform 12 und/oder mit den Merkmalen gemäß Ausführungsform 13 und/oder mit den Merkmalen gemäß Ausführungsform 14 und/oder mit den Merkmalen gemäß Ausführungsform 15, wobei der thermisch vulkanisierbare Haftklebstoff einen oder mehrere Vulkanisationsbeschleuniger umfasst, nämlich zumindest einen Vulkanisationsbeschleuniger aus der Substanzklasse der Mercapto-Beschleuniger und/oder einen Vulkanisationsbeschleuniger aus der Substanzklasse der Thiuram-Beschleuniger und/oder einen Vulkanisationsbeschleuniger aus der Substanzklasse der Dithiocarbamat-Beschleuniger.

Ausführungsform 17 betrifft einen thermisch vulkanisierbaren Haftklebstoff mit den Merkmalen gemäß Ausführungsform 16, wobei als Vulkanisationsbeschleuniger Di(benzothiazyl)disulfid (MBTS, CAS-Nr.: 120-78-5) und/oder Tetrabenzyldiuramdisulfid (TBzTD, CAS-Nr.: 10591-85-2) und/oder Zink-bis(dibenzyldithiocarbamat) (ZBEC, CAS-Nr.: 14726-36-4) oder eine Kombination aus zweien oder allen dieser Stoffe eingesetzt werden, wobei bevorzugt ausschließlich einer, zwei oder alle der vorgenannten Stoffe als Vulkanisationsbeschleuniger eingesetzt werden.

Ausführungsform 18 betrifft einen thermisch vulkanisierbaren Haftklebstoff mit den Merkmalen gemäß Ausführungsform 16 und/oder mit den Merkmalen gemäß Ausführungsform 17, wobei die Gesamt-Konzentration an Vulkanisationsbeschleunigern in dem thermisch vulkanisierbaren Haftklebstoff zwischen mindestens 0,1 Gewichtsprozent und maximal 15,0 Gewichtsprozent, bevorzugt zwischen mindestens 0,5 und maximal 12,5 Gewichtsprozent, besonders bevorzugt zwischen mindestens 1,0 und maximal 10,0 Gewichtsprozent beträgt.

Ausführungsform 19 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11 und/oder mit den Merkmalen gemäß Ausführungsform 12 und/oder mit den Merkmalen gemäß Ausführungsform 13 und/oder mit den Merkmalen gemäß Ausführungsform 14 und/oder mit den Merkmalen gemäß Ausführungsform 15 und/oder mit den Merkmalen gemäß Ausführungsform 16 und/oder mit den Merkmalen gemäß Ausführungsform 17 und/oder mit den Merkmalen gemäß Ausführungsform 18, wobei der thermisch vulkanisierbare Haftklebstoff zumindest ein Alterungsschutzmittel umfasst, nämlich ein sterisch gehindertes Phenol, bevorzugt Pentaerythritol tetrakis(3-(3-5-di-tert-butyl-4-hydroxyphenyl)propionat) (CAS-Nr.: 6683-19-8).

Ausführungsform 20 betrifft einen thermisch vulkanisierbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11 und/oder mit den Merkmalen gemäß Ausführungsform 12 und/oder mit den Merkmalen gemäß Ausführungsform 13 und/oder mit den Merkmalen gemäß Ausführungsform 14 und/oder mit den Merkmalen gemäß Ausführungsform 15 und/oder mit den Merkmalen gemäß Ausführungsform 16 und/oder mit den Merkmalen gemäß Ausführungsform 17 und/oder mit den Merkmalen gemäß Ausführungsform 18 und/oder mit den Merkmalen gemäß Ausführungsform 19, wobei sich der thermisch vulkanisierbarn Haftklebstoff aus folgenden Anteilen zusammensetzt:

| | |
|---|---|
| 30,0 — 55,0 Gew.-% | aus einem chemisch vorvernetzten, haftklebrigen Polybutadien-Polyurethan, |
| 0,1 - 15,0 Gew.-% | aus gemahlenem Schwefel |
| 0,1 - 10,0 Gew.-% | aus Vulkanisationsbeschleunigern |
| 1,0 - 20,0 Gew.-% | aus einem Epoxidharz |
| 5,0 - 30,0 Gew.-% | aus gemahlenem Calciumoxid |
| 10,0 - 50,0 Gew.-% | aus Füllstoffen, ausgewählt aus gemahlener Kreide, gemahlenem Talkum und/ oder gemahlenem Kaolin |

und gegebenenfalls weiter umfassend Alterungsschutzmittel, Klebrigmacherharze, Bitumen, Weichmachern, Ölen sowie weiteren Hilfs- und Zusatzstoffen, so dass sich die Gesamtzusammensetzung auf 100 Gew.-% addiert.

Ausführungsform 21 betrifft ein Klebeband enthaltend mindestens einen thermisch vulkaniserbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11 und/oder mit den Merkmalen gemäß Ausführungsform 12 und/oder mit den Merkmalen gemäß Ausführungsform 13 und/oder mit den Merkmalen gemäß Ausführungsform 14 und/oder mit den Merkmalen gemäß Ausführungsform 15 und/oder mit den Merkmalen gemäß Ausführungsform 16 und/oder mit den Merkmalen gemäß Ausführungsform 17 und/oder mit den Merkmalen gemäß Ausführungsform 18 und/oder mit den Merkmalen gemäß Ausführungsform 19 und/oder mit den Merkmalen gemäß Ausführungsform 20, wobei der thermisch vulkanisierbaren Haftklebstoff insbesondere in Form einer Schicht des Klebebands vorliegt.

Verfahrensvarante 1 betrifft ein Verfahren zur Herstellung eines thermisch vulkanisierbaren Haftklebstoffs umfassend ein chemisch vorvernetztes, haftklebriges Polybutadien-Polyurethan und gemahlenen Schwefel, wobei

- zunächst ein Polybutadien-Polyurethan-Prepolymer durch chemische Reaktion eines oder mehrerer Polybutadien-Polyole und/oder deren Derivate - gegebenenfalls im Beisein weiterer Polyole und/oder deren Derivate - mit einem oder mehreren aliphatischen und/oder alicyclischen Polyisocyanaten hergestellt wird, wobei die Mengenverhältnisse von Polyolen und Polyisocyanaten derart gewählt sind, dass das resultierende Prepolymer hydroxyl-funktionalisiert ist, und wobei weiterhin vorteilhaft das resultierende Prepolymer haftlklebrig und schmelzbar ist,
- dem Polybutadien-Polyurethan-Prepolymer gemahlener Schwefel zugemischt wird,
- dem Polybutadien-Polyurethan-Prepolymer in der Schmelze weitere aliphatische und/oder alicyclische Polyisocyanate mit einer Isocyanat-Funktionalität von drei oder größer drei zugemischt werden, so dass eine Reaktion des Prepolymers mit den Polyisocyanaten einsetzt.

Verfahrensvariante 2 betrifft ein Verfahren mit den Merkmalen gemäß Verfahrensvariante 1, wobei weiterhin der thermisch vulkanisierbarer Haftklebstoff ein solcher mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11 und/oder mit den Merkmalen gemäß Ausführungsform 12 und/oder mit den Merkmalen gemäß Ausführungsform 13 und/oder mit den Merkmalen gemäß Ausführungsform 14 und/oder mit den Merkmalen gemäß Ausführungsform 15 und/oder mit den Merkmalen gemäß Ausführungsform 16 und/oder mit den Merkmalen gemäß Ausführungsform 17 und/oder mit den Merkmalen gemäß Ausführungsform 18 und/oder mit den Merkmalen gemäß Ausführungsform 19 und/oder mit den Merkmalen gemäß Ausführungsform 20 und/oder mit den Merkmalen nach Ausführungsform 21 und/oder mit den Merkmalen gemäß Ausführungsform 22 ist.

Verfahrensvariante 3 betrifft ein Verfahren mit den Merkmalen gemäß Verfahrensvariante 1 und/oder mit den Merkmalen gemäß Verfahrensvariante 2, wobei weiterhin die Umsetzung zur Herstellung des Polybutadien-Polyurethan-Prepolymers, also die chemische Reaktion des einen oder der mehreren Polybutadien-Polyole und/oder deren Derivaten - und gegebenenfalls der weiteren Polyole und/oder deren Derivate - mit dem einem oder den mehreren aliphatischen und/oder alicyclischen Polyisocyanaten unter Zusatz eines Katalysators erfolgt, insbesondere eines Bismut und Kohlenstoff enthaltenden Katalysators, bevorzugt eines Bismutcarboxylats oder eines Bismutcarboxylat-Derivats.

Verfahrensvariante 4 betrifft ein Verfahren mit den Merkmalen gemäß Verfahrensvariante 1 und/oder mit den Merkmalen gemäß Verfahrensvariante 2 und/oder mit den Merkmalen gemäß Verfahrensvariante 3, wobei weiterhin das Verhältnis der Gesamtanzahl der in die Herstellung des Polybutadien-Polyurethan-Prepolymers und in dessen Umsetzung, also die Vorvernetzungsreaktion, eingebrachten Isocyanatgruppen zur Gesamtanzahl der eingebrachten Hydroxylgruppen zwischen größer oder gleich 0,5 und kleiner oder gleich 1,3, bevorzugt zwischen größer oder gleich 0,6 und kleiner oder gleich 1,2, besonders bevorzugt zwischen größer oder gleich 0,7 und kleiner oder gleich 1,1, ganz besonders bevorzugt zwischen größer oder gleich 0,8 und kleiner oder gleich 1,0 liegt.

Verfahrensvariante 5 betrifft ein Verfahren mit den Merkmalen gemäß Verfahrensvariante 1 und/oder mit den Merkmalen gemäß Verfahrensvariante 2 und/oder mit den Merkmalen gemäß Verfahrensvariante 3 und/oder mit den Merkmalen gemäß Verfahrensvariante 4, wobei weiterhin die Umsetzung zur Herstellung des Polybutadien-Polyurethan-Prepolymers, also die chemische Reaktion des einen oder der mehreren Polybutadien-Polyole und/oder deren Derivate — und gegebenenfalls der weiteren Polyole und/oder deren Derivate — mit dem einem oder den mehreren aliphatischen und/oder alicyclischen Polyisocyanaten, in Gegenwart zumindest eines Epoxidharzes erfolgt, insbesondere in gegenwart des Reaktionsproduktes aus Bisphenol-A und Epichlorhydrin, besonders bevorzugt in Gegenwart des Reaktionsprodukt aus Bisphenol-A und Epichlorhydrin mit einem zahlengemittelten mittleren Molekulargewicht von kleiner oder gleich 700 g/mol (CAS-Nr. 25068-38-6).

Verfahrensvariante 6 betrifft ein Verfahren mit den Merkmalen gemäß Verfahrensvariante 1 und/oder mit den Merkmalen gemäß Verfahrensvariante 2 und/oder mit den Merkmalen gemäß Verfahrensvariante 3 und/oder mit den Merkmalen gemäß Verfahrensvariante 4 und/oder mit den Merkmalen gemäß Verfahrensvariante 5, wobei der gemahlene Schwefel, die weiteren aliphatischen und/oder alicyclischen Polyisocyanate und gegebenenfalls weitere Stoffe und/oder Additive in einem gemeinsamen, kontinuierleich ablaufenden Prozess zu dem Prepolymer gegeben werden.

Verfahrensvariante 7 betrifft ein Verfahren mit den Merkmalen gemäß Verfahrensvariante 1 und/oder mit den Merkmalen gemäß Verfahrensvariante 2 und/oder mit den Merkmalen gemäß Verfahrensvariante 3 und/oder mit den Merkmalen gemäß Verfahrensvariante 4 und/oder mit den Merkmalen gemäß Verfahrensvariante 5 und/oder mit den Merkmalen gemäß Verfahrensvariante 6, wobei die Abmischung des Prepolymers mit den weiteren aliphatischen und/oder alicyclischen Polyisocyanaten, die zur Reaktion mit dem Prepolymer genutzt werden, vorteilhaft auch zusammen mit dem gemahlenen Schwefel und gegebenenfalls mit den weiteren Stoffen beziehungsweise Additiven, in einem lösemittelfreien, kontinuierlichen Compoundierprozess erfolgt.

Verfahrensvariante 8 betrifft ein Verfahren mit den Merkmalen gemäß Verfahrensvariante 7, wobei der kontinuierliche Compoundierprozess in einem kontinuierlich arbeitenden Mischaggregat erfolgt, insbesondere in einem Planetwalzenextruder, einem Ringextruder oder einem Doppelschneckenextruder.

Verfahrensvariante 9 betrifft ein Verfahren mit den Merkmalen gemäß Verfahrensvariante 7 und/oder mit den Merkmalen gemäß Verfahrensvariante 8, wobei die Temperatur des Compounds während der Compoundierung 100 °C, bevorzugt 90 °C, besonders bevorzugt 80 °C nicht übersteigt.

Verfahrensvariante 10 betrifft ein Verfahren mit den Merkmalen gemäß Verfahrensvariante 1 und/oder mit den Merkmalen gemäß Verfahrensvariante 2 und/oder mit den Merkmalen gemäß Verfahrensvariante 3 und/oder mit den Merkmalen gemäß Verfahrensvariante 4 und/oder mit den Merkmalen gemäß Verfahrensvariante 5 und/oder mit den Merkmalen gemäß Verfahrensvariante 6 und/oder mit den Merkmalen gemäß Verfahrensvariante 7 und/oder mit den Merkmalen gemäß Verfahrensvariante 8 und/oder mit den Merkmalen gemäß Verfahrensvariante 9, wobei die chemische Umsetzung des zumindest einen schmelzbaren, haftklebrigen, hydroxyl-funktionalisierten Polybutadien-Polyurethan-Prepolymers mit dem zumindest einen aliphatischen oder alicyclischen Polyisocyanat mit einer Isocyanat-Funktionalität von drei oder größer - zum chemisch vorvernetzten, haftklebrigen Polybutadien-Polyurethan in einem kontinuierlichen Extrusions- oder Compoundierprozess durch kontinuierliche Zudosierung des zumindest einen aliphatischen oder alicyclischen Polyisocyanats während des kontinuierlichen Extrusions- oder Compoundierprozesses in das kontinuierlich arbeitende Mischaggregat zum kontinuierlich geförderten Compound aus dem zumindest einen schmelzbaren, haftklebrigen, hydroxyl-funktionalisierten Polybutadien-Polyurethan-Prepolymer, Schwefel und den optionalen weiteren Stoffen, wie etwa Epoxidharzen, Klebrigmacherharzen, Bitumen, Weichmachern, Ölen, Vulkanisationsbeschleunigern, Füllstoffen, Alterungsschutzmitteln sowie sonstigen Hilfs- und Zusatzstoffe gestartet wird.

Verfahrensvariante 11 betrifft ein Verfahren mit den Merkmalen gemäß Verfahrensvariante 1 und/oder mit den Merkmalen gemäß Verfahrensvariante 2 und/oder mit den Merkmalen gemäß Verfahrensvariante 3 und/oder mit den Merkmalen gemäß Verfahrensvariante 4 und/oder mit den Merkmalen gemäß Verfahrensvariante 5 und/oder mit den Merkmalen gemäß Verfahrensvariante 6 und/oder mit den Merkmalen gemäß Verfahrensvariante 7 und/oder mit den Merkmalen gemäß Verfahrensvariante 8 und/oder mit den Merkmalen gemäß Verfahrensvariante 9 und/oder mit den Merkmalen gemäß Verfahrensvariante 10, wobei das Prepolymer als Schicht ausgeformt wird, insbesondere auf ein Trägermaterial aufgelegt wird, nachdem die Zumischung der weiteren aliphatischen und/oder alicyclischen Polyisocyanate in die Schmelze des Polybutadien-Polyurethan-Prepolymers erfolgt ist, insbesondere nachdem die Reaktion des Prepolymers mit den Polyisocyanaten eingesetzt hat.

Verfahrensvariante 12 betrifft ein Verfahren mit den Merkmalen gemäß Verfahrensvariante 7 und/oder mit den Merkmalen gemäß Verfahrensvariante 8 und/oder mit den Merkmalen gemäß Verfahrensvariante 9 und/oder mit den Merkmalen gemäß Verfahrensvariante 10 und/oder mit den Merkmalen gemäß Verfahrensvariante 11, wobei dem kontinuierlichen Compoundierprozess weiterhin ein kontinuierlicher Beschichtungsprozess folgt, bei dem das abgemischte Prepolymer als Schicht ausgeformt wird, insbesondere auf ein Trägermaterial aufgelegt wird.

Bevorzugt ist zudem ein Klebeband umfassend zumindest einen thermisch vulkaniseirbaren Haftklebstoff mit den Merkmalen gemäß Ausführungsform 1 und/oder mit den Merkmalen gemäß Ausführungsform 2 und/oder mit den Merkmalen gemäß Ausführungsform 3 und/oder mit den Merkmalen gemäß Ausführungsform 4 und/oder mit den Merkmalen gemäß Ausführungsform 5 und/oder mit den Merkmalen gemäß Ausführungsform 6 und/oder mit den Merkmalen gemäß Ausführungsform 7 und/oder mit den Merkmalen gemäß Ausführungsform 8 und/oder mit den Merkmalen gemäß Ausführungsform 9 und/oder mit den Merkmalen gemäß Ausführungsform 10 und/oder mit den Merkmalen gemäß Ausführungsform 11 und/oder mit den Merkmalen gemäß Ausführungsform 12 und/oder mit den Merkmalen gemäß Ausführungsform 13 und/oder mit den Merkmalen gemäß Ausführungsform 14 und/oder mit den Merkmalen gemäß Ausführungsform 15 und/oder mit den Merkmalen gemäß Ausführungsform 16 und/oder mit den Merkmalen gemäß Ausführungsform 17 und/oder mit den Merkmalen gemäß Ausführungsform 18 und/oder mit den Merkmalen gemäß Ausführungsform 19 und/oder mit den Merkmalen gemäß Ausführungsform 20 und/oder mit den Merkmalen nach Ausführungsform 21, insbesondere umfassend zumindest eine Schicht eines derartigen Haftklebstoffs.

Bevorzugt ist weiterhin ein Klebeband umfassend zumindest einen thermisch vulkaniseirbaren Haftklebstoff, erhältlich nach einem Verfahren mit den Merkmalen gemäß Verfahrensvariante 11 und/oder mit den Merkmalen gemäß Verfahrensvariante 12.

**Experimenteller Teil**

Anhand der folgenden Beispiele soll die Erfindung näher beschrieben und deren Vorteile aufgezeigt werden, ohne die Erfindung damit einschränken zu wollen.

Die folgenden Prüfmethoden wurden eingesetzt, um die erfindungsgemäß hergestellten Muster kurz zu charakterisieren:

Dynamisch Mechanische Analyse (DMA) zur Bestimmung des Speichermoduls G' und des Verlustmoduls G"

Zur Charakterisierung der schmelzbaren, haftklebrigen, hydroxyl-funktionalisierten Polybutadien-Polyurethan-Prepolymere erfolgten Bestimmungen des Speichermoduls G' und des Verlustmoduls G" mittels Dynamisch Mechanischer Analyse (DMA).

Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Der Speichermodul G' und der Verlustmoduls G" wurden im Frequenzsweep von $10^{-1}$ bis $10^{2}$ rad/sec bei einer Temperatur von 25 °C bestimmt. G' und G" sind folgendermaßen definiert:

$$G' = \tau/\gamma \cdot \cos(\delta) \quad (\tau = \text{Schubspannung}, \quad \gamma = \text{Deformation}, \quad \delta = \text{Phasenwinkel} = \text{Phasenverschiebung zwischen Schubspannungs- und Deformationsvektor}).$$

$$G'' = \tau/\gamma \cdot \sin(\delta) \quad (\tau = \text{Schubspannung}, \quad \gamma = \text{Deformation}, \quad \delta = \text{Phasenwinkel} = \text{Phasenverschiebung zwischen Schubspannungs- und Deformationsvektor}).$$

Die Definition der Winkelfrequenz lautet: $\omega = 2\pi \cdot f$ (f = Frequenz). Die Einheit ist rad/sec.

Die Dicke der gemessenen Proben betrug stets zwischen 0,9 und 1,1 mm (1 ± 0,1 mm). Der Probendurchmesser betrug jeweils 25 mm. Die Vorspannung erfolgte mit einer Belastung von 3N. Der Stress der Probenkörper betrug bei allen Messungen 2500 Pa.

Dynamisch Mechanische Analyse (DMA) zur Bestimmung der komplexen Viskosität ($\eta^*$)

Zur Charakterisierung der schmelzbaren, haftklebrigen, hydroxyl-funktionalisierten Polybutadien-Polyurethan-Prepolymere erfolgten weiterhin Bestimmungen der komplexen Viskosität mittels Dynamisch Mechanischer Analyse (DMA).

Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Die komplexe Viskosität wurde im Temperatursweep von -50 °C bis +250 °C bei einer Oszillationsfrequenz von 10 rad/s bestimmt. Die komplexe Viskosität $\eta^*$ ist folgendermaßen definiert: $\eta^* = G^* / \omega$

($G^*$ = komplexer Schubmodul, $\omega$ = Winkelfrequenz).

Die weiteren Definitionen lauten:

$$G^* = \sqrt{(G')^2 + (G'')^2}$$

(G" = Viskositätsmodul (Verlustmodul), G' = Elastizitätsmodul (Speichermodul)).

$$G'' = \tau/\gamma \cdot \sin(\delta) \quad (\tau = \text{Schubspannung}, \quad \gamma = \text{Deformation}, \quad \delta = \text{Phasenwinkel} = \text{Phasenverschiebung zwischen Schubspannungs- und Deformationsvektor}).$$

$$G' = \tau/\gamma \cdot \cos(\delta) \quad (\tau = \text{Schubspannung}, \quad \gamma = \text{Deformation}, \quad \delta = \text{Phasenwinkel} = \text{Phasenverschiebung zwischen Schubspannungs- und Deformationsvektor}).$$

$$\omega = 2\pi \cdot f \text{ (f = Frequenz)}.$$

Die Dicke der gemessenen Proben betrug stets zwischen 0,9 und 1,1 mm (1 ± 0,1 mm). Der Probendurchmesser betrug jeweils 25 mm. Die Vorspannung erfolgte mit einer Belastung von 3N. Der Stress der Probenkörper betrug bei allen Messungen 2500 Pa.

Klebkraft

Die Klebkraft wurde nach PSTC-101 bestimmt. Die Messung erfolgte stets vor der thermischen Vulkanisation der Proben. Nach dieser Methode wurde der zu messende, 20 mm breite und 1,2 mm dicke Streifen des geformten, erfindungsgemäßen, chemisch vorvernetzten, thermisch vulkanisierbaren Haftklebstoffs auf den Haftgrund aufgebracht, mit einer 75 $\mu$m dicken, mit Trichloressigsäure geätzten Polyesterfolie abgedeckt und somit rückseitenverstärkt, zehn mal mit einer 4kg-Stahlrolle mit einer Geschwindigkeit von 10m/min überrollt und sofort anschließend unter definierten Bedingungen mittels einer Zugprüfmaschine abgezogen. Der Abzugswinkel betrug stets 90°, die Abzugsgeschwindigkeit 300 mm/min. Die zum Abziehen erforderliche Kraft ist die Klebkraft, welche in der Einheit N/cm angegeben wird. Der Haftgrund war stets rostfreier Stahl (DC04) oder Aluminium.

Trennkraft bei einseitiger Randspannung (Dynamischer L-Jiq-Test)

Die Methode dient der Bestimmung der Ablösekraft von doppelseitigen Klebebändern bei einseitiger Randspannung.
Die Messung erfolgte stets vor der thermischen Vulkanisation der Proben.
Ein L-förmiger rostfreier Stahlblechwinkel (L-jig) wurde mit einem quadratisch zugeschnittenen Prüfmuster (25 mm Kantenlänge, Dicke: 1,2 mm) auf einer gereinigten und konditionierten rostfreien Stahlplatte (DC04) verklebt. Der Verbund wurde 5 Sekunden mit 60 N angedrückt. Nach einer Aufziehzeit von 24 h bei 23 °C und 50 % rel. Luftfeuchte wurde der L-jig mit einer Zugprüfmaschine bei einer Geschwindigkeit von 300 mm/min bei Raumtemperatur (23 °C) abgezogen. Die zum Abziehen erforderliche Kraft ist die Trennkraft, welche in der Einheit N/cm angegeben wird. Als gute Werte für ein doppelseitiges Klebeband werden Werte ab 60 N/cm angesehen, bevorzugt werden Werte ab 75 N/cm. Als sehr gut sind Werte ab 100 N/cm anzusehen.

Statischer Schertest vor der thermischen Vulkanisation

Vor der thermischen Vulkanisation der Proben erfolgte der statische Schertest nach der Prüfvorschrift PSTC-107. Nach dieser Methode wurden die zu messenden Klebstreifen auf den Haftgrund (rostfreier Stahl, DC04) aufgebracht, mit einem 500 g-Gewicht 5 Minuten aufgedrückt und anschließend einer konstanten Scherbelastung ausgesetzt. Die Verklebungsfläche betrug jeweils 13 x 20 mm. Die Scherbelastung dieser Verklebungsfläche betrug 500 g. Die Dicke der Proben betrug 1,2 mm. Die Messung erfolgte bei Raumtemperatur (23 °C). Die zu messenden Klebstreifen waren 1,2 mm dick und mit einer 75 $\mu$m dicken, mit Trichloressigsäure geätzten Polyesterfolie rückseitenverstärkt. Ermittelt wurde die Haltedauer in Minuten.

Dynamischer Schertest (Zugscherfestigkeit

Der dynamische Schertest erfolgte in Anlehnung an DIN EN 1465. Er erfolgte sowohl vor als auch nach der thermischen Vulkanisation der verklebten Proben. Dazu wurden aus einer 1,2 mm dicken, Schicht des erfindungsgemäßen, geformten, chemisch vorvernetzten, thermisch vulkanisierbaren Haftklebstoffs, die beidseitig jeweils mit einem Trennpapier abgedeckt war, rechteckige Stanzlinge mit den Maßen 25,0 mm × 12,5 mm ausgestanzt. Die Trennpapiere wurden daraufhin jeweils von einer Seite eines Stanzlings abgezogen.
Die Stanzlinge wurden passgenau jeweils auf das Ende eines Prüfkörpers (Substrates) mit den Maßen 100,0 mm × 25,0 mm × 2,0 mm aufgelegt. Die Stanzlinge hafteten nun jeweils auf diesem Prüfkörper. Verwendet wurden Prüfkörper aus rostfreiem Stahl (DC04). Anschließend wurde das noch auf den Stanzlingen verbliebene Trennpapier abgezogen.
Darauf wurden Prüfkörper aus Aluminium mit den gleichen Maßen 100,0 mm × 25,0 mm × 2,0 mm jeweils bündig mit einem Ende so gelegt, dass wie in DIN EN 1465 beschrieben, jeweils ein überlappender Verbund resultierte. Die Überlappungslänge betrug jeweils 12,5 mm. Die Überlappungsfläche betrug jeweils 312,5 mm$^2$. Die überlappenden Verbunde wurden auf ein Blech gelegt, wobei durch Unterlegscheiben dafür Sorge getragen wurde, dass der obere Prüfkörper nicht kippen konnte. Auf den oberen Prüfkörper wurde im Bereich der Überlappungsfläche jeweils ein Gewicht von 1 kg gestellt. Der Verbund wurde dem Druck des Gewichtes 5 Minuten jeweils bei Raumtemperatur ausgesetzt (Verpresszeit). Sodann wurde das Gewicht entfernt.

Direkt anschließend erfolgte die Messung der Zugscherfestigkeit derjenigen Proben, bei denen die Zugscherfestigkeit vor der thermischen Vulkanisation von Interesse war.

Die Verbunde der übrigen Proben, bei denen die Zugscherfestigkeit nach der thermischen Vulkanisation von Interesse war, wurden 30 Minuten jeweils bei 180 °C, bei 200 °C und bei 220 °C vulkanisiert. Dabei kam es zu einer Härtungsreaktion innerhalb der Klebebandschicht-Proben und zu einer sich aufbauenden starken Haftung zwischen den jeweiligen Klebebandschicht-Proben und den jeweiligen Prüfkörpern. Es kam somit zu einer Verklebung mit einer erheblichen Festigkeitszunahme. Nach Abkühlung und einer Wartezeit von zwei bis drei Stunden erfolgte die Bestimmung der Zugscherfestigkeit. Die Bestimmung erfolgte jeweils sowohl bei Raumtemperatur, bei -20 °C und bei +80 °C.

Die Bestimmung der Zugscherfestigkeit von Überlappungsverklebungen ermöglicht Aussagen über die Scherbelastbarkeit eines doppelseitig klebenden Klebeprodukts. Die Bestimmung erfolgte gemäß DIN EN 1465 mittels einer Zugprüfmaschine. Die Prüfgeschwindigkeit betrug 10 mm/min. Alle Messungen wurden in einem klimatisierten Raum bei 23 °C und 50 % relativer Luftfeuchte durchgeführt.

Statischer Schertest während der thermischen Vulkanisation

Die Probenvorbereitung für den statischen Schertest während der thermischen Vulkanisation erfolgte zunächst ähnlich wie beim dynamischen Schertest. Aus einer 1,2 mm dicken, Schicht des erfindungsgemäßen, geformten, chemisch vorvernetzten, thermisch vulkanisierbaren Haftklebstoffs, die beidseitig jeweils mit einem Trennpapier abgedeckt war, wurden rechteckige Stanzlinge mit den Maßen 25,0 mm × 12,5 mm ausgestanzt. Die Trennpapiere wurden daraufhin jeweils von einer Seite eines Stanzlings abgezogen.

Die Stanzlinge wurden passgenau jeweils auf das Ende eines Prüfkörpers aus rostfreiem Stahl (DC04) mit den Maßen 100,0 mm × 25,0 mm × 2,0 mm aufgelegt. Die Stanzlinge hafteten nun jeweils auf diesem Prüfkörper. Anschließend wurde das noch auf den Stanzlingen verbliebene Trennpapier abgezogen.

Darauf wurden Prüfkörper aus Aluminium mit den gleichen Maßen 100,0 mm × 25,0 mm × 2,0 mm jeweils bündig mit einem Ende so gelegt, dass wie in DIN EN 1465 beschrieben, jeweils ein überlappender Verbund resultierte. Die Überlappungslänge betrug jeweils 12,5 mm. Die Überlappungsfläche betrug jeweils 312,5 mm$^2$.

Die überlappenden Verbunde wurden auf ein Blech gelegt, wobei durch Unterlegscheiben dafür Sorge getragen wurde, dass der obere Prüfkörper nicht kippen konnte. Auf den oberen Prüfkörper wurde im Bereich der Überlappungsfläche jeweils ein Gewicht von 500 g gestellt. Der Verbund wurde dem Druck des Gewichtes 5 Minuten jeweils bei Raumtemperatur ausgesetzt (Verpresszeit). Sodann wurde das Gewicht entfernt.

Anschließend wurden diese so erzeugten Verbunde senkrecht in einen auf 200 °C vorgeheizten Ofen gehängt und sofort einer konstanten Scherbelastung von 200 g während einer Dauer von 30 Minuten ausgesetzt. Gemessen wurde die Rutschstrecke der Stanzlinge in mm.

Lieferant aller genannten Prüfkörper war die Firma Rocholl GmbH.

Dicke

Die Dickenmessungen erfolgten nach der Prüfvorschrift PSTC-33 mit einem Dickenmessgerät der Firma Wolf-Messtechnik GmbH. Die Auflagekraft der Scheibe auf den zu messenden Klebstreifen betrug 0,3 N oder 4 N. Die Scheibe hatte einen Durchmesser von 10mm.

Die schmelzbaren, haftklebrigen, hydroxyl-funktionalisierten Polybutadien-Polyurethan-Prepolymere wurden in Laboransätzen in einem beheiz- und evakuierbaren 1 Liter-Planetenmischer der Firma PC-Laborsystem gefertigt. Sie wurden jeweils hergestellt, indem zunächst die Polybutadien-Diole und -Polyole in die Mischdosen eingewogen und unter Vakuum bei einer Temperatur von 80 °C zwei Stunden lang gemischt und dabei entgast und somit von Restfeuchte befreit wurden. Sodann wurde der Kettenverlängerer zugegeben und 20 Minuten lang ohne Vakuum eingemischt. Anschließend wurden die restlichen Stoffe, wie zum Beispiel der Katalysator und/ oder das Epoxidharz entsprechend der in den einzelnen Beispielen angegebenen Mengenverhältnisse zugefügt und 20 Minuten eingemischt. Währenddessen wurde die Mischung auf 50 °C heruntergekühlt. Sodann wurde die äußere Kühlung/ Beheizung abgestellt und es erfolgte die Zugabe des mindestens einen aliphatischen oder alicyclischen Diisocyanats, das 30 Minuten lang homogen eingemischt wurde, wobei die Temperatur durch die Reaktionswärme auf ungefähr 70 °C anstieg. Sodann wurde die Mischung auf 90 °C geheizt und 2,5 Stunden weiter gerührt, davon die letzte Stunde unter Vakuum. Die Mischdose wurde aus dem Mischer entfernt, diese wurde luftdicht verschlossen und die Mischung wurde in diesem Gefäß zur Vervollständigung der Umsetzung 7 Tage bei 23 °C stehengelassen.

Zur Herstellung des erfindungsgemäßen, chemisch vorvernetzten, thermisch vulkanisierbaren Haftklebstoffs und des diesen Haftklebestoff enthaltenden Klebebandes erfolgte nach der einwöchigen Lagerzeit die Zumischung der weiteren Stoffe, wie insbesondere des gemahlenen Schwefels, gegebenfalls der Vulkanisationsbeschleuniger, Füllstoffe, sowie der weiteren Stoffe zu dem so hergestellten schmelzabren Polybutadien-Polyurethan bei 40 °C bis 80 °C im selben Gerät. Zur homogenen Einarbeitung der Stoffe wurden diese ungefähr zwei Stunden lang eingemischt. Während der zweiten Stunde wurde Vakuum angelegt, um eingerührte Luft und Feuchtigkeit zu entfernen.

Sodann wurde zur Erzielung der Vorvernetzung ein aliphatisches oder alicyclisches Polyisocyanat mit einer Isocyanat-Funktionalität von drei oder größer drei zugegeben und fünf Minuten lang ohne Vakuum eingemischt. Anschließend wurde Vakuum angelegt und weitere fünf Minuten bei mitlerer Drehzahl gerührt. Unmittelbar nach dem Zumischen des Polyisocyanats beginnt die Vorvernetzungsreaktion und schreitet langsam voran. Es bleibt aber noch ein genügend langes Zeitfenster von mehreren Minuten um die chemisch reagierende Mischung zu einem Film zu verpressen.

Das Verpressen zu Filmen in der gewünschten Dicke erfolgte zwischen zwei mit silikonisierten Polyester-Folien abgedeckten, auf 90 °C vorgewärmten Glasplatten. Nach der so erfolgten Ausformung wurden die Filme auf Raumtemperatur abgekühlt, wodurch sie sich sofort verfestigten. Die Filme wurden luft- und feuchtigkeitsdicht verpackt und bis zur Ausprüfung zur Vervollständigung der Vorvernetzungsreaktion mindestens eine Woche bei Raumtemperatur gelagert.

Einige der schmelzbaren, haftklebrigen, hydroxyl-funktionalisierten Polybutadien-Polyurethan-Prepolymere wurden in alternativer Weise in einem üblichen beheiz- und evakuierbaren 200 Liter-Mischkessel mit Dissolver-Rührwerk der Firma Molteni gefertigt. Sie wurden jeweils hergestellt, indem zunächst die Polybutadien-Diole und -Polyole eingewogen und unter Vakuum bei einer Temperatur von 80 °C zwei Stunden lang gemischt wurden. Sodann wurde der Kettenverlängerer zugegeben und 20 Minuten lang ohne Vakuum eingemischt. Anschließend wurden die restlichen Stoffe, wie zum Beispiel der Katalyasator und/ oder das Epoxidharz entsprechend der in den einzelnen Beispielen angegebenen Mengenverhältnisse zugefügt und 20 Minuten eingemischt. Währenddessen wurde die Mischung auf 50 °C heruntergekühlt.. Sodann wurde die äußere Kühlung/ Beheizung abgestellt und es erfolgte die Zugabe des mindestens einen aliphatischen oder alicyclischen Diisocyanats, das 30 Minuten lang homogen eingemischt wurde, wobei die Temperatur durch die Reaktionswärme auf ungefähr 70 °C anstieg. Sodann wurde die Mischung auf 90 °C geheizt und 2,5 Stunden weiter gerührt, davon die letzte Stunde unter Vakuum. Die Mischung wurde in ein 200 Liter-Fass abgelassen, dieses wurde luftdicht verschlossen und und die Mischung wurde in diesem Gefäß zur Vervollständigung der Umsetzung 7 Tage bei 23 °C stehengelassen.

Zur Herstellung des erfindungsgemäßen, chemisch vorvernetzten, thermisch vulkanisierbaren Haftklebstoffs und des diesen Haftklebestoff enthaltenden Klebebandes wurden nach der einwöchigen Lagerzeit die so hergestellten schmelzbaren, haftklebrigen, hydroxyl-funktionalisierten Polybutadien-Polyurethan-Prepolymere mit Hilfe einer Fassschmelzepumpe bei 40 °C-80 °C in einen Doppelschneckenextruder der Firma Krauss Maffei Berstorff, Bezeichnung Extruder ZE30Rx54D UTXmi, gepumpt. Der Extruder wurde von außen auf ca. 40 °C bis 80 °C elektrisch beheizt und über verschiedene Gebläse luftgekühlt. Er war so konzipiert, dass eine gute Durchmischung der Polybutadien-Polyurethan-Prepolymere mit dem gemahlenen Schwefel, gegebenfalls den Vulkanisationsbeschleunigern, Füllstoffen, sowie den weiteren Stoffen bei kurzer Verweilzeit im Extruder gewährleistet war. Dazu wurden die Mischwellen des Doppelschneckenextruders so angeordnet, dass sich fördernde und mischende Elemente abwechselten. Die Zugabe der weiteren Stoffe erfolgte mit geeignetem Dosierequipment unter Verwendung von Dosierhilfsmitteln in die druckfreien Förderzonen des Doppelschneckenextruders. Die Zudosierung des aliphatischen oder alicyclisches Polyisocyanats mit einer Isocyanat-Funktionalität von drei oder größer drei zur Erzielung der Vorvernetzung erfolgte zuletzt. Gegebenfalls kann diese Zudosierung auch in einem zweiten Arbeitsgang am Extruder erfolgen.

Unmittelbar nach dem Zudosieren des Polyisocyanats beginnt die Vorvernetzungsreaktion und schreitet langsam voran.

Nach Austritt der ca. 40 °C bis 80 °C heißen Mischung aus dem Doppelschneckenextruder (Austritt: Runddüse 5 mm Durchmesser) erfolgte die Ausformung zum Film direkt mittels eines nachgeschalteten Zweiwalzenauftragswerks zwischen zwei zulaufenden, beidseitig silikonisierten 50 μm dicken Polyesterfolien. Die Zulaufgeschwindigkeit wurde zwischen 1 m/min und 20 m/min variiert. Eine der zulaufenden, beidseitig silikonisierten Polyesterfolien wurde nach Abkühlung des Films und damit Verfestigung sofort wieder ausgedeckt. Der vorliegende Film wurde anschließend auf einen zylindrischen Kern aufgewickelt. Dieser Film ist das erfindungsgemäße, den chemisch vorvernetzten, thermisch vulkanisierbaren Haftklebstoff enthaltende Klebeband. Der Film wurde luft- und feuchtigkeitsdicht verpackt und bis zur Ausprüfung zur Vervollständigung der Vorvernetzungsreaktion mindestens eine Woche bei Raumtemperatur gelagert.

In Tabelle 1 sind die zur Herstellung der schmelzbaren, haftklebrigen, hydroxyl-funktionalisierten Polybutadien-Polyurethan-Prepolymere verwendeten Basismaterialien (Rohstoffe) aufgeführt, und zwar jeweils mit Handelsnamen, Hersteller und den für diese Erfindung relevanten technischen Daten.

In Tabelle 2 sind die für die daraus hergestellten, erfindungsgemäßen, chemisch vorvernetzten, thermisch vulkanisierbaren Haftklebstoffe und die diese Haftklebestoffe enthaltenden Klebebänder zusätzlich verwendeten Basismaterialien (Rohstoffe) aufgeführt. Die genannten Rohstoffe sind alle frei im Handel erhältlich.

Tabelle 1: Zur Herstellung der schmelzbaren, haftklebrigen, hydroxyl-funktionalisierten Polybutadien-Polyurethan-Prepolymere verwendete Basismaterialien (Rohstoffe)

| Händelsname | Beschreibung | mittlere zahlengemittelte Molmasse $M_n$ (g/mol) | OH- bzw. NCO-Zahl (mmol OH/kg bzw. mmol NCO/kg) | Mittlere, zahlengemittelte Funktionalität f | Hersteller / Lieferant |
|---|---|---|---|---|---|
| **Polybutadien-Polyole** | | | | | |
| Krasol LBH 2000 ® | Polybutadien-Diol | 2100 | 910 | 1,9 | Cray Valley |
| Poly bd R-45 HTLO ® | Polybutadien-Polyol, f größer 2 | 2800 | 840 | 2,4 | Cray Valley |
| **Kettenverlängerer** | | | | | |
| 2-Ethyl-1,3-hexandiol (EHD) | CAS-Nr.: 94-96-2, Diol | 146,2 | 13677 | 2,0 | Sigma-Aldrich |
| **Diisocyanate** | | | | | |
| Vestanat IPDI ® | Isophorondiisocyanat (IPDI), CAS-Nr.: 4098-71-9 | 222,3 | 8998 | 2,0 | Evonik |
| Desmodur W ® | Dicyclohexylmethandiisocyanat (HMDI), CAS-Nr.: 5124-30-1 | 262 | 7571 | 2,0 | Covestro |
| **Katalysator** | | | | | |
| Coscat 83 ® | Bismuttrisneodecanoat CAS-Nr.: 34364-26-6 | | | | Caschem |
| **Epoxidharze** | | | | | |
| Epikote 828 ® | Reaktionsprodukt aus Bisphenol-A und Epichlorhydrin CAS-Nr.: 25068-38-6 | | | | Brenntag |

Tabelle 2: Zur Herstellung der erfindungsgemäßen, chemisch vorvernetzten, thermisch vulkanisierbaren Haftklebstoffe und der diese Haftklebestoffe enthaltenden Klebebänder sowie der Vergleichsbeispiele verwendete Basismaterialien (Rohstoffe)

| Handelsname | Beschreibung | Hersteller / Lieferant |
|---|---|---|
| **Vulkanisationsstoffe und -beschleuniger** | | |
| Mahlschwefel 80/90° | Löslicher Mahlschwefel, CAS-Nr.: 7704-34-9 | Avokal GmbH |
| Avosulf ® IS 75 S | Unlöslicher Mahlschwefel, CAS-Nr.: 9035-99-8 | Avokal GmbH |
| MBTS | Di(benzothiazyl)disulfid, CAS-Nr.: 120-78-5 | Weber & Schaer GmbH |
| **Füllstoffe** | | |
| Talkum Pharma M ® | Talkum, CAS-Nr.: 14807-96-6, spez. Oberfläche: 4,6 $m^2$/g | Scheruhn GmbH |
| Omyacarb 5-GU® | Gemahlene Kreide, mittlrerer Teilchendurchmesser: 5,5 $\mu$m | Omya |
| Rapidquell® Quicklime CL 90-Q | Calciumoxid, Siebrückstand > 90$\mu$m: 3 Masse-% | Rheinkalk GmbH |
| Kaolin Pharma ® | Gemahlenes Kaolin, Siebrückstand >45$\mu$m: 0,1%, Kaolinit: 88,0% | Heinrich Heller GmbH |
| **Hilfs- und Zusatzstoffe** | | |
| Anox 20 ® | Pentaerythritol tetrakis(3-(3,5-di-tert-butyl-4-hydroxyphenyl)propionate), CAS-Nummer: 6683-19-8, Antioxidant | Addivant |
| Polyisocyanate zur Vorvernetzung | | |
| Desmodur N 3300 ® | Gemisch aus aliphatischen Polyisocyanaten auf Basis Hexamethylendiisocyanat mit einer Isocyanat-Funktionalität von jeweils drei oder größer drei, NCO-Zahl: 5190 mmol NCO/kg | Covestro |
| Desmodur N 3400 ® | Gemisch aus aliphatischen Polyisocyanaten auf Basis Hexamethylendiisocyanat, trifunktioneller Isocyanurat-Anteil: 11 % (Stoffmengenanteil), NCO-Zahl: 5190 mmol NCO/kg | Covestro |

**Beispiele**

**Beispiel 1**

Die chemische Umsetzung zum schmelzbaren, haftklebrigen, hydroxyl-funktionalisierten Polybutadien-Polyurethan-Prepolymer erfolgte in Gegenwart eines Epoxidharzes. Das Polybutadien-Polyurethan-Prepolymer (Prepo 1) setzt sich inklusive des Epoxidharzes wie folgt zusammen:

Zusammensetzung Prepo 1:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 29,55 | 26,89 mmol OH | 20 |

(fortgesetzt)

| Rohstoff | Gewichtsanteil [Gew.-%] | Anzahl der eingebrachten OH-beziehungsweise NCO-Gruppen, bezogen auf den prozentualen Gewichtsanteil | Prozentuales Verhältnis der Anzahl der OH- Gruppen zueinander |
|---|---|---|---|
| Poly bd R-45 HTLO ® | 32,02 | 26,89 mmol OH | 20 |
| 2-Ethyl-1,3-hexandiol ® | 5,90 | 80,68 mmol OH | 60 |
| Epikote 828 ® | 20,00 | | |
| Coscat 83 ® | 0,10 | | |
| Desmodur W ® | 12,43 | 94,13 mmol NCO | |
| Summe | 100,00 | | |

Die Herstellung erfolgte im Laboransatz (1Liter). Der Gewichtsanteil an Desmodur W® ist dabei so berechnet, dass das NCO/OH - Verhältnis des Polyurethan-Prepolymers 0,70 beträgt. Der theoretische Gelpunkt errechnet sich zu 0,83.

Prepo 1 ist schmelzbar und bei Raumtemperatur von der Konsistenz her gummiartig und haftklebrig. Die Prüfergebnisse sind in der folgenden Tabelle zusammengefasst.

Prüfergebnisse Prepo 1 (inklusive Epoxidharz):

| | |
|---|---|
| G' (bei 1 rad /sec und 23 °C) | 590 Pa |
| G" (bei 1 rad /sec und 23 °C) | 3100 Pa |
| G' (bei 10 rad /sec und 23 °C) | 7600 Pa |
| G" (bei 10 rad /sec und 23 °C) | 20400 Pa |
| komplexe Viskosität $\eta$* bei 10 rad/sec und 23 °C | 3200 Pas |
| komplexe Viskosität $\eta$* bei 10 rad/sec und 80 °C | 18 Pas |

Herstellung des erfindungsgemäßen, chemisch vorvernetzten, thermisch vulkanisierbaren Haftklebstoffs und des diesen Haftklebestoff enthaltenden Klebebandes:

Prepo 1 (inklusive Epoxidharz) wurde zur Herstellung des erfindungsgemäßen Haftklebstoffs und des erfindungsgemäßen Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 1:

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OH-beziehungsweise NCO-Gruppen, bezogen auf den prozentualen Gewichtsanteil |
|---|---|---|---|---|
| Prepo 1 (exklusive Epoxidharz) | 43,20 | Krasol LBH 2000 ® | 15,96 | 14,52 |
| | | Poly bd R-45 HTLO ® | 17,29 | 14,52 |
| | | 2-Ethyl-1,3-hexandiol ® | 3,19 | 43,57 |
| | | Desmodur W ® | 6,71 | 50,83 |

(fortgesetzt)

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Epikote 828 ® (aus der Prepo 1 - Herstellung) | 10,80 | | | |
| Mahlschwefel 80/90° | 1,20 | | | |
| MBTS | 2,00 | | | |
| Rapidquell® Quicklime CL 90-Q | 15,00 | | | |
| Talkum Pharma M ® | 10,00 | | | |
| Omyacarb 5-GU® | 15,20 | | | |
| Anox 20 ® | 0,50 | | | |
| Desmodur N 3300 ® | 2,10 | | | 10,89 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,85 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 7,5 N/cm | |
| Klebkraft | Aluminium | | 1,4 N/cm | |
| Dynamischer L-Jig Test | Stahl | | 115 N/cm | |
| Statischer Schertest | Stahl | 500 g | > 20.000 Minuten | |
| Statischer Schertest | Aluminium | 500 g | 5.700 Minuten | |
| Dynamischer Schertest (Zugscherfestigkeit) | Stahl gegen Aluminium | | 0,3 MPa | Adhäsiv zu Aluminium |

Während der thermischen Vulkanisation:

| Prüfmethode | Substrat | Überlappungsfläche | Scherbelastung | Vulkanisationsbedingung | Ergebnis |
|---|---|---|---|---|---|
| Statischer Schertest | Stahl gegen Aluminium | $312{,}5\ mm^2$ | 200g | 30 Minuten / 200 °C | Rutschstrecke: 2-4 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 6,9 | kohäsiv |
| | +23 | 2,9 | kohäsiv |
| | +80 | 0,5 | kohäsiv |
| 30 min/ 200 °C | -20 | 8,4 | kohäsiv |
| | +23 | 4,0 | kohäsiv |
| | +80 | 0,8 | kohäsiv |
| 30 min/ 220 °C | -20 | 8,7 | kohäsiv |
| | +23 | 4,0 | kohäsiv |
| | +80 | 0,9 | kohäsiv |

**Beispiel 2**

Die chemische Umsetzung zum schmelzbaren, haftklebrigen, hydroxyl-funktionalisierten Polybutadien-Polyurethan-Prepolymer erfolgte in Gegenwart eines Epoxidharzes. Das Polybutadien-Polyurethan-Prepolymer (Prepo 2) setzt sich inklusive des Epoxidharzes wie folgt zusammen:

Zusammensetzung Prepo 2:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 60,98 | 55,50 mmol OH | 40 |
| 2-Ethyl-1,3-hexandiol ® | 6,09 | 83,25 mmol OH | 60 |
| Epikote 828 ® | 20,00 | | |
| Coscat 83 ® | 0,10 | | |
| Desmodur W ® | 12,83 | 97,12 mmol NCO | |
| Summe | 100,00 | | |

Die Herstellung erfolgte im Laboransatz (1Liter). Der Gewichtsanteil an Desmodur W® ist dabei so berechnet, dass das NCO/OH - Verhältnis des Polyurethan-Prepolymers 0,70 beträgt. Ein theoretischer Gelpunkt existiert nicht.
Prepo 2 ist schmelzbar und bei Raumtemperatur von der Konsistenz her gummiartig und haftklebrig. Die Prüfergebnisse sind in der folgenden Tabelle zusammengefasst.

Prüfergebnisse Prepo 2 (inklusive Epoxidharz):

| | |
|---|---|
| G' (bei 1 rad /sec und 23 °C) | 550 Pa |
| G" (bei 1 rad /sec und 23 °C) | 2900 Pa |
| G' (bei 10 rad /sec und 23 °C) | 7200 Pa |
| G" (bei 10 rad /sec und 23 °C) | 20000 Pa |
| komplexe Viskosität $\eta$* bei 10 rad/sec und 23 °C | 3050 Pas |

(fortgesetzt)

| | |
|---|---|
| komplexe Viskosität η* bei 10 rad/sec und 80 °C | 17 Pas |

Herstellung des erfindungsgemäßen, chemisch vorvernetzten, thermisch vulkanisierbaren Haftklebstoffs und des diesen Haftklebestoff enthaltenden Klebebandes:

Prepo 2 (inklusive Epoxidharz) wurde zur Herstellung des erfindungsgemäßen Haftklebstoffs und des erfindungsgemäßen Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 2:

| Rohstoff | Gewichtsanteil [Gew.-%] | In die Prepo 2-Herstellung eingebrachte OHfunktionalisierte und NCO-funktionalisierte Rohstoffe | Gewichtsanteil [Gew.-%] | Anzahl der eingebrachten OH-beziehungsweise NCO-Gruppen, bezogen auf den prozentualen Gewichtsanteil |
|---|---|---|---|---|
| Prepo 2 (exklusive Epoxidharz) | 43,20 | Krasol LBH 2000 ® | 32,93 | 29,97 |
| | | 2-Ethyl-1,3-hexandiol ® | 3,29 | 44,95 |
| | | Desmodur W ® | 6,93 | 52,44 |
| Epikote 828 ® (aus der Prepo 2 - Herstellung) | 10,80 | | | |
| Mahlschwefel 80/90° | 1,20 | | | |
| MBTS | 2,00 | | | |
| Rapidquell® Quicklime CL 90-Q | 15,00 | | | |
| Talkum Pharma M ® | 10,00 | | | |
| Omyacarb 5-GU® | 15,13 | | | |
| Anox 20 ® | 0,50 | | | |
| Desmodur N 3300 ® | 2,17 | | | 11,24 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,85 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 9,1 N/cm | |
| Klebkraft | Aluminium | | 1,8 N/cm | |

(fortgesetzt)

| Prüfmethode | Substrat | Scherbelastung | Ergebnis | Bruchbild |
|---|---|---|---|---|
| Dynamischer L-Jig Test | Stahl | | 125 N/cm | |
| Statischer Schertest | Stahl | 500 g | 9.000 Minuten | |
| Statischer Schertest | Aluminium | 500 g | 2.100 Minuten | |
| Dynamischer Schertest (Zugscherfestigkeit) | Stahl gegen Aluminium | | 0,2 MPa | Adhäsiv zu Aluminium |

Während der thermischen Vulkanisation:

| Prüfmethode | Substrat | Überlappungsfläche | Scherbelastung | Vulkanisationsbedingunq | Ergebnis |
|---|---|---|---|---|---|
| Statischer Schertest | Stahl gegen Aluminium | 312,5 mm$^2$ | 200g | 30 Minuten / 200 °C | Rutschstrecke: 9-11 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 6,4 | kohäsiv |
| | +23 | 2,6 | kohäsiv |
| | +80 | 0,4 | kohäsiv |
| 30 min/ 200 °C | -20 | 8,0 | kohäsiv |
| | +23 | 3,8 | kohäsiv |
| | +80 | 0,7 | kohäsiv |
| 30 min/ 220 °C | -20 | 8,9 | kohäsiv |
| | +23 | 4,1 | kohäsiv |
| | +80 | 1,0 | kohäsiv |

**Beispiel 3**

Das schmelzbare, haftklebrige, hydroxyl-funktionalisierte Polybutadien-Polyurethan-Prepolymer (Prepo 3) setzt sich wie folgt zusammen:

Zusammensetzung Prepo 3:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 76,25 | 69,39 mmol OH | 40 |
| 2-Ethyl-1,3-hexandiol ® | 7,61 | 104,08 mmol OH | 60 |
| Coscat 83 ® | 0,10 | | |
| Desmodur W ® | 16,04 | 121,43 mmol NCO | |
| Summe | 100,00 | | |

Die Herstellung erfolgte im Laboransatz (1Liter). Der Gewichtsanteil an Desmodur W® ist dabei so berechnet, dass das NCO/OH - Verhältnis des Polyurethan-Prepolymers 0,70 beträgt. Ein theoretischer Gelpunkt existiert nicht.
Prepo 3 ist schmelzbar und bei Raumtemperatur von der Konsistenz her gummiartig und haftklebrig. Die Prüfergebnisse sind in der folgenden Tabelle zusammengefasst.

Prüfergebnisse Prepo 3:

| | |
|---|---|
| G' (bei 1 rad /sec und 23 °C) | 12000 Pa |
| G" (bei 1 rad /sec und 23 °C) | 21000 Pa |
| G' (bei 10 rad /sec und 23 °C) | 41000 Pa |
| G" (bei 10 rad /sec und 23 °C) | 52000 Pa |
| komplexe Viskosität $\eta$* bei 10 rad/sec und 23 °C | 12100 Pas |
| komplexe Viskosität $\eta$* bei 10 rad/sec und 80 °C | 62 Pas |

Herstellung des erfindungsgemäßen, chemisch vorvernetzten, thermisch vulkanisierbaren Haftklebstoffs und des diesen Haftklebestoff enthaltenden Klebebandes:

Prepo 3 wurde zur Herstellung des erfindungsgemäßen Haftklebstoffs und des erfindungsgemäßen Klebebandes gemäß derfolgenden Rezeptur im Laboransatz weiter abgemischt und zu einem Film ausgeformt.

Zusammensetzung des chemisch vorvernetzten, thermisch vulkanisierbaren Haftklebstoffs auf Basis von Prepo 3:

| Rohstoff | Gewichtsanteil [Gew.-%] | In die Prepo 3-Herstellung eingebrachte OHfunktionalisierte und NCO-funktionalisierte Rohstoffe | Gewichtsanteil [Gew.-%] | Anzahl der eingebrachten OH- beziehungsweise NCO- Gruppen, bezogen auf den prozentualen Gewichtsanteil |
|---|---|---|---|---|
| Prepo 3 | 54,00 | Krasol LBH 2000 ® | 41,18 | 37,47 |
| | | 2-Ethyl-1,3-hexandiol ® | 4,11 | 56,20 |
| | | Desmodur W ® | 8,66 | 65,57 |
| Mahlschwefel 80/90° | 1,20 | | | |
| MBTS | 2,00 | | | |
| Rapidquell® Quicklime CL 90-Q | 15,00 | | | |
| Talkum Pharma M ® | 10,00 | | | |
| Omyacarb 5-GU® | 14,59 | | | |
| Anox 20 ® | 0,50 | | | |
| Desmodur N 3300 ® | 2,71 | | | 14,05 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,85 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 2,4 N/cm | |
| Klebkraft | Aluminium | | 0,5 N/cm | |
| Dynamischer L-Jig Test | Stahl | | 35 N/cm | |
| Statischer Schertest | Stahl | 500 g | 6.000 Minuten | |
| Statischer Schertest | Aluminium | 500 g | 1.400 Minuten | |
| Dynamischer Schertest (Zugscherfestigkeit) | Stahl gegen Aluminium | | 0,2 MPa | Adhäsiv zu Aluminium |

Während der thermischen Vulkanisation:

| Prüfmethode | Substrat | Überlappungsfläche | Scherbelastung | Vulkanisationsbedingung | Ergebnis |
|---|---|---|---|---|---|
| Statischer Schertest | Stahl gegen Aluminium | 312,5 mm$^2$ | 200g | 30 Minuten / 200 °C | Rutschstrecke: 5-7 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | nicht bestimmt | |
| | +23 | 1,7 | adhäsiv |
| | +80 | nicht bestimmt | |
| 30 min/ 200 °C | -20 | 5,4 | adhäsiv |
| | +23 | 2,0 | adhäsiv |
| | +80 | 0,3 | adhäsiv |
| 30 min/ 220 °C | -20 | nicht bestimmt | |
| | +23 | 3,1 | Kohäsiv und adhäsiv |
| | +80 | nicht bestimmt | |

**Beispiel 4**

Die chemische Umsetzung zum schmelzbaren, haftklebrigen, hydroxyl-funktionalisierten Polybutadien-Polyurethan-Prepolymer erfolgte in Gegenwart eines Epoxidharzes. Das Polybutadien-Polyurethan-Prepolymer (Prepo 4) setzt sich inklusive des Epoxidharzes wie folgt zusammen:

Zusammensetzung Prepo 4:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 30,30 | 27,57 mmol OH | 20 |
| Poly bd R-45 HTLO ® | 32,82 | 27,57 mmol OH | 20 |
| 2-Ethyl-1,3-hexandiol ® | 6,05 | 82,72 mmol OH | 60 |
| Epikote 828 ® | 20,00 | | |
| Coscat 83 ® | 0,10 | | |
| Vestanat IPDI ® | 10,73 | 96,51 mmol NCO | |
| Summe | 100,00 | | |

Die Herstellung erfolgte im Laboransatz (1Liter). Der Gewichtsanteil an Vestanat IPDI ® ist dabei so berechnet, dass das NCO/OH - Verhältnis des Polyurethan-Prepolymers 0,70 beträgt. Der theoretische Gelpunkt errechnet sich zu 0,83.

Prepo 4 ist schmelzbar und bei Raumtemperatur von der Konsistenz her gummiartig und haftklebrig. Die Prüfergebnisse sind in der folgenden Tabelle zusammengefasst.

Prüfergebnisse Prepo 4 (inklusive Epoxidharz):

| G' (bei 1 rad /sec und 23 °C) | 570 Pa |
|---|---|
| G" (bei 1 rad /sec und 23 °C) | 2900 Pa |

(fortgesetzt)

| | |
|---|---|
| G' (bei 10 rad /sec und 23 °C) | 7100 Pa |
| G" (bei 10 rad /sec und 23 °C) | 19800 Pa |
| komplexe Viskosität $\eta$* bei 10 rad/sec und 23 °C | 2900 Pas |
| komplexe Viskosität $\eta$* bei 10 rad/sec und 80 °C | 16 Pas |

Herstellung des erfindungsgemäßen, chemisch vorvernetzten, thermisch vulkanisierbaren Haftklebstoffs und des diesen Haftklebestoff enthaltenden Klebebandes:

Prepo 4 (inklusive Epoxidharz) wurde zur Herstellung des erfindungsgemäßen Haftklebstoffs und des erfindungsgemäßen Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 4:

| Rohstoff | Gewichts-anteil [Gew.-%] | In die Prepo 4-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Prepo 4 (exklusive Epoxidharz) | 43,20 | Krasol LBH 2000 ® | 16,36 | 14,89 |
| | | Poly bd R-45 HTLO ® | 17,73 | 14,89 |
| | | 2-Ethyl-1,3-hexandiol ® | 3,27 | 44,67 |
| | | Vestanat IPDI ® | 5,79 | 52,11 |
| Epikote 828 ® (aus der Prepo 4 - Herstellung) | 10,80 | | | |
| Mahlschwefel 80/90° | 1,20 | | | |
| MBTS | 2,00 | | | |
| Rapidquell® Quicklime CL 90-Q | 15,00 | | | |
| Talkum Pharma M ® | 10,00 | | | |
| Omyacarb 5-GU® | 15,15 | | | |
| Anox 20 ® | 0,50 | | | |
| Desmodur N 3300 ® | 2,15 | | | 11,17 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,85 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 7,9 N/cm | |
| Klebkraft | Aluminium | | 1,8 N/cm | |
| Dynamischer L-Jig Test | Stahl | | 109 N/cm | |
| Statischer Schertest | Stahl | 500 g | 15.000 Minuten | |
| Statischer Schertest | Aluminium | 500 g | 5.100 Minuten | |
| Dynamischer Schertest (Zugscherfestigkeit) | Stahl gegen Aluminium | | 0,2 MPa | Adhäsiv zu Aluminium |

Während der thermischen Vulkanisation:

| Prüfmethode Substrat | Überlappungsfläche | Scherbelastung | Vulkanisationsbedingung | Ergebnis |
|---|---|---|---|---|
| Statischer Stahl gegen Schertest Aluminium | 312,5 mm$^2$ | 200g | 30 Minuten / 200 °C | Rutschstrecke: 3-4 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 7,2 | kohäsiv |
| | +23 | 2,8 | kohäsiv |
| | +80 | 0,4 | kohäsiv |
| 30 min/ 200 °C | -20 | 8,8 | kohäsiv |
| | +23 | 4,3 | kohäsiv |
| | +80 | 0,9 | kohäsiv |
| 30 min/ 220 °C | -20 | 8,8 | kohäsiv |
| | +23 | 4,2 | kohäsiv |
| | +80 | 0,7 | kohäsiv |

**Beispiel 5**

Die chemische Umsetzung zum schmelzbaren, haftklebrigen, hydroxyl-funktionalisierten Polybutadien-Polyurethan-Prepolymer erfolgte in Gegenwart eines Epoxidharzes. Das Polybutadien-Polyurethan-Prepolymer (Prepo 5) setzt sich inklusive des Epoxidharzes wie folgt zusammen:

Zusammensetzung Prepo 5:

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 14,55 | 13,24 mmol OH | 10 |

(fortgesetzt)

| Rohstoff | Gewichtsanteil [Gew.-%] | Anzahl der eingebrachten OHbeziehungsweise NCO-Gruppen, bezogen auf den prozentualen Gewichtsanteil | Prozentuales Verhältnis der Anzahl der OH- Gruppen zueinander |
|---|---|---|---|
| Poly bd R-45 HTLO ® | 47,30 | 39,73 mmol OH | 30 |
| 2-Ethyl-1,3-hexandiol ® | 5,81 | 79,46 mmol OH | 60 |
| Epikote 828 ® | 20,00 | | |
| Coscat 83 ® | 0,10 | | |
| Desmodur W ® | 12,24 | 92,70 mmol NCO | |
| Summe | 100,00 | | |

Die Herstellung erfolgte im Laboransatz (1Liter). Der Gewichtsanteil an Desmodur W® ist dabei so berechnet, dass das NCO/OH - Verhältnis des Polyurethan-Prepolymers 0,70 beträgt. Der theoretische Gelpunkt errechnet sich zu 0,77.

Prepo 1 ist schmelzbar und bei Raumtemperatur von der Konsistenz her gummiartig und haftklebrig. Die Prüfergebnisse sind in der folgenden Tabelle zusammengefasst.

Prüfergebnisse Prepo 5 (inklusive Epoxidharz):

| | |
|---|---|
| G' (bei 1 rad /sec und 23 °C) | 610 Pa |
| G" (bei 1 rad /sec und 23 °C) | 3300 Pa |
| G' (bei 10 rad /sec und 23 °C) | 7800 Pa |
| G" (bei 10 rad /sec und 23 °C) | 24700 Pa |
| komplexe Viskosität $\eta$* bei 10 rad/sec und 23 °C | 3800 Pas |
| komplexe Viskosität $\eta$* bei 10 rad/sec und 80 °C | 25 Pas |

Herstellung des erfindungsgemäßen, chemisch vorvernetzten, thermisch vulkanisierbaren Haftklebstoffs und des diesen Haftklebestoff enthaltenden Klebebandes:

Prepo 5 (inklusive Epoxidharz) wurde zur Herstellung des erfindungsgemäßen Haftklebstoffs und des erfindungsgemäßen Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 5:

| Rohstoff | Gewichtsanteil [Gew.-%] | In die Prepo 5-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Prepo 5 (exklusive Epoxidharz) | 43,20 | Krasol LBH 2000 ® | 7,86 | 7,15 |
| | | Poly bd R-45 HTLO ® | 25,54 | 21,45 |
| | | 2-Ethyl-1,3-hexandiol ® | 3,14 | 42,91 |
| | | Desmodur W ® | 6,61 | 50,06 |

(fortgesetzt)

| Rohstoff | Gewichtsanteil [Gew.-%] | In die Prepo 5-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Epikote 828 ® (aus der Prepo 5 - Herstellung) | 10,80 | | | |
| Mahlschwefel 80/90° | 1,20 | | | |
| MBTS | 2,00 | | | |
| Rapidquell® Quicklime CL 90-Q | 15,00 | | | |
| Talkum Pharma M ® | 10,00 | | | |
| Omyacarb 5-GU® | 15,23 | | | |
| Anox 20 ® | 0,50 | | | |
| Desmodur N 3300 ® | 2,07 | | | 10,73 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,85 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 6,1 N/cm | |
| Klebkraft | Aluminium | | 1,2 N/cm | |
| Dynamischer L-Jig Test | Stahl | | 81 N/cm | |
| Statischer Schertest | Stahl | 500 g | > 20.000 Minuten | |
| Statischer Schertest | Aluminium | 500 g | 4.900 Minuten | |
| Dynamischer Schertest (Zugscherfestigkeit) | Stahl gegen Aluminium | | 0,3 MPa | Adhäsiv zu Aluminium |

Während der thermischen Vulkanisation:

| Prüfmethode | Substrat | Überlappungsfläche | Scherbelastunq | Vulkanisationsbedingung | Ergebnis |
|---|---|---|---|---|---|
| Statischer Schertest | Stahl gegen Aluminium | 312,5 mm$^2$ | 200g | 30 Minuten / 200 °C | Rutschstrecke: 2-4 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 7,7 | kohäsiv |
| | +23 | 3,1 | kohäsiv |
| | +80 | 0,6 | kohäsiv |
| 30 min/ 200 °C | -20 | 8,7 | kohäsiv |
| | +23 | 4,4 | kohäsiv |
| | +80 | 0,8 | kohäsiv |
| 30 min/ 220 °C | -20 | 8,8 | kohäsiv |
| | +23 | 4,5 | kohäsiv |
| | +80 | 1,2 | kohäsiv |

**Beispiel 6**

Das schmelzbare, haftklebrige, hydroxyl-funktionalisierte Polybutadien-Polyurethan-Prepolymer ist Prepo 1 aus Beispiel 1.

Herstellung des erfindungsgemäßen, chemisch vorvernetzten, thermisch vulkanisierbaren Haftklebstoffs und des diesen Haftklebestoff enthaltenden Klebebandes:

Prepo 1 (inklusive Epoxidharz) wurde zur Herstellung des erfindungsgemäßen Haftklebstoffs und des erfindungsgemäßen Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 1:

| Rohstoff | Gewichts-anteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Prepo 1 (exklusive Epoxidharz) | 43,20 | Krasol LBH 2000 ® | 15,96 | 14,52 |
| | | Poly bd R-45 HTLO ® | 17,29 | 14,52 |
| | | 2-Ethyl-1,3-hexandiol ® | 3,19 | 43,57 |
| | | Desmodur W ® | 6,71 | 50,83 |
| Epikote 828 ® (aus der Prepo 1 - Herstellung) | 10,80 | | | |
| Mahlschwefel 80/90° | 1,20 | | | |
| MBTS | 2,00 | | | |
| Rapidquell® Quicklime CL 90-Q | 15,00 | | | |

(fortgesetzt)

| Rohstoff | Gewichts-anteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Talkum Pharma M ® | 10,00 | | | |
| Omyacarb 5-GU® | 12,40 | | | |
| Anox 20 ® | 0,50 | | | |
| Desmodur N 3300 ® | 4,90 | | | 25,41 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 1,05 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 4,9 N/cm | |
| Klebkraft | Aluminium | | 1,0 N/cm | |
| Dynamischer L-Jig Test | Stahl | | 79 N/cm | |
| Statischer Schertest | Stahl | 500 g | 6.000 Minuten | |
| Statischer Schertest | Aluminium | 500 g | 2.200 Minuten | |
| Dynamischer Schertest (Zugscherfestigkeit) | Stahl gegen Aluminium | | 0,1 MPa | Adhäsiv zu Aluminium |

Während der thermischen Vulkanisation:

| Prüfmethode | Substrat | Überlappungsfläche | Scherbelastung | Vulkanisationsbedingung | Ergebnis |
|---|---|---|---|---|---|
| Statischer Schertest | Stahl gegen Aluminium | 312,5 mm$^2$ | 200g | 30 Minuten / 200 °C | Rutschstrecke: 7-10 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 6,7 | kohäsiv |
| | +23 | 2,8 | kohäsiv |
| | +80 | 0,6 | kohäsiv |
| 30 min/ 200 °C | -20 | 8,8 | kohäsiv |
| | +23 | 3,9 | kohäsiv |
| | +80 | 0,8 | kohäsiv |
| 30 min/ 220 °C | -20 | 8,1 | kohäsiv |
| | +23 | 4,2 | kohäsiv |
| | +80 | 1,1 | kohäsiv |

**Beispiel 7**

Das schmelzbare, haftklebrige, hydroxyl-funktionalisierte Polybutadien-Polyurethan-Prepolymer ist Prepo 1 aus Beispiel 1.

Herstellung des erfindungsgemäßen, chemisch vorvernetzten, thermisch vulkanisierbaren Haftklebstoffs und des diesen Haftklebestoff enthaltenden Klebebandes:

Prepo 1 (inklusive Epoxidharz) wurde zur Herstellung des erfindungsgemäßen Haftklebstoffs und des erfindungsgemäßen Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 1:

| Rohstoff | Gewichts-anteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Prepo 1 (exklusive Epoxidharz) | 43,20 | Krasol LBH 2000 ® | 15,96 | 14,52 |
| | | Poly bd R-45 HTLO ® | 17,29 | 14,52 |
| | | 2-Ethyl-1,3-hexandiol ® | 3,19 | 43,57 |
| | | Desmodur W ® | 6,71 | 50,83 |
| Epikote 828 ® (aus der Prepo 1 - Herstellung) | 10,80 | | | |
| Mahlschwefel 80/90° | 1,20 | | | |
| MBTS | 2,00 | | | |
| Rapidquell® Quicklime CL 90-Q | 15,00 | | | |

(fortgesetzt)

| Rohstoff | Gewichts-anteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Talkum Pharma M ® | 10,00 | | | |
| Omyacarb 5-GU® | 13,80 | | | |
| Anox 20 ® | 0,50 | | | |
| Desmodur N 3400 ® | 3,50 | | | 18,15 |

Der prozentuale Gewichtsanteil von Desmodur N 3400 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,95 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 9,9 N/cm | |
| Klebkraft | Aluminium | | 2,3 N/cm | |
| Dynamischer L-Jig Test | Stahl | | 102 N/cm | |
| Statischer Schertest | Stahl | 500 g | 9.500 Minuten | |
| Statischer Schertest | Aluminium | 500 g | 2.800 Minuten | |
| Dynamischer Schertest (Zugscherfestigkeit) | Stahl gegen Aluminium | | 0,2 MPa | Adhäsiv zu Aluminium |

Während der thermischen Vulkanisation:

| Prüfmethode | Substrat | Überlappungsfläche | Scherbelastung | Vulkanisationsbedingung | Ergebnis |
|---|---|---|---|---|---|
| Statischer Schertest | Stahl gegen Aluminium | 312,5 mm$^2$ | 200g | 30 Minuten / 200 °C | Rutschstrecke: 3-6 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 6,4 | kohäsiv |
| | +23 | 2,7 | kohäsiv |
| | +80 | 0,4 | kohäsiv |
| 30 min/ 200 °C | -20 | 8,8 | kohäsiv |
| | +23 | 4,1 | kohäsiv |
| | +80 | 0,9 | kohäsiv |
| 30 min/ 220 °C | -20 | 8,7 | kohäsiv |
| | +23 | 4,3 | kohäsiv |
| | +80 | 0,9 | kohäsiv |

**Beispiel 8**

Das schmelzbare, haftklebrige, hydroxyl-funktionalisierte Polybutadien-Polyurethan-Prepolymer ist Prepo 1 aus Beispiel 1.

Herstellung des erfindungsgemäßen, chemisch vorvernetzten, thermisch vulkanisierbaren Haftklebstoffs und des diesen Haftklebestoff enthaltenden Klebebandes:

Prepo 1 (inklusive Epoxidharz) wurde zur Herstellung des erfindungsgemäßen Haftklebstoffs und des erfindungsgemäßen Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 1:

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Prepo 1 (exklusive Epoxidharz) | 43,20 | Krasol LBH 2000 ® | 15,96 | 14,52 |
| | | Poly bd R-45 HTLO ® | 17,29 | 14,52 |
| | | 2-Ethyl-1,3-hexandiol ® | 3,19 | 43,57 |
| | | Desmodur W ® | 6,71 | 50,83 |
| Epikote 828 ® (aus der Prepo 1 - Herstellung) | 10,80 | | | |
| Mahlschwefel 80/90° | 1,20 | | | |
| Rapidquell® Quicklime CL 90-Q | 15,00 | | | |
| Talkum Pharma M ® | 10,00 | | | |

(fortgesetzt)

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Omyacarb 5-GU® | 17,20 | | | |
| Anox 20 ® | 0,50 | | | |
| Desmodur N 3300 ® | 2,10 | | | 10,89 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,85 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 7,4 N/cm | |
| Klebkraft | Aluminium | | 1,5 N/cm | |
| Dynamischer L-Jig Test | Stahl | | 110 N/cm | |
| Statischer Schertest | Stahl | 500 g | > 20.000 Minuten | |
| Statischer Schertest | Aluminium | 500 g | 5.100 Minuten | |
| Dynamischer Schertest (Zugscherfestigkeit) | Stahl gegen Aluminium | | 0,3 MPa | Adhäsiv zu Aluminium |

Während der thermischen Vulkanisation:

| Prüfmethode | Substrat | Überlappungsfläche | Scherbelastung | Vulkanisationsbedingung | Ergebnis |
|---|---|---|---|---|---|
| Statischer Schertest | Stahl gegen Aluminium | 312,5 mm$^2$ | 200g | 30 Minuten / 200 °C | Rutschstrecke: 8-10 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | nicht bestimmt | |
| | +23 | 0,6 | kohäsiv |
| | +80 | nicht bestimmt | |
| 30 min/ 200 °C | -20 | 6,1 | kohäsiv |
| | +23 | 3,1 | kohäsiv |
| | +80 | 0,3 | kohäsiv |
| 30 min/ 220 °C | -20 | nicht bestimmt | |
| | +23 | 3,9 | kohäsiv |
| | +80 | nicht bestimmt | |

**Beispiel 9**

Das schmelzbare, haftklebrige, hydroxyl-funktionalisierte Polybutadien-Polyurethan-Prepolymer ist Prepo 1 aus Beispiel 1.

Herstellung des erfindungsgemäßen, chemisch vorvernetzten, thermisch vulkanisierbaren Haftklebstoffs und des diesen Haftklebestoff enthaltenden Klebebandes:

Prepo 1 (inklusive Epoxidharz) wurde zur Herstellung des erfindungsgemäßen Haftklebstoffs und des erfindungsgemäßen Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 1:

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Prepo 1 (exklusive Epoxidharz) | 43,20 | Krasol LBH 2000 ® | 15,96 | 14,52 |
| | | Poly bd R-45 HTLO ® | 17,29 | 14,52 |
| | | 2-Ethyl-1,3-hexandiol ® | 3,19 | 43,57 |
| | | Desmodur W ® | 6,71 | 50,83 |
| Epikote 828 ® (aus der Prepo 1 - Herstellung) | 10,80 | | | |
| Mahlschwefel 80/90° | 3,50 | | | |
| MBTS | 2,00 | | | |

(fortgesetzt)

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Rapidquell® Quicklime CL 90-Q | 15,00 | | | |
| Talkum Pharma M ® | 10,00 | | | |
| Omyacarb 5-GU® | 12,90 | | | |
| Anox 20 ® | 0,50 | | | |
| Desmodur N 3300 ® | 2,10 | | | 10,89 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,85 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 7,9 N/cm | |
| Klebkraft | Aluminium | | 1,6 N/cm | |
| Dynamischer L-Jig Test | Stahl | | 120 N/cm | |
| Statischer Schertest | Stahl | 500 g | > 20.000 Minuten | |
| Statischer Schertest | Aluminium | 500 g | 5.800 Minuten | |
| Dynamischer Schertest (Zugscherfestigkeit) | Stahl gegen Aluminium | | 0,3 MPa | Adhäsiv zu Aluminium |

Während der thermischen Vulkanisation:

| Prüfmethode | Substrat | Überlappungsfläche | Scher- Vulkanisations- Ergebnis belastung bedingung |
|---|---|---|---|
| Statischer Schertest | Stahl gegen Aluminium | 312,5 mm$^2$ | 200g 30 Minuten / 200 °C Rutschstrecke: 2-3 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 15,5 | kohäsiv |
| | +23 | 10,8 | kohäsiv |

(fortgesetzt)

| Vulkanisationsbedingung | Temperatur während der Messung [°C] | Ergebnis [MPa] | Bruchbild |
|---|---|---|---|
| | +80 | 1,9 | kohäsiv |
| 30 min/ 200 °C | -20 | 16,2 | kohäsiv |
| | +23 | 12,4 | kohäsiv |
| | +80 | 2,9 | kohäsiv |
| 30 min/ 220 °C | -20 | 18,4 | kohäsiv |
| | +23 | 13,6 | kohäsiv |
| | +80 | 2,8 | kohäsiv |

**Beispiel 10**

Das schmelzbare, haftklebrige, hydroxyl-funktionalisierte Polybutadien-Polyurethan-Prepolymer ist Prepo 1 aus Beispiel 1.

Herstellung des erfindungsgemäßen, chemisch vorvernetzten, thermisch vulkanisierbaren Haftklebstoffs und des diesen Haftklebestoff enthaltenden Klebebandes:

Prepo 1 (inklusive Epoxidharz) wurde zur Herstellung des erfindungsgemäßen Haftklebstoffs und des erfindungsgemäßen Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 1:

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%]; | Anzahl der eingebrachten OHbeziehungsweise NCO-Gruppen, bezogen auf den prozentualen Gewichtsanteil |
|---|---|---|---|---|
| Prepo 1 (exklusive Epoxidharz) | 43,20 | Krasol LBH 2000 ® | 15,96 | 14,52 |
| | | Poly bd R-45 HTLO ® | 17,29 | 14,52 |
| | | 2-Ethyl-1,3-hexandiol ® | 3,19 | 43,57 |
| | | Desmodur W ® | 6,71 | 50,83 |
| Epikote 828 ® (aus der Prepo 1 - Herstellung) | 10,80 | | | |
| Avosulf ® IS 75 S | 1,20 | | | |
| MBTS | 2,00 | | | |
| Rapidquell® Quicklime CL 90-Q | 15,00 | | | |
| Kaolin Pharma ® | 25,20 | | | |
| Anox 20 ® | 0,50 | | | |

(fortgesetzt)

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%]; | Anzahl der eingebrachten OHbeziehungsweise NCO-Gruppen, bezogen auf den prozentualen Gewichtsanteil |
|---|---|---|---|---|
| Desmodur N 3300 ® | 2,10 | | | 10,89 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,85 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 7,9 N/cm | |
| Klebkraft | Aluminium | | 1,6 N/cm | |
| Dynamischer L-Jig Test | Stahl | | 102 N/cm | |
| Statischer Schertest | Stahl | 500 g | > 20.000 Minuten | |
| Statischer Schertest | Aluminium | 500 g | 5.200 Minuten | |
| Dynamischer Schertest (Zugscherfestigkeit) | Stahl gegen Aluminium | | 0,3 MPa | Adhäsiv zu Aluminium |

Während der thermischen Vulkanisation:

| Prüfmethode | Substrat | Überlappungsfläche | Scherbelastung | Vulkanisationsbedingung | Ergebnis |
|---|---|---|---|---|---|
| Statischer Schertest | Stahl gegen Aluminium | 312,5 mm$^2$ | 200g | 30 Minuten / 200 °C | Rutschstrecke: 2-6 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 6,2 | kohäsiv |
| | +23 | 2,5 | kohäsiv |
| | +80 | 0,4 | kohäsiv |
| 30 min/ 200 °C | -20 | 7,6 | kohäsiv |
| | +23 | 3,6 | kohäsiv |
| | +80 | 0,7 | kohäsiv |
| 30 min/ 220 °C | -20 | 8,9 | kohäsiv |
| | +23 | 4,3 | kohäsiv |
| | +80 | 1,0 | kohäsiv |

**Beispiel 11**

Das schmelzbare, haftklebrige, hydroxyl-funktionalisierte Polybutadien-Polyurethan-Prepolymer ist Prepo 1 aus Beispiel 1. Die Herstellung erfolgte im 200 Liter Mischkessel.

Herstellung des erfindungsgemäßen, chemisch vorvernetzten, thermisch vulkanisierbaren Haftklebstoffs und des diesen Haftklebestoff enthaltenden Klebebandes:

Prepo 1 (inklusive Epoxidharz) wurde zur Herstellung des erfindungsgemäßen Haftklebstoffs und des erfindungsgemäßen Klebebandes gemäß der folgenden Rezeptur im Doppelschneckenextruder weiter abgemischt und zu einem Film ausgeformt. Die Zugabe des vorvernetzenden Desmodur N 3300 ® erfolgte dabei zuletzt. Das bereits während der Polybutadien-Polyurethan-Prepolymer-Herstellung eingemischte Epoxidharz ist in der folgenden Tabelle separat aufgeführt.

Zusammensetzung des chemisch vorvernetzten, thermisch vulkanisierbaren Haftklebstoffs auf Basis von Prepo 1:

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] ; | Anzahl der eingebrachten OHbeziehungsweise NCO-Gruppen, bezogen auf den prozentualen Gewichtsanteil |
|---|---|---|---|---|
| Prepo 1 (exklusive Epoxidharz) | 43,20 | Krasol LBH 2000 ® | 15,96 | 14,52 |
| | | Poly bd R-45 HTLO ® | 17,29 | 14,52 |
| | | 2-Ethyl-1,3-hexandiol ® | 3,19 | 43,57 |
| | | Desmodur W ® | 6,71 | 50,83 |
| Epikote 828 ® (aus der Prepo 1 - Herstellung | 10,80 | | | |
| Mahlschwefel 80/90° | 1,20 | | | |
| MBTS | 2,00 | | | |
| Rapidquell® Quicklime CL 90-Q | 15,00 | | | |

(fortgesetzt)

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] ; | Anzahl der eingebrachten OHbeziehungsweise NCO-Gruppen, bezogen auf den prozentualen Gewichtsanteil |
|---|---|---|---|---|
| Talkum Pharma M ® | 10,00 | | | |
| Omyacarb 5-GU® | 15,20 | | | |
| Anox 20 ® | 0,50 | | | |
| Desmodur N 3300 ® | 2,10 | | | 10,89 |

Der prozentuale Gewichtsanteil von Desmodur N 3300 ® wurde so gewählt, dass das Verhältnis der Gesamtanzahl der in die Herstellung des chemisch vorvernetzten, thermisch vulkanisierbaren Haftklebstoffes eingebrachten Isocyanatgruppen zur Gesamtanzahl der in die Herstellung eingebrachten Hydroxylgruppen (Gesamt-NCO/OH-Verhältnis) 0,85 betrug.

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 7,1 N/cm | |
| Klebkraft | Aluminium | | 1,6 N/cm | |
| Dynamischer L-Jig Test | Stahl | | 110 N/cm | |
| Statischer Schertest | Stahl | 500 g | > 20.000 Minuten | |
| Statischer Schertest | Aluminium | 500 g | 5.900 Minuten | |
| Dynamischer Schertest (Zugscherfestigkeit) | Stahl gegen Aluminium | | 0,3 MPa | Adhäsiv zu Aluminium |

Während der thermischen Vulkanisation:

| Prüfmethode | Substrat | Überlappungsfläche | Scherbelastung | Vulkanisationsbedingung | Ergebnis |
|---|---|---|---|---|---|
| Statischer Schertest | Stahl gegen Aluminium | $312,5\ mm^2$ | 200g | 30 Minuten / 200 °C | Rutschstrecke: 2-4 mm |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 6,1 | kohäsiv |
| | +23 | 3,3 | kohäsiv |
| | +80 | 0,6 | kohäsiv |
| 30 min/ 200 °C | -20 | 8,9 | kohäsiv |
| | +23 | 4,2 | kohäsiv |
| | +80 | 0,9 | kohäsiv |
| 30 min/ 220 °C | -20 | 8,9 | kohäsiv |
| | +23 | 4,1 | kohäsiv |
| | +80 | 0,9 | kohäsiv |

**Vergleichsbeispiel 1**

Das schmelzbare, haftklebrige, hydroxyl-funktionalisierte Polybutadien-Polyurethan-Prepolymer ist Prepo 1 aus Beispiel 1.

Herstellung des thermisch vulkanisierbaren Haftklebstoffs und des diesen Haftklebestoff enthaltenden Klebebandes (Vergleichsbeispiel 1):

Prepo 1 (inklusive Epoxidharz) wurde zur Herstellung des Vergleichsbeispiels 1 und des entsprechenden Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des thermisch vulkanisierbaren Haftklebstoffs auf Basis von Prepo 1 (Vergleichsbeispiel 1):

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Prepo 1 (exklusive Epoxidharz) | 43,20 | Krasol LBH 2000 ® | 15,96 | 14,52 |
| | | Poly bd R-45 HTLO ® | 17,29 | 14,52 |
| | | 2-Ethyl-1,3-hexandiol ® | 3,19 | 43,57 |
| | | Desmodur W ® | 6,71 | 50,83 |
| Epikote 828 ® (aus der Prepo 1 - Herstellung) | 10,80 | | | |
| Mahlschwefel 80/90° | 1,20 | | | |
| MBTS | 2,00 | | | |
| Rapidquell® Quicklime CL 90-Q | 15,00 | | | |

(fortgesetzt)

| Rohstoff | Gewichtsanteil [Gew.-%] | In die Prepo 1-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Talkum Pharma M ® | 10,00 | | | |
| Omyacarb 5-GU® | 17,30 | | | |
| Anox 20 ® | 0,50 | | | |

Es wurden die folgenden Ergebnisse erzielt:

Vor der thermischen Vulkanisation:

| Prüfmethode | Substrat | Scherbelastung | Ergebnis | Bruchbild |
|---|---|---|---|---|
| Klebkraft | Stahl | | 9,4 N/cm | |
| Klebkraft | Aluminium | | 3,1 N/cm | |
| Dynamischer L-Jig Test | Stahl | | 97 N/cm | |
| Statischer Schertest | Stahl | 500 g | < 60 Minuten | |
| Statischer Schertest | Aluminium | 500 g | < 60 Minuten | |
| Dynamischer Schertest (Zugscherfestigkeit) | Stahl gegen Aluminium | | 0,1 MPa | Adhäsiv zu Aluminium |

Während der thermischen Vulkanisation:

| Prüfmethode | Substrat | Überlappungsfläche | Scherbelastung | Vulkanisationsbedingung | Ergebnis |
|---|---|---|---|---|---|
| Statischer Schertest | Stahl gegen Aluminium | 312,5 mm$^2$ | 200g | 30 Minuten / 200 °C | Versagen (komplettes Abrutschen) nach weniger als 5 Minuten |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 6,6 | kohäsiv |
| | +23 | 2,8 | kohäsiv |
| | +80 | 0,5 | kohäsiv |
| 30 min/ 200 °C | -20 | 8,3 | kohäsiv |
| | +23 | 3,4 | kohäsiv |
| | +80 | 0,7 | kohäsiv |
| 30 min/ 220 °C | -20 | 8,2 | kohäsiv |
| | +23 | 3,6 | kohäsiv |
| | +80 | 0,8 | kohäsiv |

**Vergleichsbeispiel 2**

Das schmelzbare, haftklebrige, hydroxyl-funktionalisierte Polybutadien-Polyurethan-Prepolymer ist Prepo 2 aus Beispiel 2.

Herstellung des thermisch vulkanisierbaren Haftklebstoffs und des diesen Haftklebestoff enthaltenden Klebebandes (Vergleichsbeispiel 2):

Prepo 2 (inklusive Epoxidharz) wurde zur Herstellung des Vergleichsbeispiels 2 und des entsprechenden Klebebandes gemäß der folgenden Rezeptur im Laboransatz weiter abgemischt und zu einem Film ausgeformt. Das bereits während der Polybutadien-Polyurethan-Prepolymer-Herstellung eingemischte Epoxidharz ist in der folgenden Tabelle separat aufgeführt.

Zusammensetzung des thermisch vulkanisierbaren Haftklebstoffs auf Basis von Prepo 2 (Vergleichsbeispiel 2):

| Rohstoff | Gewichtsanteil [Gew.-%] | In die Prepo 2-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Prepo 2 (exklusive Epoxidharz) | 43,20 | Krasol LBH 2000 ® | 32,93 | 29,97 |
| | | 2-Ethyl-1,3-hexandiol ® | 3,29 | 44,95 |
| | | Desmodur W ® | 6,93 | 52,44 |
| Epikote 828 ® (aus der Prepo 2 - Herstellung) | 10,80 | | | |
| Mahlschwefel 80/90° | 1,20 | | | |
| MBTS | 2,00 | | | |
| Rapidquell® Quicklime CL 90-Q | 15,00 | | | |

(fortgesetzt)

| Rohstoff | Gewichtsanteil [Gew.-%] | In die Prepo 2-Herstellung eingebrachte OHfunktionalisierte und NCO-funktionalisierte Rohstoffe | Gewichtsanteil [Gew.-%] | Anzahl der eingebrachten OHbeziehungsweise NCO-Gruppen, bezogen auf den prozentualen Gewichtsanteil |
|---|---|---|---|---|
| Talkum Pharma M ® | 10,00 | | | |
| Omyacarb 5-GU® | 17,30 | | | |
| Anox 20 ® | 0,50 | | | |

Es wurden die folgenden Ergebnisse erzielt:

Vor der thermischen Vulkanisation:

| Prüfmethode | Substrat | Scherbelastung | Erqebnis | Bruchbild |
|---|---|---|---|---|
| Klebkraft | Stahl | | 9,5 N/cm | |
| Klebkraft | Aluminium | | 2,5 N/cm | |
| Dynamischer L-Jig Test | Stahl | | 82 N/cm | |
| Statischer Schertest | Stahl | 500 g | < 60 Minuten | |
| Statischer Schertest | Aluminium | 500 g | < 60 Minuten | |
| Dynamischer Schertest (Zugscherfestigkeit) | Stahl gegen Aluminium | | 0,2 MPa | Adhäsiv zu Aluminium |

Während der thermischen Vulkanisation:

| Prüfmethode | Substrat | Überlappungsfläche | Scherbelastunq | Vulkanisationsbedingung | Ergebnis |
|---|---|---|---|---|---|
| Statischer Schertest | Stahl gegen Aluminium | 312,5 mm$^2$ | 200g | 30 Minuten / 200 °C | Versagen (komplettes Abrutschen) nach weniger als 5 Minuten |

Nach der thermischen Vulkanisation:

Dynamischer Schertest (Zugscherfestigkeit), verklebte Substrate: Stahl gegen Aluminium

| Vulkanisationsbedingung | Temperatur während der Messung [°C] | Ergebnis [MPa] | Bruchbild |
|---|---|---|---|
| 30 min/ 180 °C | -20 | 6,7 | kohäsiv |
| | +23 | 2,3 | kohäsiv |
| | +80 | 0,3 | kohäsiv |
| 30 min/ 200 °C | -20 | 7,1 | kohäsiv |
| | +23 | 3,5 | kohäsiv |
| | +80 | 0,5 | kohäsiv |
| 30 min/ 220 °C | -20 | 8,1 | kohäsiv |
| | +23 | 4,0 | kohäsiv |
| | +80 | 0,7 | kohäsiv |

**Patentansprüche**

1. Thermisch vulkanisierbarer Haftklebstoff, umfassend ein chemisch vorvernetztes, haftklebriges Polybutadien-Polyurethan und gemahlenen Schwefel,
   **dadurch gekennzeichnet, dass**
   das chemisch vorvernetzte, haftklebrige Polybutadien-Polyurethan das chemische Umsetzungsprodukt aus zumindest folgenden Ausgangsstoffen ist oder umfasst:

   a) zumindest ein schmelzbares, haftklebriges, hydroxyl-funktionalisiertes Polybutadien-Polyurethan-Prepolymer und
   b) zumindest ein aliphatisches oder alicyclisches Polyisocyanat mit einer Isocyanat-Funktionalität von drei oder größer drei.

2. Thermisch vulkanisierbarer Haftklebstoff nach einem der vorangehenden Ansprüche, **dadurch gekennzeichnet, dass**
   das Polybutadien-Polyurethan-Prepolymer das chemische Umsetzungsprodukt eines oder mehrerer Polybutadien-Polyole und/oder deren Derivate mit einem oder mehreren aliphatischen und/oder alicyclischen Polyisocyanaten ist.

3. Thermisch vulkanisierbarer Haftklebstoff nach einem der vorangehenden Ansprüche, **dadurch gekennzeichnet, dass**
   das Polybutadien-Polyurethan-Prepolymer das chemische Umsetzungsprodukt eines oder mehrerer Polybutadien-Polyole und/oder deren Derivate und eines oder mehrerer anderer Polyole und/oder deren Derivate mit einem oder mehreren aliphatischen und/oder alicyclischen Polyisocyanaten ist.

4. Thermisch vulkanisierbarer Haftklebstoff nach einem der vorangehenden Ansprüche, **dadurch gekennzeichnet, dass**
   das schmelzbare, haftklebrige, hydroxyl-funktionalisierte Polybutadien-Polyurethan-Prepolymer das chemische Umsetzungsprodukt

   - zumindest eines Polybutadien-Diols und/oder Polybutadien-Diol-Derivats, jeweils mit mit einer zahlengemittelten, mittleren Funktionalität zwischen größer 1,5 und kleiner oder gleich 2,0,
   - und/oder zumindest eines Polybutadien-Polyols und/oder Polybutadien-Polyol-Derivats, jeweils mit einer zahlengemittelten, mittleren Funktionalität zwischen größer 2,0 und kleiner oder gleich 3,0,
   - und zumindest eines Kettenverlängerers mit einer Hydroxyl-Funktionalität von zwei und einer Molmasse von kleiner oder gleich 300 g/mol

   mit

- zumindest einem aliphatischen oder alicyclischen Diisocyanat
- und/oder zumindest einem aliphatischen oder alicyclischen Polyisocyanat mit einer Isocyanat-Funktionalität von drei oder größer drei

ist oder umfasst.

5. Thermisch vulkanisierbarer Haftklebstoff gemäß einem der vorangehenden Ansprüche, **dadurch gekennzeichnet, dass**
der anzahlmäßige Anteil der zur Bildung des schmelzbaren, haftklebrigen, hydroxylfunktionalisierten Polybutadien-Polyurethan-Prepolymers eingebrachten Hydroxylgruppen, die von dem zumindest einen Kettenverlängerer stammen, zwischen größer oder gleich 20,0 % und kleiner oder gleich 80,0 %, bevorzugt zwischen größer oder gleich 30,0 % und kleiner oder gleich 70,0 % liegt.

6. Thermisch vulkanisierbarer Haftklebstoff gemäß einem der vorangehenden Ansprüche, **dadurch gekennzeichnet, dass**
der anzahlmäßige Anteil der zur Bildung des schmelzbaren, haftklebrigen, hydroxylfunktionalisierten Polybutadien-Polyurethan-Prepolymers eingebrachten Hydroxylgruppen, die von dem zumindest einen Polybutadien-Polyol bzw. Polybutadien-Polyol-Derivat mit einer zahlengemittelten, mittleren Funktionalität zwischen größer 2,0 und kleiner oder gleich 3,0 stammen, zwischen größer oder gleich 0,0 % und kleiner oder gleich 50%, bevorzugt zwischen größer oder gleich 10,0 % und kleiner oder gleich 40%, besonders bevorzugt zwischen größer oder gleich 15,0 % und kleiner oder gleich 30% beträgt.

7. Thermisch vulkanisierbarer Haftklebstoff gemäß einem der vorangehenden Ansprüche, **dadurch gekennzeichnet, dass**
das aliphatische oder alicyclische Diisocyanat zur Herstellung des Polybutadien-Polyurethan-Prepolymers Isophorondiisocyanat und/oder Dicyclohexylmethan-4,4'-diisocyanat ist oder umfasst.

8. Thermisch vulkanisierbarer Haftklebstoff gemäß einem der vorangehenden Ansprüche, **dadurch gekennzeichnet, dass**
das aliphatische oder alicyclische Polyisocyanat zur Herstellung des Polybutadien-Polyurethan-Prepolymers beziehungsweise zur Umsetzung mit dem Polybutadien-Polyurethan-Prepolymer eine trimerisierte oder höher oligomerisierte Form des Hexamethylendiisocyanats und/oder des Isophorondiisocyanats ist oder umfasst.

9. Thermisch vulkanisierbarer Haftklebstoff gemäß einem der vorangehenden Ansprüche, **dadurch gekennzeichnet, dass** er sich aus folgenden Anteilen zusammensetzt, zu

| | |
|---|---|
| 30,0 - 55,0 Gew.-% | aus einem chemisch vorvernetzten, haftklebrigen Polybutadien-Polyurethan, |
| 0,1 - 15,0 Gew.-% | aus gemahlenem Schwefel |
| 0,1 - 10,0 Gew.-% | aus Vulkanisationsbeschleunigern |
| 1,0 — 20,0 Gew.-% | aus einem Epoxidharz |
| 5,0 - 30,0 Gew.-% | aus gemahlenem Calciumoxid |
| 10,0 — 50,0 Gew.-% | aus Füllstoffen, ausgewählt aus gemahlener Kreide, gemahlenem Talkum und/ oder gemahlenem Kaolin und |

gegebenenfalls Alterungsschutzmitteln, Klebrigmacherharzen, Bitumen, Weichmachern, Ölen sowie weiteren Hilfs- und Zusatzstoffen.

10. Verfahren zur Herstellung eines thermisch vulkanisierbaren Haftklebstoffs umfassend ein chemisch vorvernetztes, haftklebriges Polybutadien-Polyurethan und gemahlenen Schwefel, **dadurch gekennzeichnet, dass**

zunächst ein Polybutadien-Polyurethan-Prepolymer durch chemische Reaktion eines oder mehrerer Polybutadien-Polyole und/oder deren Derivate, optional im Beisein anderer Polyole und/oder deren Derivate, mit einem oder mehreren aliphatischen und/oder alicyclischen Polyisocyanaten hergestellt wird, wobei die Mengenverhältnisse von Polyolen beziehungsweise -derivaten und Polyisocyanaten derart gewählt sind, dass das resultierende Prepolymer hydroxy-funktionalisiert, schmelzbar und haftklebrig ist,
dem Polybutadien-Polyurethan-Prepolymer gemahlener Schwefel zugemischt wird,
dem Polybutadien-Polyurethan-Prepolymer in der Schmelze weitere aliphatische und/oder alicyclische Polyisocyanate mit einer Isocyanat-Funktionalität von drei oder größer drei zugemischt werden, so dass eine Umsetzung - im Folgenden Vorvernetzungsreaktion genannt - des Prepolymers mit den Polyisocyanaten einsetzt.

**11.** Verfahren nach Anspruch 10, **dadurch gekennzeichnet, dass** der thermisch vulkanisierbarer Haftklebstoff ein solcher nach einem der Ansprüche 1 bis 9 ist.

**12.** Verfahren nach einem der Ansprüche 10 oder 11, **dadurch gekennzeichnet, dass** die chemische Reaktion zur Herstellung des Polybutadien-Polyurethan-Prepolymer unter Zusatz eines Katalysators erfolgt, insbesondere eines Bismut und Kohlenstoff enthaltenden Katalysators, bevorzugt eines Bismutcarboxylats oder eines Bismutcarboxylat-Derivats.

**13.** Verfahren nach einem der Ansprüche 10 bis 12, **dadurch gekennzeichnet, dass** das Verhältnis der Gesamtanzahl der in die Herstellung des Polybutadien-Polyurethan-Prepolymers und in dessen Umsetzung, also die Vorvernetzungsreaktion, eingebrachten Isocyanatgruppen zur Gesamtanzahl der eingebrachten Hydroxylgruppen zwischen größer oder gleich 0,5 und kleiner oder gleich 1,3 liegt.

**14.** Verfahren nach einem der Ansprüche 10 bis 13, **dadurch gekennzeichnet, dass** der gemahlene Schwefel, die weiteren aliphatischen und/oder alicyclischen Polyisocyanate und gegebenenfalls weitere Zusatzstoffe und/oder Additive in einem gemeinsamen, kontinuierleich ablaufenden Prozess zu dem Prepolymer gegeben werden.

**15.** Verfahren nach einem der Ansprüche 10 bis 14, **dadurch gekennzeichnet, dass** die Abmischung des Prepolymers mit den weiteren aliphatischen und/oder alicyclischen Polyisocyanaten, vorteilhaft auch mit dem gemahlenen Schwefel und gegebenenfalls mit den weiteren Zusatzstoffen und/oder Additiven, in einem lösemittelfreien, kontinuierlichen Compoundierprozess erfolgt.

**16.** Verfahren nach Anspruch 15, **dadurch gekennzeichnet, dass**
dem kontinuierlichen Compoundierprozess ein kontinuierlicher Beschichtungsprozess unmittelbar folgt, bei dem das abgemischte Prepolymer als Schicht ausgeformt wird, insbesondere auf ein Trägermaterial aufgelegt wird.

**17.** Verfahren nach einem der Ansprüche 14 bis 16, **dadurch gekennzeichnet, dass** der kontinuierliche Compoundierprozess in einem kontinuierlich arbeitenden Mischaggregat erfolgt, insbesondere in einem Planetwalzenextruder, einem Ringextruder oder einem Doppelschneckenextruder.

**18.** Verfahren nach einem der Ansprüche 14 bis 17, **dadurch gekennzeichnet, dass** die Temperatur des Compounds während der Compoundierung 100 °C, bevorzugt 90 °C, besonders bevorzugt 80 °C nicht übersteigt.

**Claims**

**1.** Thermally vulcanizable pressure-sensitive adhesive comprising a chemically precrosslinked, pressure-sensitively adhesive polybutadiene-polyurethane and ground sulfur,
**characterized in that**
the chemically precrosslinked, pressure-sensitively adhesive polybutadiene-polyurethane is or comprises the chemical reaction product of at least the following starting materials:

a) at least one meltable, pressure-sensitively adhesive, hydroxyl-functionalized polybutadiene-polyurethane prepolymer and
b) at least one aliphatic or alicyclic polyisocyanate having an isocyanate functionality of three or greater than three.

**2.** Thermally vulcanizable pressure-sensitive adhesive according to one of the preceding claims, **characterized in that** the polybutadiene-polyurethane prepolymer is the chemical reaction product of one or more polybutadiene-polyols and/or derivatives thereof with one or more aliphatic and/or alicyclic polyisocyanates.

3. Thermally vulcanizable pressure-sensitive adhesive according to any of the preceding claims, **characterized in that** the polybutadiene-polyurethane prepolymer is the chemical reaction product of one or more polybutadiene-polyols and/or derivatives thereof and of one or more other polyols and/or derivatives thereof with one or more aliphatic and/or alicyclic polyisocyanates.

4. Thermally vulcanizable pressure-sensitive adhesive according to any of the preceding claims, **characterized in that** the meltable, pressure-sensitively adhesive, hydroxyl-functionalized polybutadiene-polyurethane prepolymer is or comprises the chemical reaction product

   - of at least one polybutadiene-diol and/or polybutadiene-diol derivative, in each case having a number-averaged average functionality of between greater than 1.5 and less than or equal to 2.0,
   - and/or of at least one polybutadiene-polyol and/or polybutadiene-polyol derivative, in each case having a number-averaged average functionality of between greater than 2.0 and less than or equal to 3.0,
   - and of at least one chain extender having a hydroxyl functionality of two and a molar mass of less than or equal to 300 g/mol

   with

   - at least one aliphatic or alicyclic diisocyanate
   - and/or at least one aliphatic or alicyclic polyisocyanate having an isocyanate functionality of three or greater than three.

5. Thermally vulcanizable pressure-sensitive adhesive according to any of the preceding claims, **characterized in that** the numerical fraction of the hydroxyl groups introduced for forming the meltable, pressure-sensitively adhesive, hydroxyl-functionalized polybutadiene-polyurethane prepolymer and originating from the at least one chain extender is between greater than or equal to 20.0% and less than or equal to 80.0%, preferably between greater than or equal to 30.0% and less than or equal to 70.0%.

6. Thermally vulcanizable pressure-sensitive adhesive according to any of the preceding claims, **characterized in that** the numerical fraction of the hydroxyl groups introduced for forming the meltable, pressure-sensitively adhesive, hydroxyl-functionalized polybutadiene-polyurethane prepolymer and originating from the at least one polybutadiene-polyol and/or polybutadiene-polyol derivative having a number-averaged average functionality of between greater than 2.0 and less than or equal to 3.0 is between greater than or equal to 0.0% and less than or equal to 50%, preferably between greater than or equal to 10.0% and less than or equal to 40%, more preferably between greater than or equal to 15.0% and less than or equal to 30%.

7. Thermally vulcanizable pressure-sensitive adhesive according to any of the preceding claims, **characterized in that** the aliphatic or alicyclic diisocyanate for preparing the polybutadiene-polyurethane prepolymer is or comprises isophorone diisocyanate and/or dicyclohexylmethane 4,4'-diisocyanate.

8. Thermally vulcanizable pressure-sensitive adhesive according to any of the preceding claims, **characterized in that** the aliphatic or alicyclic polyisocyanate for preparing the polybutadiene-polyurethane prepolymer and/or for reaction with the polybutadiene-polyurethane prepolymer is or comprises a trimerized or more highly oligomerized form of hexamethylene diisocyanate and/or of isophorone diisocyanate.

9. Thermally vulcanizable pressure-sensitive adhesive according to any of the preceding claims, **characterized in that** it is composed of the following fractions:

   | | |
   |---|---|
   | 30.0 — 55.0 wt% | of a chemically precrosslinked, pressure-sensitively adhesive polybutadiene-polyurethane, |
   | 0.1 - 15.0 wt% | of ground sulfur |
   | 0.1 - 10.0 wt% | of vulcanization accelerators |
   | 1.0 - 20.0 wt% | of an epoxy resin |
   | 5.0 - 30.0 wt% | of ground calcium oxide |
   | 10.0 - 50.0 wt% | of fillers selected from ground chalk, ground talc and/or ground kaolin, and |

   optionally ageing inhibitors, tackifier resins, bitumen, plasticizers, oils, and other auxiliaries and adjuvants.

**10.** Process for producing a thermally vulcanizable pressure-sensitive adhesive comprising a chemically precrosslinked, pressure-sensitively adhesive polybutadiene-polyurethane and ground sulfur, **characterized in that**

first a polybutadiene-polyurethane prepolymer is prepared by chemical reaction of one or more polybutadiene-polyols and/or derivatives thereof, optionally in the presence of other polyols and/or derivatives thereof, with one or more aliphatic and/or alicyclic polyisocyanates, the proportions of polyols and/or polyol derivatives and of polyisocyanates being selected such that the resulting prepolymer is hydroxy-functionalized, meltable and pressure-sensitively adhesive,
the polybutadiene-polyurethane prepolymer is admixed with ground sulfur,
the polybutadiene-polyurethane prepolymer is admixed in the melt with further aliphatic and/or alicyclic polyisocyanates having an isocyanate functionality of three or greater than three, and so a reaction - hereinafter called precrosslinking reaction - of the prepolymer with the polyisocyanates commences.

**11.** Process according to Claim 10, **characterized in that** the thermally vulcanizable pressure-sensitive adhesive is one according to any of Claims 1 to 9.

**12.** Process according to either of Claims 10 and 11, **characterized in that**
the chemical reaction for preparing the polybutadiene-polyurethane prepolymer takes place with addition of a catalyst, more particularly of a catalyst comprising bismuth and carbon, preferably of a bismuth carboxylate or a bismuth carboxylate derivative.

**13.** Process according to any of Claims 10 to 12, **characterized in that**
the ratio of the total number of isocyanate groups introduced in the preparation of the polybutadiene-polyurethane prepolymer and in the reaction thereof, in other words the precrosslinking reaction, to the total number of hydroxyl groups introduced is between greater than or equal to 0.5 and less than or equal to 1.3.

**14.** Process according to any of Claims 10 to 13, **characterized in that**
the ground sulfur, the further aliphatic and/or alicyclic polyisocyanates and optionally further adjuvants and/or additives are added to the prepolymer in a joint, continuous operation.

**15.** Process according to any of Claims 10 to 14, **characterized in that**
the blending of the prepolymer with the further aliphatic and/or alicyclic polyisocyanates, advantageously also with the ground sulfur and optionally with the further adjuvants and/or
additives, takes place in a solvent-free continuous compounding operation.

**16.** Process according to Claim 15, **characterized in that** the continuous compounding operation is followed directly by a continuous coating operation wherein the blended prepolymer is shaped to a layer, more particularly laid onto a carrier material.

**17.** Process according to any of Claims 14 to 16, **characterized in that**
the continuous compounding operation takes place in a continuous mixing assembly, more particularly in a planetary roller extruder, an annular extruder or a twin-screw extruder.

**18.** Process according to any of Claims 14 to 17, **characterized in that**
the temperature of the compound during compounding does not exceed 100°C, preferably 90°C, more preferably 80°C.

**Revendications**

**1.** Adhésif sensible à la pression, vulcanisable thermiquement, comprenant un polybutadiène-polyuréthane autoadhésif, pré-réticulé chimiquement et du soufre broyé,
**caractérisé en ce que**
le polybutadiène-polyuréthane autoadhésif, pré-réticulé chimiquement est ou comprend le produit de réaction chimique des substances de départ suivantes :

a) au moins un prépolymère polybutadiène-polyuréthane fusible, autoadhésif, à fonctionnalisation hydroxy et
b) au moins un polyisocyanate aliphatique ou alicyclique ayant une fonctionnalité isocyanate de trois ou plus de trois.

2. Adhésif sensible à la pression, vulcanisable thermiquement, selon l'une quelconque des revendications précédentes, **caractérisé en ce que**
le prépolymère polybutadiène-polyuréthane est le produit de réaction chimique d'un ou de plusieurs polybutadiène-polyols et/ou dérivés de ceux-ci avec un ou plusieurs polyisocyanates aliphatiques et/ou alicycliques.

3. Adhésif sensible à la pression, vulcanisable thermiquement, selon l'une quelconque des revendications précédentes, **caractérisé en ce que**
le prépolymère polybutadiène-polyuréthane est le produit de réaction chimique d'un ou de plusieurs polybutadiène-polyols et/ou dérivés de ceux-ci et d'un ou de plusieurs autres polyols et/ou dérivés de ceux-ci avec un ou plusieurs polyisocyanates aliphatiques et/ou alicycliques.

4. Adhésif sensible à la pression, vulcanisable thermiquement, selon l'une quelconque des revendications précédentes, **caractérisé en ce que**
le prépolymère polybutadiène-polyuréthane fusible, autoadhésif, à fonctionnalisation hydroxy est ou comprend le produit de réaction chimique

- d'au moins un polybutadiène-diol et/ou dérivé de polybutadiène-diol, ayant chacun une fonctionnalité moyenne, moyennée en nombre, comprise entre plus de 1,5 et moins de ou égal à 2,0,
- et/ou d'au moins un polybutadiène-diol et/ou dérivé de polybutadiène-diol, ayant chacun une fonctionnalité moyenne, moyennée en nombre, comprise entre plus de 2,0 et moins de ou égal à 3, 0,
- et d'au moins un extendeur de chaîne ayant une fonctionnalité hydroxy de deux et une masse molaire de moins de ou égal à 300 g/mole,

avec

- au moins un diisocyanate aliphatique ou alicyclique
- et/ou au moins un polyisocyanate aliphatique ou alicyclique ayant une fonctionnalité isocyanate de trois ou plus de trois.

5. Adhésif sensible à la pression, vulcanisable thermiquement, selon l'une quelconque des revendications précédentes, **caractérisé en ce que**
la proportion numérique des groupes hydroxy introduits pour la formation du prépolymère polybutadiène-polyuréthane fusible, autoadhésif, à fonctionnalisation hydroxy, qui proviennent dudit au moins un extendeur de chaîne, est comprise entre plus de ou égal à 20,0 % et moins de ou égal à 80,0 %, de préférence entre plus de ou égal à 30,0 % et moins de ou égal à 70 %.

6. Adhésif sensible à la pression, vulcanisable thermiquement, selon l'une quelconque des revendications précédentes, **caractérisé en ce que**
la proportion numérique des groupes hydroxy introduits pour la formation du prépolymère polybutadiène-polyuréthane fusible, autoadhésif, à fonctionnalisation hydroxy, qui proviennent dudit au moins un polybutadiène-diol ou dérivé de polybutadiène-diol, ayant une fonctionnalité moyenne, moyennée en nombre, comprise entre plus de 2,0 et moins de ou égal à 3,0, est comprise entre plus de ou égal à 0, 0 % et moins de ou égal à 50 %, de préférence entre plus de ou égal à 10,0 % et moins de ou égal à 40 %, de façon particulièrement préférée entre plus de ou égal à 15,0 % et moins de ou égal à 30 %.

7. Adhésif sensible à la pression, vulcanisable thermiquement, selon l'une quelconque des revendications précédentes, **caractérisé en ce que**
le diisocyanate aliphatique ou alicyclique destiné à la préparation du prépolymère polybutadiène-polyuréthane est ou comprend le diisocyanate d'isophorone et/ou le 4,4'-diisocyanate de dicyclohexylméthane.

8. Adhésif sensible à la pression, vulcanisable thermiquement, selon l'une quelconque des revendications précédentes, **caractérisé en ce que**
le polyisocyanate aliphatique ou alicyclique destiné à la préparation du prépolymère polybutadiène-polyuréthane ou à la réaction avec le prépolymère polybutadiène-polyuréthane est ou comprend une forme trimérisée ou à plus haut degré d'oligomérisation du diisocyanate d'hexaméthylène et/ou du diisocyanate d'isophorone.

9. Adhésif sensible à la pression, vulcanisable thermiquement, selon l'une quelconque des revendications précédentes, **caractérisé en ce qu'**il se compose des fractions suivantes, à raison de

| | |
|---|---|
| 30,0 - 55,0 % en poids | d'un polybutadiène-polyuréthane autoadhésif, pré-réticulé chimiquement, |
| 0,1 - 15,0 % en poids | de soufre broyé |
| 0,1 - 10,0 % en poids | d'accélérateurs de vulcanisation |
| 1,0 - 20,0 % en poids | d'une résine époxy |
| 5,0 - 30,0 % en poids | d'oxyde de calcium broyé |
| 10,0 - 50,0 % en poids | de charges, choisies parmi la craie broyée, le talc broyé et/ou le kaolin broyé et |

éventuellement d'agents de protection contre le vieillissement, de résines tackifiantes, de bitumes, de plastifiants, d'huiles ainsi que d'autres adjuvants et additifs.

10. Procédé pour la préparation d'un adhésif sensible à la pression, vulcanisable thermiquement, comprenant un polybutadiène-polyuréthane autoadhésif, pré-réticulé chimiquement et du soufre broyé, **caractérisé en ce que** d'abord on prépare un prépolymère polybutadiène-polyuréthane par réaction chimique d'un ou de plusieurs polybutadiène-polyols et/ou dérivés de ceux-ci, en option en présence d'autres polyols et/ou dérivés de ceux-ci, avec un ou plusieurs polyisocyanates aliphatiques et/ou alicycliques, les proportions de polyols ou dérivés de polyols et de polyisocyanates étant choisies de manière que le prépolymère résultant soit à fonctionnalisation hydroxy, fusible et autoadhésif,

on ajoute du soufre broyé au prépolymère polybutadiène-polyuréthane,
on ajoute au prépolymère polybutadiène-polyuréthane, dans la masse fondue, des polyisocyanates aliphatiques et/ou alicycliques supplémentaires ayant une fonctionnalité isocyanate de trois ou plus de trois, de sorte que démarre une réaction - dénommée ci-après réaction de pré-réticulation - du prépolymère avec les polyisocyanates.

11. Procédé selon la revendication 10, **caractérisé en ce que** l'adhésif sensible à la pression, vulcanisable thermiquement, est un tel adhésif selon l'une quelconque des revendications 1 à 9.

12. Procédé selon l'une quelconque des revendications 10 et 11, **caractérisé en ce que** la réaction chimique pour la préparation du prépolymère polybutadiène-polyuréthane s'effectue avec addition d'un catalyseur, en particulier d'un catalyseur contenant du bismuth et du carbone, de préférence d'un carboxylate de bismuth ou d'un dérivé de carboxylate de bismuth.

13. Procédé selon l'une quelconque des revendications 10 à 12, **caractérisé en ce que**
le rapport du nombre total des groupes isocyanate introduits dans la préparation du prépolymère polybutadiène-polyuréthane et dans la réaction de ce dernier, c'est-à-dire la réaction de pré-réticulation, au nombre total des groupes hydroxy introduits, est compris entre plus de ou égal à 0,5 et moins de ou égal à 1,3.

14. Procédé selon l'une quelconque des revendications 10 à 13, **caractérisé en ce que**
Le soufre broyé, les polyisocyanates aliphatiques et/ou alicycliques supplémentaires et éventuellement les autres adjuvants et/ou additifs sont ajoutés au prépolymère dans un processus commun, se déroulant en continu.

15. Procédé selon l'une quelconque des revendications 10 à 14, **caractérisé en ce que**
le mélange du prépolymère avec les polyisocyanates aliphatiques set/ou alicycliques supplémentaires s'effectue avantageusement également avec le soufre broyé et éventuellement avec les autres adjuvants et/ou additifs, dans un processus de compoundage continu, sans solvant.

16. Procédé selon la revendication 15, **caractérisé en ce que**
au processus de compoundage continu fait suite immédiatement un processus d'enduction continu, dans lequel le polymère mélangé est mis en forme de couche, en particulier appliqué sur un matériau de support.

17. Procédé selon l'une quelconque des revendications 14 à 16, **caractérisé en ce que**
Le processus de compoundage continu s'effectue dans un appareil de mélange fonctionnant en continu, en particulier dans une extrudeuse à cylindres planétaires, une extrudeuse à vis disposées en anneau ou une extrudeuse double vis.

**18.** Procédé selon l'une quelconque des revendications 14 à 17, **caractérisé en ce que** la température du mélange pendant le compoundage n'excède pas 100 °C, de préférence 90 °C, de façon particulièrement préférée 80 °C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 877069 A
- DE 3830895 A
- EP 0356715 A
- JP 59230076 A
- US 3743617 A
- US 3515773 A
- WO 1998030648 A
- EP 2119735 A
- EP 2325220 A1
- DE 1645358 A1
- EP 0009613 A1

**In der Beschreibung aufgeführte Nicht-Patentliteratur**

- **SATAS.** Handbook of Pressure Sensitive Adhesive Technology. 1999, 153-203
- *CHEMICAL ABSTRACTS,* 003077-13-2
- *CHEMICAL ABSTRACTS,* 144-19-4
- *CHEMICAL ABSTRACTS,* 115-84-4
- *CHEMICAL ABSTRACTS,* 94-96-2
- **HERBERT CHAO ; NAN TIAN.** Cray Valley. LLC, April 2010
- *CHEMICAL ABSTRACTS,* 4098-71-9
- *CHEMICAL ABSTRACTS,* 5124-30-1
- *CHEMICAL ABSTRACTS,* 34364-26-6
- **WERNER HOFFMANN ; HEINZ GUPTA.** Handbuch der Kautschuk-Technologie. 2001
- *CHEMICAL ABSTRACTS,* 25068-38-6
- *CHEMICAL ABSTRACTS,* 2386-87-0
- Ullmann's Encyclopedia of Industrial Chemistry. vol. 12, 271
- Encyclopedia of Polymer Science and Engineering. vol. 6, 345
- *CHEMICAL ABSTRACTS,* 9011-11-4
- *CHEMICAL ABSTRACTS,* 25719-60-2
- *CHEMICAL ABSTRACTS,* 6683-19-8
- **GAECHTER ; MÜLLER.** Taschenbuch der Kunststoff-Additive. 1979, vol. 23, 615-627
- Encycl. Polym. Sci. Technol. vol. 14, 125-148
- *CHEMICAL ABSTRACTS,* 120-78-5
- *CHEMICAL ABSTRACTS,* 10591-85-2
- *CHEMICAL ABSTRACTS,* 14726-36-4
- *CHEMICAL ABSTRACTS,* 7704-34-9
- *CHEMICAL ABSTRACTS,* 9035-99-8
- *CHEMICAL ABSTRACTS,* 14807-96-6